(19) Europäisches Patentamt / European Patent Office / Office européen des brevets

(11) **EP 4 357 017 A1**

(12) **EUROPEAN PATENT APPLICATION**
published in accordance with Art. 153(4) EPC

(43) Date of publication:
**24.04.2024 Bulletin 2024/17**

(21) Application number: **22825045.2**

(22) Date of filing: **15.06.2022**

(51) International Patent Classification (IPC):
*B01J 14/00* (2006.01)      *C08F 14/06* (2006.01)
*C08F 2/01* (2006.01)       *C08F 2/20* (2006.01)
*B01J 19/18* (2006.01)      *B01F 27/112* (2022.01)
*B01F 27/90* (2022.01)      *B01F 35/93* (2022.01)

(52) Cooperative Patent Classification (CPC):
**B01F 27/112; B01F 27/1125; B01F 27/191;
B01F 27/90; B01F 35/90; B01F 35/93; B01J 14/00;
B01J 19/18; C08F 2/01; C08F 2/20; C08F 14/06**

(86) International application number:
**PCT/JP2022/024034**

(87) International publication number:
**WO 2022/265057 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.06.2021   JP 2021100495
17.01.2022   JP 2022005369**

(71) Applicant: SHIN-ETSU CHEMICAL CO., LTD.
Tokyo 1000005 (JP)

(72) Inventors:
• **SAITO, Hiroaki**
  **Kamisu-shi, Ibaraki 314-0102 (JP)**
• **GOTO, Eisuke**
  **Kamisu-shi, Ibaraki 314-0102 (JP)**
• **HAMAGUCHI, Yasunori**
  **Kamisu-shi, Ibaraki 314-0102 (JP)**

(74) Representative: **Pfenning, Meinig & Partner mbB
Patent- und Rechtsanwälte
Joachimsthaler Straße 10-12
10719 Berlin (DE)**

(54) **REACTION APPARATUS, MANUFACTURING METHOD FOR VINYL POLYMER, AND METHOD FOR PRODUCING VINYL POLYMER**

(57)      A reactor apparatus of batch type used for producing a polymer by suspension polymerization using a dispersing aid includes: a reactor having a straight body having a tubular shape; a plurality of first cooling pipes arranged inside the reactor, for circulating a coolant; and an agitation shaft which is arranged inside the reactor, is attached with an agitating blade, and is configured to be rotatable. A representative point of each of the plurality of first cooling pipes in a plane substantially perpendicular to an extending direction of the straight body is located substantially on a circumference of any of a plurality of virtual circles arranged substantially concentrically in the substantially perpendicular plane. A number Nc [units] of the plurality of virtual circles and a proportion CZ [mg-dispersing aid/kg-monomer] of a mass of the dispersing aid to a mass of one or more types of monomers to be materials of the polymer satisfy a particular relationship.

FIG.2

Processed by Luminess, 75001 PARIS (FR)

**Description**

BACKGROUND

1. TECHNICAL FIELD

The present invention relates to a reactor apparatus, a vinyl-based polymer manufacturing method, and a method for producing a vinyl-based polymer.

2. RELATED ART

Patent document 1 discloses a polymerization apparatus including a baffle and a serpentine pipe that can circulate a coolant inside. Patent document 2 discloses a polymerization apparatus including a baffle and a coiled cooling pipe that can circulate a coolant inside. Patent document 3 discloses a resin synthesizing apparatus including a baffle that can circulate a heat carrier inside, and an agitating means including a helical ribbon wing and an anker wing.

PRIOR ART DOCUMENTS

PATENT DOCUMENTS

Patent document 1: Japanese Patent Application Publication No. H7-233202

Patent document 2: Japanese Patent Application Publication No. H7-233206

Patent document 3: Japanese Patent Application Publication No. 2013-151621

GENERAL DISCLOSURE

A first aspect of the present invention provides a reactor apparatus. The above-described reactor apparatus is used for producing a polymer by suspension polymerization using a dispersing aid, for example. The above-described reactor apparatus is a reactor apparatus of batch type, for example. The above-described reactor apparatus includes a reactor having a straight body having a tubular shape, for example. The above-described reactor apparatus includes a plurality of first cooling pipes arranged inside the reactor, for circulating a coolant, for example. The above-described reactor apparatus includes an agitation shaft which is arranged inside the reactor, is attached with an agitating blade, and is configured to be rotatable, for example.

In the above-described reactor apparatus, a representative point of each of the plurality of first cooling pipes in a plane substantially perpendicular to an extending direction of the straight body is located substantially on a circumference of any of a plurality of virtual circles arranged substantially concentrically in the substantially perpendicular plane, for example. In the above-described reactor apparatus, when a number $N_c$ [units] of the plurality of virtual circles is 1, 2, or 3, the number $N_c$ [units] of the plurality of virtual circles and a proportion $C_Z$ [mg-dispersing aid/kg-monomer] of a mass of the dispersing aid to a mass of one or more types of monomers to be materials of the polymer satisfy a relationship represented by following Expression A1, for example.

(Expression A1)

$$15 N_c + 300 < C_Z < 175 N_c + 2000$$

In any reactor apparatus described above, when the number $N_c$ of the plurality of virtual circles is 4 or more, the proportion $C_Z$ [mg-dispersing aid/kg-monomer] may satisfy a relationship represented by following Expression A2.

(Expression A2)

$$15 \times 3 + 300 < C_Z < 175 \times 3 + 2000$$

In any reactor apparatus described above, when the number Nc [units] of the plurality of virtual circles is 1, 2, or 3, the number Nc [units] and the proportion CZ [mg-dispersing aid/kg-monomer] may satisfy a relationship represented by following Expression B1.

(Expression B1)

$$15 \text{ Nc} + 310 < CZ < 175 \text{ Nc} + 1550$$

In any reactor apparatus described above, when the number Nc [units] of the plurality of virtual circles is 1, 2, or 3, the number Nc [units] and the proportion CZ [mg-dispersing aid/kg-monomer] may satisfy a relationship represented by following Expression C1.

(Expression C1)

$$15 \text{ Nc} + 400 < CZ < 175 \text{ Nc} + 1850$$

In any reactor apparatus described above, when the number Nc [units] of the plurality of virtual circles is 1, 2, or 3, the number Nc [units] and the proportion CZ [mg-dispersing aid/kg-monomer] may satisfy a relationship represented by following Expression D1.

(Expression D1)

$$15 \text{ Nc} + 400 < CZ < 175 \text{ Nc} + 1550$$

Any reactor apparatus described above may include a dispersing aid input unit which inputs the dispersing aid into the reactor. In any reactor apparatus described above, when the number Nc [units] of the plurality of virtual circles is 1, 2, or 3, the dispersing aid input unit may input the dispersing aid so that the number Nc [units] and the proportion CZ [mg-dispersing aid/kg-monomer] satisfy the relationship represented by the above-described Expression A1, B1, C1, or D1.

A second aspect of the present invention provides a reactor apparatus. The above-described reactor apparatus is used for producing a polymer by suspension polymerization using a dispersing aid, for example. The above-described reactor apparatus is a reactor apparatus of batch type, for example. The above-described reactor apparatus includes a reactor having a straight body having a tubular shape, for example. The above-described reactor apparatus includes a plurality of first cooling pipes arranged inside the reactor, for circulating a coolant, for example. The above-described reactor apparatus includes an agitation shaft which is arranged inside the reactor, is attached with one or more agitating blades, and configured to be rotatable, for example. The above-described reactor apparatus includes a dispersing aid input unit which inputs the dispersing aid into the reactor, for example.

In the above-described reactor apparatus, a representative point of each of the plurality of first cooling pipes in a plane substantially perpendicular to an extending direction of the straight body is located substantially on a circumference of any of a plurality of virtual circles arranged substantially concentrically in the substantially perpendicular plane, for example. In the above-described reactor apparatus, when a number Nc [units] of the plurality of virtual circles is 1, 2, or 3, the dispersing aid input unit inputs the dispersing aid so that the number Nc [units] of the plurality of virtual circles and a proportion CZ [mg-dispersing aid/kg-monomer] of a mass of the dispersing aid to a mass of one or more types of monomers to be materials of the polymer satisfy a relationship represented by following Expression A1, for example.

(Expression A1)

$$15 \text{ Nc} + 300 < CZ < 175 \text{ Nc} + 2000$$

In any reactor apparatus described above according to the first or second aspect, the agitation shaft may be configured such that a plurality of agitating blades including the agitating blade are able to be attached to different positions in an extending direction of the agitation shaft. In any reactor apparatus described above, dimensions of the straight body, dimensions of at least one of the plurality of agitating blades, and a set value of a number of rotations of the agitation shaft may satisfy a relationship represented by following Expression 1.

(Expression 1)

$$N(b/d)(L/D)/n \leq 6.0$$

In Expression 1, N represents a number of the plurality of agitating blades, b represents a maximum value [m] of blade widths of the plurality of agitating blades, d represents a maximum value [m] of blade diameters of the plurality of agitating blades, L represents a length [m] of the straight body in an extending direction, when the straight body is cut along a plurality of planes substantially perpendicular to the extending direction of the straight body and passing through respective attachment positions of the plurality of agitating blades, D represents a maximum value [m] of diameters of a plurality of inscribed circles substantially inscribed in the straight body in respective cross sections taken along the plurality of planes, and n represents the set value of the number of rotations [rps] of the agitation shaft.).

In any reactor apparatus described above, each of the plurality of first cooling pipes may have a serpentine portion that extends while repeatedly bending. In any reactor apparatus described above, the serpentine portion may include a plurality of extending portions that extend linearly or extend while curving. In any reactor apparatus described above, the serpentine portion may include a plurality of bending portions which couple ends of two adjacent extending portions, among the plurality of extending portions.

In any reactor apparatus described above, each of the plurality of first cooling pipes may include a plurality of ring portions having a ring shape. In any reactor apparatus described above, each of the plurality of first cooling pipes may include one or more coupling portions which couple the plurality of ring portions.

Any reactor apparatus described above may include a plurality of baffles which extend substantially parallel to the extending direction of the straight body. Any reactor apparatus described above may include a second cooling pipe which is arranged inside at least one of the plurality of baffles, for circulating a coolant.

A third aspect of the present invention provides a vinyl-based polymer manufacturing method. The above-described vinyl-based polymer manufacturing method includes polymerizing a vinyl-based monomer by using any reactor apparatus according to the above-described first or second aspect, to produce a vinyl-based polymer, for example.

A fourth aspect of the present invention provides a method for producing a vinyl-based polymer. The above-described method is a method for producing a vinyl-based polymer by a suspension polymerization method by using a reactor apparatus of batch type, for example.

In the above-described method, the reactor apparatus includes a reactor having a straight body having a tubular shape, for example. In the above-described method, the reactor apparatus includes a plurality of first cooling pipes arranged inside the reactor, for circulating a coolant, for example. In the above-described method, the reactor apparatus includes an agitation shaft which is arranged inside the reactor, is attached with an agitating blade, and is configured to be rotatable, for example. In the above-described method, a representative point of each of the plurality of first cooling pipes in a plane substantially perpendicular to an extending direction of the straight body is located substantially on a circumference of any of a plurality of virtual circles arranged substantially concentrically in the substantially perpendicular plane, for example.

The above-described method includes inputting a material by inputting a vinyl-based monomer, an aqueous media, and a dispersing aid into the reactor, for example. The above-described method includes polymerizing the vinyl-based monomer to produce a vinyl-based polymer, for example. In the above-described method, the inputting the material includes inputting the dispersing aid such that when a number $N_c$ [units] of the plurality of virtual circles is 1, 2, or 3, the number $N_c$ [units] of the plurality of virtual circles and a proportion CZ [mg-dispersing aid/kg-monomer] of a mass of the dispersing aid to a mass of the vinyl-based monomer satisfy a relationship represented by following Expression A1, for example.

(Expression A1)

$$15 N_c + 300 < CZ < 175 N_c + 2000$$

In the above-described method, the inputting the material may include inputting the dispersing aid such that when a number $N_c$ [units] of the plurality of virtual circles is 1, 2, or 3, the number $N_c$ and a proportion CZ satisfy a relationship represented by following Expression B1, C1, or D1.

(Expression B1)

$$15 Nc + 310 < CZ < 175 Nc + 1550$$

(Expression C1)

$$15 Nc + 400 < CZ < 175 Nc + 1850$$

(Expression D1)

$$15 Nc + 400 < CZ < 175 Nc + 1550$$

In the above-described method, the inputting the material may include inputting the dispersing aid such that when a number Nc of the plurality of virtual circles is 4 or more, a proportion CZ [mg-dispersing aid/kg-monomer] satisfies a relationship represented by following Expression A2.

(Expression A2)

$$15x3 + 300 < CZ < 175x3 + 2000$$

The summary clause does not necessarily describe all necessary features of the embodiments of the present invention. The present invention may also be a sub-combination of the features described above.

BRIEF DESCRIPTION OF THE DRAWINGS

FIG. 1 shows a schematic cross-sectional view of an example of a polymerization apparatus 100.

FIG. 2 schematically shows an example of internal structures arranged inside a reaction vessel 110.

FIG. 3 shows a schematic cross-sectional view of an example of the reaction vessel 110.

FIG. 4 shows a schematic plan view of an example of the reaction vessel 110.

FIG. 5 schematically shows an example of internal structure of a baffle 232.

FIG. 6 schematically shows an example of structure of a serpentine cooling pipe 252.

FIG. 7 schematically shows another example of structure of the serpentine cooling pipe 252.

FIG. 8 schematically shows another example of structure of the serpentine cooling pipe 252.

FIG. 9 schematically shows an example of a main part of a polymerization apparatus 900.

FIG. 10 schematically shows an example of a main part of a polymerization apparatus 1000.

FIG. 11 schematically shows an example of a main part of a polymerization apparatus 1100.

FIG. 12 schematically shows an example of a main part of a polymerization apparatus 1200.

FIG. 13 schematically shows an example of a main part of a polymerization apparatus 1300.

FIG. 14 schematically shows an example of a main part of a polymerization apparatus 1400.

FIG. 15 schematically shows an example of a main part of a polymerization apparatus 1500.

FIG. 16 schematically shows an example of a main part of a polymerization apparatus 1600.

FIG. 17 schematically shows an example of a main part of a polymerization system 1700.

FIG. 18 schematically shows an example of an attachment position of an agitating blade in an agitation shaft 122.

FIG. 19 schematically shows an example of a system configuration of a polymerization system 1900.

DESCRIPTION OF EXEMPLARY EMBODIMENTS

Hereinafter, the present invention will be described through embodiments of the invention, but the following embodiments do not limit the invention according to the scope of the claims. In addition, not all of the combinations of features described in the embodiments are imperative to the solving means of the invention. In the present embodiments, when a numeric range is written as "A to B", said writing means A or more and B or less.

According to the present embodiment, an example of a procedure for controlling or deciding a number of rotations of an agitation shaft in a reactor apparatus including a reactor having a straight body having a tubular shape, the agitation shaft, and a plurality of agitating blades is described. In one embodiment of the procedure for controlling or deciding the number of rotations of the agitation shaft, a procedure unique to a case where a plurality of cooling pipes are arranged in multiple layers in a radial direction of an inscribed circle of a straight body inside a reactor is described.

According to the present embodiment, an example of a procedure for using a reactor apparatus including a reactor having a straight body having a tubular shape and an agitation shaft to which one or more agitating blades are attached and producing a polymer by suspension polymerization using a dispersing aid is described. In an example of the procedure for producing the polymer by suspension polymerization using the dispersing aid, a procedure unique to a case where a plurality of cooling pipes (may be referred to as a cooling pipe) are arranged in multiple layers in a radial direction of an inscribed circle of a straight body inside a reactor is described.

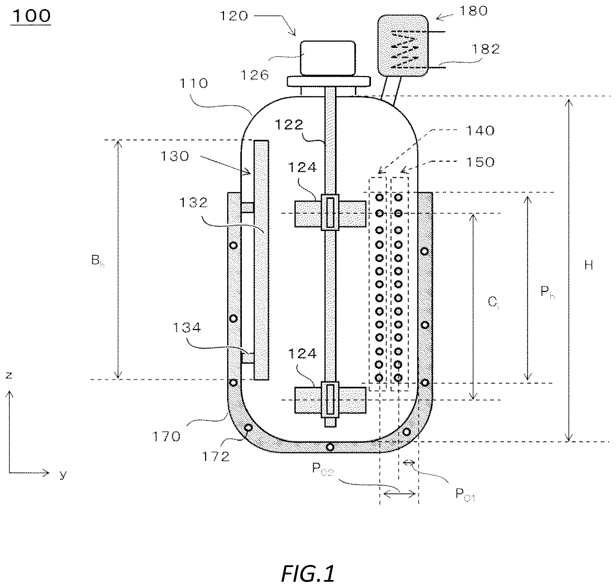

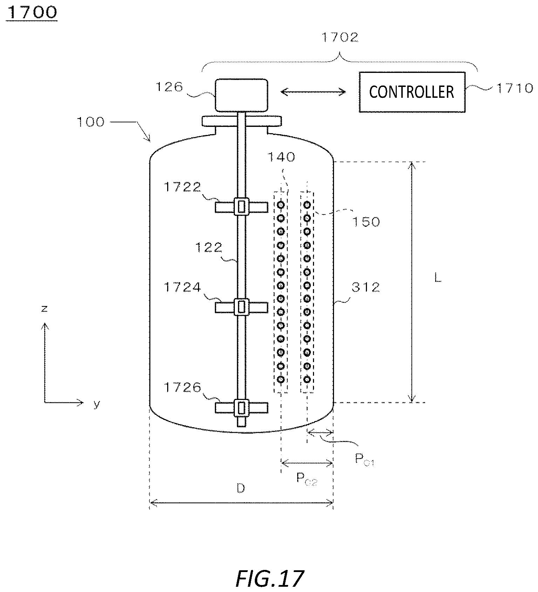

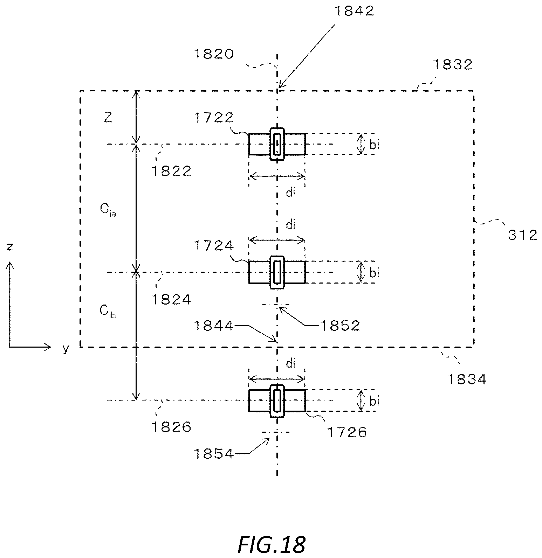

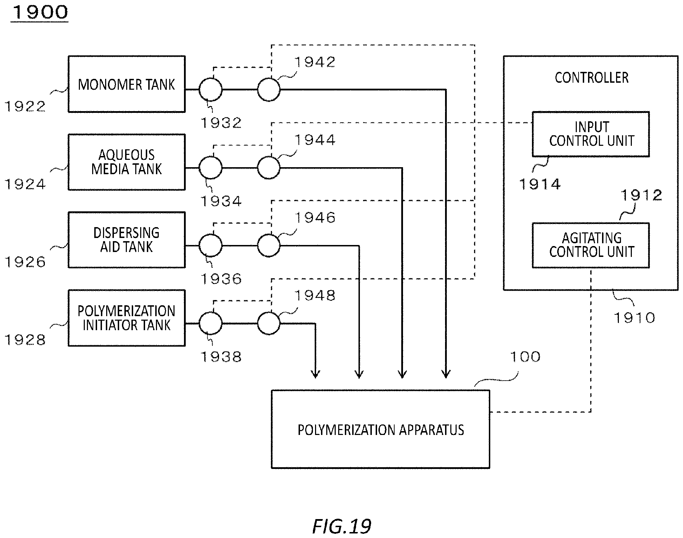

First, a structure of the reactor apparatus according to the above-described embodiment is described by using FIGS. 1 to 16. In addition, details of a procedure for controlling or deciding the number of rotations of the agitation shaft is described by using FIG. 17. Further, an example of attachment positions of a plurality of agitating blades on the agitation shaft is described by using FIG. 18. An example of the procedure for producing the polymer by suspension polymerization using the dispersing aid is described by using FIG. 19.

(Overview of polymerization apparatus 100)

An example of a polymerization apparatus 100 is described in detail by using FIG. 1, FIG. 2, FIG. 3, and FIG. 4. The polymerization apparatus 100 is used, for example, for manufacturing of a polymer. The polymerization apparatus 100 may be used for application of suspension polymerization.

More specifically, the polymerization apparatus 100 is used for manufacturing of a vinyl-based polymer. As a manufacturing method for the vinyl-based polymer, a method having a step for polymerizing a vinyl-based monomer by using the polymerization apparatus 100 to produce a vinyl-based polymer is exemplified. The above-described manufacturing method for the vinyl-based polymer includes, for example, a step for storing raw material, including a vinyl-based monomer, in a reactor arranged in the polymerization apparatus 100. The above-described manufacturing method for the vinyl-based polymer includes, for example, a step for starting a polymerization reaction of the above-described vinyl-based monomer and producing a vinyl-based polymer.

FIG. 1 shows a schematic cross-sectional view of an example of the polymerization apparatus 100. In the present embodiment, the polymerization apparatus 100 includes a reaction vessel 110, an agitator 120, one or a plurality of (may be referred to simply as one or more) baffles 130, one or more serpentine cooling pipes 140, one or more serpentine cooling pipes 150, a jacket 170, and a reflux condenser 180. In the present embodiment, the agitator 120 includes an agitation shaft 122, an agitating blade 124, and a power mechanism 126. In the present embodiment, the baffle 130 includes a body 132 and one or more supports 134. In the present embodiment, the jacket 170 includes a flow channel 172 for a heat carrier. In the present embodiment, the reflux condenser 180 includes a flow channel 182 for a heat carrier.

In the present embodiment, the agitation shaft 122 and the agitating blade 124 are arranged inside the reaction vessel 110. In the present embodiment, each of the one or more baffles 130 is arranged inside the reaction vessel 110. In the present embodiment, each of the one or more serpentine cooling pipes 140 is arranged inside the reaction vessel 110. In the present embodiment, each of the one or more serpentine cooling pipes 150 is arranged inside the reaction vessel 110.

In the present embodiment, the power mechanism 126 is arranged outside the reaction vessel 110. In the present embodiment, the jacket 170 is arranged outside the reaction vessel 110. In the present embodiment, the reflux condenser 180 is arranged outside the reaction vessel 110.

In the present embodiment, the serpentine cooling pipe 140 and the serpentine cooling pipe 150 are arranged so that their distances from an inner surface of the reaction vessel 110 are different. Specifically, the serpentine cooling pipe 150 is arranged at a position closer to a side surface of the reaction vessel 110 than the serpentine cooling pipe 140. In this case, a distance $P_{C2}$ from the serpentine cooling pipe 140 to the side surface of the reaction vessel 110 is greater than a distance $P_{C1}$ from the serpentine cooling pipe 150 and the side surface of the reaction vessel 110.

The distance $P_{C2}$ from the serpentine cooling pipe 140 to the side surface of the reaction vessel 110 may be a minimum value of a distance from a center of a cross section of the serpentine cooling pipe 140 to the side surface of the reaction vessel 110. The distance $P_{C1}$ from the serpentine cooling pipe 150 to the side surface of the reaction vessel 110 may be a minimum value of a distance from a center of the cross section of the serpentine cooling pipe 150 to the side surface of the reaction vessel 110. For example, when the serpentine cooling pipe 140 or the serpentine cooling pipe 150 is a circular pipe, the cross section of the serpentine cooling pipe 140 or the serpentine cooling pipe 150 is circular, and the center of the cross section of the serpentine cooling pipe 140 or the serpentine cooling pipe 150 is the center of said circle.

Thus, according to the present embodiment, heat inside the reaction vessel 110 can be removed efficiently. For example, when the polymerization apparatus 100 is used for manufacturing of a polymer, the polymerization apparatus 100 can efficiently remove heat of reaction generated in a polymerization reaction.

In particular, in suspension polymerization of a monomer mixture mainly composed of a vinyl chloride-based monomer or a vinyl chloride-based chemical compound (together both may be referred to as a vinyl chloride-based monomer.), when internal structures such as a cooling coil or a draft tube or the like is arranged inside the reaction vessel 110, a power requirement of the agitator 120 increases. Shape, size, and installation position of the above-described internal structures affect mixing performance of the polymerization apparatus 100. Therefore, depending on the internal structures, a portion of slow flow can be generated inside the reaction vessel 110. When the portion of slow flow is generated inside the reaction vessel 110, temperature inside the reaction vessel 110 becomes nonuniform. As a result, particle size and/or degree of polymerization of the produced polymer tends to be nonuniform, and polymer scale tends to adhere to an inner wall or surfaces of the internal structures of the reaction vessel 110. The above-described scale can cause a fish eye that impairs quality of a molded product using a polymer.

In conditions under which heat removal efficiency is the same, size increase of the reaction vessel 110 and shortening of reaction time are in a tradeoff relationship. Therefore, in order to increase the size of the reaction vessel 110 while shortening the reaction time, it is desirable to increase the heat removal efficiency of the polymerization apparatus 100.

As a method for increasing the heat removal efficiency of the polymerization apparatus 100, decreasing temperature of a coolant can be conceived. However, when the temperature of the coolant is decreased, manufacturing cost of a polymer increases. As another method for increasing the heat removal efficiency of the polymerization apparatus 100, increasing heat removal amount by the jacket 170 or the reflux condenser 180 can be conceived. In particular, in a large-sized polymerization vessel of $40\,m^3$ or more, since the heat removal amount by the jacket 170 alone is insufficient, greatly increasing the heat removal amount by the reflux condenser 180 can be conceived. However, when heat removal load of the reflux condenser 180 is increased, foaming amount of a polymer slurry inside the reaction vessel 110 can increase. When the foaming amount of the polymer slurry increases, heat removal capacity of the reflux condenser 180 may decrease, and polymer scale may adhere inside the reflux condenser 180.

For example, when a polymerization vessel capacity is increased in size by using the polymerization apparatus described in Patent document 1, if a conduction area of a serpentine pipe is insufficient, there is a chance that shortening reaction time while maintaining product quality becomes difficult. On the other hand, in the polymerization apparatus described in Patent document 2, conduction area can be increased by a relatively simple structure. However, due to the structure of the apparatus, a baffle and a coiled cooling pipe cannot be arranged on substantially the same circumference. Therefore, a proportion of a region where the coiled cooling pipe can be installed in relation to a capacity of the apparatus is relatively small. When a polymerization vessel capacity is increased in size by using the polymerization apparatus described in Patent document 2, if a distance between coiled cooling pipes is decreased to increase conduction area, there is a chance that mixing performance of the polymerization apparatus decreases. In addition, when scale or a lump of reactant is generated on a surface of the coiled cooling pipe due to disturbances or the like, it is difficult to sufficiently remove the above-described scale or the like because working inside the can becomes complicated.

Meanwhile, according to the polymerization apparatus 100 according to the present embodiment, the serpentine cooling pipe 140 and the serpentine cooling pipe 150 are arranged so that their distances from the inner surface of the reaction vessel 110 are different. Thus, conduction area can be increased by using a relatively simple structure having a small effect on mixing performance of the polymerization apparatus 100. According to the polymerization apparatus 100 according to the present embodiment, degree of freedom relating to installation positions of the serpentine cooling pipe 140 and the serpentine cooling pipe 150 is high. For example, at least one of the one or more serpentine cooling pipes 140 or the one or more serpentine cooling pipes 150, and the baffle 130 can be arranged on substantially the same circumference. Thus, the conduction area of the entire apparatus can be increased while making the effect on the mixing performance of the polymerization apparatus 100 by the serpentine cooling pipe 150 smaller.

(Overview of each unit of the polymerization apparatus 100)

In the present embodiment, the reaction vessel 110 stores material of a synthesizing reaction. When the polymerization apparatus 100 is used for manufacturing of a polymer, for example, polymerization is started after a polymerizable monomer, a polymerization initiator, an aqueous media, a dispersing aid or the like is prepared inside the reaction vessel 110. For example, any surfactant can be used as the dispersing aid.

For example, the reaction vessel 110 has a tubular shape. The reaction vessel 110 may have a cylindrical shape, and may have a rectangular tubular shape. For example, the reaction vessel 110 is installed so that an extending direction of the reaction vessel 110 (z direction in the figure.) is a vertical direction. The reaction vessel 110 includes, for example, a straight body and a mirror portion. In the figure, the entire length of the reaction vessel 110 in the extending direction is written as H.

As a shape of a cross section (may be referred to as a transverse section) of the reaction vessel 110 cut along a surface perpendicular to the extending direction of the reaction vessel 110 (x-y plane in the figure.), a circular, oval, or polygonal shape or the like is exemplified. The shape of the transverse section of the reaction vessel 110 may be a shape that can be considered substantially as a circular, oval, or polygonal shape.

An internal capacity of the reaction vessel 110 is not limited in particular, but the internal capacity of the reaction vessel 110 is, for example, 1 to 300 $m^3$. A lower limit value of the internal capacity of the reaction vessel 110 may be 40 $m^3$, may be 80 $m^3$, may be 100 $m^3$, may be 120 $m^3$, may be 130 $m^3$, may be 150 $m^3$, may be 200 $m^3$, and may be 250 $m^3$. An upper limit value of the internal capacity of the reaction vessel 110 may be 300 $m^3$ or more. The upper limit value of the internal capacity of the reaction vessel 110 may be 350 $m^3$, and may be 400 $m^3$. The greater the internal capacity of the reaction vessel 110, improvement of cooling power according to the present embodiment can be done more advantageously.

The internal capacity of the reaction vessel 110 is defined as a capacity when the reaction vessel 110 stores liquid up to a predetermined upper limit position of the reaction vessel 110. The internal capacity of the reaction vessel 110 is, for example, a volume inside the reaction vessel 110 when internal structures such as an agitating shaft, wings, baffle, coil or the like are not arranged inside the reaction vessel 110.

As described above, size increase of the reaction vessel 110 and shortening of reaction time are in a tradeoff relationship. When the internal capacity of the reaction vessel 110 becomes 40 $m^3$ or more, heat removal efficiency of the polymerization apparatus 100 tends to be insufficient, and it is difficult to shorten the reaction time while increasing the size of the reaction vessel 110. In particular, when the internal capacity of the reaction vessel 110 is 80 $m^3$ or more, an effect of the polymerization apparatus 100 according to the present embodiment is more pronounced. Detail of the reaction vessel 110 is described below.

In the present embodiment, the agitator 120 agitates liquid stored inside the reaction vessel 110. In the present embodiment, the agitation shaft 122 holds the agitating blade 124 and rotates the agitating blade 124. In the present embodiment, the agitating blade 124 is attached to the agitation shaft 122 and agitates liquid stored inside the reaction vessel 110.

A shape of the agitating blade 124 is not limited in particular, but a Pfaudler blade, blue margin blade, paddle blade, inclined paddle blade, turbine blade, propeller blade, and combinations thereof are exemplified as the shape of the agitating blade 124. Thus, by rotation of the agitation shaft 122, a discharge flow from the agitation shaft 122 is generated radially toward an outer circumference. A quantity of blades that the agitating blade 124 includes is not limited in particular, but 2 to 6 blades are exemplified as the quantity of the above-described blades. An installation position and installation number of the agitating blade 124 are not limited in particular, but the agitating blade 124 is preferably installed in multiple layers. As a number of layers of the agitating blade 124, 2 to 6 layers are exemplified.

In the present embodiment, the power mechanism 126 rotates the agitation shaft 122. For example, the power mechanism 126 includes a power portion (not shown.) that generates power and a power transmission portion (not shown.) that transmits power generated by the power portion to the agitation shaft 122. As the power portion, an electric motor is exemplified. As the power transmission portion, a reduction gear is exemplified.

A number of rotations of the agitation shaft 122, as well as the shape, the size, the quantity of blades, the installation position, the installation number, and an installation interval $C_i$ of the agitating blade 124 are decided appropriately according to an application of the polymerization apparatus 100. The number of rotations of the agitation shaft 122, as well as the shape, the size, the quantity of blades, the installation position, the installation number, and the

installation interval $C_i$ of the agitating blade 124 are, for example, decided in consideration of the internal capacity of the reaction vessel 110, the shape of the reaction vessel 110, the internal structures arranged inside the reaction vessel 110, a configuration of the heat removal means, heat removal capacity, and composition of raw material prepared for polymerization.

For example, when the polymerization apparatus 100 is used for application of suspension polymerization, the number of rotations of the agitation shaft 122 is decided so that agitation energy applied to content (aqueous suspension mixture in this case.) is 80 to 200 kgf·m/s·m³. The "agitation energy" applied to the content is defined as net energy required for agitating per unit amount (may be referred to as unit internal capacity.) of the content that is obtained by subtracting various types of energy loss B such as motor efficiency, conduction loss, mechanical loss or the like from energy A that is loaded on an agitator drive motor arranged in the power mechanism 126, during operation of the polymerization apparatus 100. As the above-described unit amount, unit mass, unit volume or the like are exemplified. For example, if a volume of the content is C, the agitation energy is calculated by the following Expression E.

(Expression E)

$$(A-B)/C \ [kgf \cdot m/s \cdot m^3]$$

The energy loaded on the agitator drive motor, for example, can be measured electrically by using a measurement device such as a watt meter or the like. The agitation energy can be adjusted easily by changing the number of rotations of the agitation shaft 122.

The number of rotations of the agitation shaft 122 is set to, for example, 10 to 1000 [rpm]. The above-described set value can be suitably adopted, for example, when the polymerization apparatus 100 is used for application of suspension polymerization. As an approach of deciding the number of rotations of the agitation shaft 122 so that the agitation energy falls within the above-described numerical range, (i) an approach by a scale-up test, (ii) an approach using a relational expression such as an experimental expression or an empirical expression, or the like are exemplified.

In one embodiment, the number of rotations of the agitation shaft 122 in the polymerization apparatus 100, for example, is decided based on a polymerization test performed in advance in a pilot plant. Generally, scale-up from the pilot plant to the polymerization apparatus 100 is performed so that an agitation state of the polymerization apparatus 100 and an agitation state of the pilot plant are substantially identical. For example, in the pilot plant and the polymerization apparatus 100, a shape, size, and arrangement of each internal structure is decided so that the shape and size of the reaction vessel 110, and the shape, size, and arrangement of the internal structures such as the agitating blade 124, the baffle 130, the serpentine cooling pipe 140, the serpentine cooling pipe 150 or the like are similar.

According to one embodiment, the number of rotations of the agitation shaft 122 in the polymerization apparatus 100 can be decided so that the agitation energy in the polymerization apparatus 100 and the agitation energy in the pilot plant are substantially the same. As described above, the agitation energy is, for example, calculated as "(A-B)/C". As an approach for deciding the number of rotations of the agitation shaft 122 based on the agitation energy, any well-known approach can be adopted.

The number of rotations of the agitation shaft 122 in the pilot plant is, for example, decided by the following procedure. For example, a relationship between the number of rotations of the agitation shaft 122 in the pilot plant and quality of a polymer is obtained by a polymerization test using the pilot plant. Thus, the number of rotations of the agitation shaft 122 with which a polymer of desired quality can be obtained is decided. The above-described quality is not limited in particular, but as the above-described quality, for example, particle size is exemplified.

Specifically, in the polymerization test using the pilot plant, a polymerization temperature is set according to a desired reduced viscosity of the polymer (may be referred to as K-value.). The polymerization temperature and an average degree of polymerization of a polymer are correlated, and the K-value of the polymer is used widely as an indicator expressing the average degree of polymerization of the polymer.

In the polymerization test using the pilot plant, a polymerization time is decided according to heat removal capacity of the pilot plant. For example, the polymerization time is decided according to (i) preparation amount of a monomer that is a starting material, (ii) input amount of a polymerization initiator, and (iii) the heat removal capacity of the pilot plant, so that a calorific value of a reaction does not exceed the heat removal capacity of the pilot plant.

In this manner, when the polymerization time is set so that the pilot plant has sufficient heat removal capacity, a polymer having a desired average degree of polymerization can be generated by setting the polymerization temperature according to a target K-value. For example, a polymerization test is performed for each of a plurality of conditions in which the polymerization temperature and the polymerization time is the same, and the number of rotations of the agitation shaft 122 is different.

Based on a plurality of test results in which the number of rotations of the agitation shaft 122 is different, the relationship between the number of rotations of the agitation shaft 122 in the pilot plant and the quality of the polymer is obtained. Thus, when a target value of the quality of the polymer is decided, the number of rotations of the agitation shaft 122 by which a polymer of the desired quality can be decided.

When the polymerization time is set so that the pilot plant has sufficient heat removal capacity, a polymer having the desired average degree of polymerization can be generated by setting the polymerization temperature according to the target K-value. On the other hand, when the heat removal capacity of the pilot plant in relation to the set polymerization time is poor, the polymerization temperature rises due to heat generation by a polymerization reaction. As described above, a correlation exists between the polymerization temperature and the average degree of polymerization of the generated polymer. Therefore, when the polymerization temperature rises, the error between the K-value of the generated polymer and the target K-value increases. Depending on how the polymerization temperature rises, control of the reaction can become impossible.

In this manner, the K-value of the generated polymer can be adopted as an indicator that relates to heat removal capacity of the polymerization apparatus 100. For example, when a polymer is generated by using the polymerization apparatus 100, when a target K-value for a set polymerization time is obtained, the polymerization apparatus 100 can be determined to have sufficient heat removal capacity.

As described above, scale-up from the pilot plant to the polymerization apparatus 100 can be performed so that the agitation state of the polymerization apparatus 100 and the agitation state of the pilot plant are substantially identical. For example, when a ratio of size of each internal structure arranged inside the reaction vessel 110 in relation to an inner diameter and/or straight body height of the reaction vessel 110 in a desired polymerization apparatus 100, and a ratio of the size of each internal structure in the pilot plant in relation to an inner diameter and/or straight body height of the reaction vessel of the pilot plant are substantially identical, when the agitation energy in the polymerization apparatus 100 and the agitation energy in the pilot plant are substantially the same, the agitation state of the scaled up polymerization apparatus 100 and the agitation state of the pilot plant are substantially identical.

For example, a size of the baffle 130 in the desired polymerization apparatus 100 is decided so that ratios of a length of the baffle 130 in its extending direction (up and down direction in the figure) in relation to the straight body height of the reaction vessel 110 between the pilot plant and the desired polymerization apparatus 100 are substantially the same. The size of the baffle 130 in the desired polymerization apparatus 100 is decided so that the ratios of a length of the baffle 130 in a direction that is substantially perpendicular to its extending direction (left and right directions in the figure) in relation to a diameter inside the reaction vessel 110 (may be referred to as inner diameter.) between the pilot plant and the desired polymerization apparatus 100 are substantially the same. The number of the baffle 130 and its arrangement in the desired polymerization apparatus 100 are decided so that the number of the baffle 130 and its arrangement are substantially the same between the pilot plant and the desired polymerization apparatus 100. It is similar for another structure (for example, the agitating blade 124, the serpentine cooling pipe 140, the serpentine cooling pipe 150 or the like.).

As described above, when the target value of the quality of the polymer in the scaled up polymerization apparatus 100 is decided, the number of rotations of the agitation shaft 122 in the scaled up polymerization apparatus 100 can be decided based on the relationship between the number of rotations of the agitation shaft 122 in the pilot plant and the quality of the polymer described above. Specifically, first, the number of rotations of the agitation shaft 122 in the pilot plant is decided based on (i) the target value of the quality of the polymer in the polymerization apparatus 100, and (ii) the relationship between the number of rotations of the agitation shaft 122 in the pilot plant and the quality of the polymer. Then, the number of rotations of the agitation shaft 122 in the polymerization apparatus 100 is decided so that the agitation energy in the polymerization apparatus 100 and the agitation energy in the pilot plant are substantially the same.

Thus, the number of rotations of the agitation shaft 122 of the desired polymerization apparatus 100 can be decided in consideration of (i) the shape, size, quantity of blades, installation position, installation number, and installation interval $C_i$ of the agitating blade 124, as well as (ii) the internal capacity of the reaction vessel 110, the shape of the reaction vessel 110, and the internal structures or the like arranged inside the reaction vessel 110 of the desired polymerization apparatus 100, without strictly measuring the above-described agitation energy per unit internal capacity (kgf·m/s·m$^3$). The number of rotations of the agitation shaft 122 in the desired polymerization apparatus 100 may be decided based on a simulation result of a polymerization test.

In another embodiment, the number of rotations of the agitation shaft 122 in the polymerization apparatus 100 is decided so that the dimensions of the straight body of the reaction vessel 110, the dimensions of at least one of the plurality of agitating blades 124, and the set value of the number of rotations of the agitation shaft 122 satisfy the relationship represented by the following Expression 1.

(Expression 1)

$$N(b/d)(L/D)/n \leq 6.0$$

In Expression 1, N represents the number of a plurality of agitating blades 124. b represents the maximum value [m] of the blade widths of the plurality of agitating blades 124. d represents the maximum value [m] of the blade diameters of the plurality of agitating blades 124. L represents the length [m] of the straight body of the reaction vessel 110 in the extending direction. When the straight body is cut along a plurality of planes substantially perpendicular to the extending direction of the straight body and passing through respective attachment positions of the plurality of agitating blades 124, D represents the maximum value [m] of the diameters of a plurality of inscribed circles substantially inscribed in the straight body in respective cross sections taken along the plurality of planes. When the reaction vessel 110 has a cylindrical straight body, D is the inner diameter [m] of the straight body. n represents the set value of the number of rotations [rps] of the agitation shaft 122.

The blade diameter of the agitating blade 124 may be the rotation diameter of the agitating blade 124. The rotation diameter of the agitating blade 124 may be the diameter of a rotation body obtained by rotating the agitating blade 124 around the agitation shaft 122. The blade diameter of the agitating blade 124 may be the entire length of the agitating blade 124 in a direction (for example, the left and right directions in FIG. 1) substantially perpendicular to the extending direction of the agitation shaft 122 when the agitating blade 124 is attached to the agitation shaft 122.

The blade width of the agitating blade 124 may be the height of a rotation body obtained by rotating the agitating blade 124 around the agitation shaft 122. The blade width of the agitating blade 124 may be the entire length of the agitating blade 124 in a direction (for example, the up and down direction in FIG. 1) substantially parallel to the extending direction of the agitation shaft 122 when the agitating blade 124 is attached to the agitation shaft 122.

According to the present embodiment, the number of rotations of the agitation shaft 122 can be easily decided as compared to a case where the number of rotations of the agitation shaft 122 is decided based on the polymerization test performed in advance in the pilot plant. Even when the number of rotations of the agitation shaft 122 is decided based on the polymerization test performed in advance in the pilot plant, the number of rotations of the agitation shaft 122 can be easily decided in consideration of the relationship of the above-described Expression 1.

It is preferable that the dimensions of the straight body of the reaction vessel 110, the dimensions of at least one of the plurality of agitating blades 124, and the set value of the number of rotations of the agitation shaft 122 are decided so as to satisfy the relationship represented by the following Expression 2.

(Expression 2)

$$0.05 \leq N(b/d)(L/D)/n \leq 6.0$$

When the polymerization apparatus 100 includes one or more serpentine cooling pipes 140 or one or more serpentine cooling pipes 150, it is preferable that the dimensions of the straight body of the reaction vessel 110, the dimensions of at least one of the plurality of agitating blades 124, and the set value of the number of rotations of the agitation shaft 122 are decided so as to satisfy the relationship represented by the following Expression 3.

(Expression 3)

$$0.15 \leq N(b/d)(L/D)/n \leq 5.5$$

When the polymerization apparatus 100 includes one or more serpentine cooling pipes 140 and one or more serpentine cooling pipes 150, it is preferable that the dimensions of the straight body of the reaction vessel 110, the dimensions of at least one of the plurality of agitating blades 124, and the set value of the number of rotations of the agitation shaft 122 are decided so as to satisfy the relationship represented by the following Expression 4.

(Expression 4)

$$0.3 \leq N(b/d)(L/D)/n \leq 5.5$$

In one embodiment, the set value of the number of rotations of the agitation shaft 122 in the polymerization apparatus 100 is decided based on the dimensions of the straight body of the reaction vessel 110, the dimensions of at least one of the plurality of agitating blades 124, and Expression 1. In another embodiment, the dimensions of the straight body of the reaction vessel 110 and the dimensions of at least one of the plurality of agitating blades 124 are decided based on the set value of the number of rotations of the agitation shaft 122 in the polymerization apparatus 100 and Expression 1. Detail of these embodiments are described in connection to FIG. 17 described below.

In the present embodiment, the baffle 130 improves the mixing performance of the polymerization apparatus 100. For example, the baffle 130 improves mixing performance of the up and down direction inside the reaction vessel 110. Installation position of the baffle 130 is not limited in particular, but for example, the baffle 130 is arranged nearby the inner wall of the reaction vessel 110. The baffle 130 may be supported by the side wall of the reaction vessel 110. In another embodiment, the baffle 130 is supported by a top plate or a bottom plate of the reaction vessel 110, and is arranged nearby the agitating blade 124. When the polymerization apparatus 100 is used for manufacturing of a polymer, the baffle 130 may be arranged so that an upper end of the baffle 130 is submerged in a liquid phase, and may be arranged so that the upper end of the baffle 130 is not submerged in the liquid phase.

The number of the baffles 130 is preferably approximately 1 to 12, preferably approximately 2 to 8, more preferably approximately 3 to 6, and further preferably approximately 4 to 6. It is preferable that an even number of the baffles 130 is arranged substantially symmetrically around an extending axis of the reaction vessel 110 (may be referred to as a central axis.). Thus, the mixing performance of the polymerization apparatus 100 is further improved, and stagnation of liquid is suppressed. As a result, generation of scale can be suppressed.

In the present embodiment, the body 132 of the baffle 130 improves the mixing performance of the polymerization apparatus 100. A shape of the body 132 is not limited in particular, but for example, the body 132 has a plate-like or tubular shape extending substantially parallel to the extending direction of the reaction vessel 110. When the body 132 has a cylindrical shape, a diameter of the body 132 may be 40 to 500 mm. A length Bh (may be referred to as height Bh.) of an extending direction of the body 132 (z direction in the figure.) is not limited in particular.

A length Bw (may be referred to as width Bw.) of a direction that is substantially perpendicular to the extending direction of the body 132 (x or y direction in the figure.) is not limited in particular. A proportion of the width Bw of the body 132 in relation to the inner diameter of the reaction vessel 110 may be 1 to 10%, may be 2.5 to 7.5 %, and may be 3 to 7%.

When the body 132 has a tubular shape, a proportion of a total value of areas of transverse sections of one or more bodies 132 each having a tubular shape, in relation to an area of a transverse section of the straight body of the reaction vessel 110 may be 0.4 to 3%. When the above-described proportion is less than 0.4%, there is a chance that function as a baffle plate is insufficient, and mixing in the up and down direction inside the reaction vessel 110 becomes poor. For example, when the polymerization apparatus 100 includes a single baffle 130, the above-described proportion can become less than 0.4%. For example, in suspension polymerization of a vinyl chloride-based monomer, when mixing in the up and down direction inside the reaction vessel 110 becomes poor, a particle size distribution of the produced polymer can become broad. As a result, when the produced polymer is molded into sheets, for example, there is a chance that fish eyes increase and quality of the molded product decreases.

On the other hand, when the above-described proportion exceeds 3%, the power requirement of the agitator 120 increases excessively. Flowability of liquid between the baffle 130 and the inner wall surface of the reaction vessel 110 can also decrease. As a result, there is a chance that scale tends to adhere to the reaction vessel 110 or a structure inside the reaction vessel 110. For example, when the polymerization apparatus 100 includes more than eight baffles 130, the above-described proportion can exceed 3% depending on a design of the polymerization apparatus 100.

The body 132 of at least one baffle 130 may include a flow channel for circulating a heat carrier. The above-described flow channel may be formed inside the body 132 and may be arranged outside the body 132. The above-described flow channel may be a single layer pipe and may have a double pipe structure.

The heat carrier may be a well-known coolant. As the coolant, water, brine, freon, another liquefied gas or the like are exemplified. When a liquefied gas is used as the coolant, said liquefied gas may function as the coolant by evaporating inside the serpentine cooling pipe 140. A linear speed of the coolant may be approximately 0.1 to 6.0 m/s.

The body 132 is, for example, connected to the inner wall surface of the reaction vessel 110 via the support 134. A distance between the body 132 and the inner wall surface of the polymerization apparatus 100 is preferably 40 mm or more. When the above-described distance is less than 40 mm, near a gas-liquid interface inside the reaction vessel 110, polymer scale may tend to adhere between the inner wall surface of the reaction vessel 110 and the baffle 130. Detail of the body 132 is described below.

In the present embodiment, the support 134 holds the body 132. For example, one end of the support 134 is in contact with the inner wall surface of the reaction vessel 110, and another end of the support 134 is in contact with the body 132. As described above, the support 134 may hold the body 132 so that the distance between the body 132 and the inner wall surface of the polymerization apparatus 100 is 40 mm or more.

(Serpentine cooling pipe 140)

In the present embodiment, a flow channel for circulating a heat carrier inside is formed in the serpentine cooling pipe 140. The serpentine cooling pipe 140 may be a single layer pipe. The serpentine cooling pipe 140 is arranged at a position closer to the central axis of the reaction vessel 110 than the serpentine cooling pipe 150. The number of the serpentine cooling pipes 140 is preferably approximately 1 to 12, preferably approximately 2 to 8, more preferably approximately 3 to 6, and further preferably approximately 4 to 6. It is preferable that an even number of the serpentine cooling pipes 140 is arranged substantially symmetrically around the central axis of the reaction vessel 110.

The heat carrier may be a well-known coolant. As the coolant, water, brine, freon, another liquefied gas or the like are exemplified. When a liquefied gas is used as the coolant, said liquefied gas may function as the coolant by evaporating inside the serpentine cooling pipe 140. A linear speed of the coolant may be approximately 0.1 to 6.0 m/s.

In the present embodiment, at least one part of the serpentine cooling pipe 140 extends while repeatedly bending. Within the serpentine cooling pipe 140, a length Ph in an extending direction of the portion that extends while repeatedly bending may be less than a length Bh in the extending direction of the body 132 of the baffle 130 (z direction in the figure.), may be substantially the same as said Bh, and may be greater than said Bh. Thus, conduction area per installation area increases.

In the example shown in FIG. 1, the serpentine cooling pipe 140 extends substantially parallel to the extending direction of the reaction vessel 110 while repeatedly bending. In the example shown in FIG. 1, the entire serpentine cooling pipe 140 extends while repeatedly bending. A proportion of the length Ph in the extending direction of the portion that extends while repeatedly bending within the serpentine cooling pipe 140, in relation to a full length Pt (not shown.) in an extending direction of the serpentine cooling pipe 140 may be 0.25 or more, may be 0.5 or more, may be 0.75 or more, may be 0.8 or more, and may be 0.9 or more.

When the polymerization apparatus 100 is used for manufacturing of a polymer, the serpentine cooling pipe 140 may be arranged so that an upper end of the serpentine cooling pipe 140 is submerged in a liquid phase. This is because when an upper part of the serpentine cooling pipe 140 is exposed to a gas phase, conduction efficiency tends to decrease, and polymer scale tends to adhere to the serpentine cooling pipe 140. In end stage polymerization, the gas-liquid interface decreases due to liquid shrinkage. Therefore, even at a polymerization ending time, the serpentine cooling pipe 140 is preferably arranged in a position so that there is a sufficient distance between the upper end of the serpentine cooling pipe 140 and the gas-liquid interface. Detail of the serpentine cooling pipe 140 is described below.

(Serpentine cooling pipe 150)

In the present embodiment, a flow channel for circulating a heat carrier inside is formed in the serpentine cooling pipe 150. The serpentine cooling pipe 150 may be a single layer pipe. The serpentine cooling pipe 150 is arranged at a position closer to the side wall of the reaction vessel 110 than the serpentine cooling pipe 140. The number of the serpentine cooling pipes 150 is preferably approximately 1 to 12, preferably approximately 2 to 8, more preferably approximately 3 to 6, and further preferably approximately 4 to 6. The number of the serpentine cooling pipes 150 may be the same as the number of the serpentine cooling pipes 140, and may be different. It is preferable that an even number of the serpentine cooling pipes 150 is arranged substantially symmetrically around the central axis of the reaction vessel 110.

The heat carrier may be a well-known coolant. As the coolant, water, brine, freon, another liquefied gas or the like are exemplified. When a liquefied gas is used as the coolant, said liquefied gas may function as the coolant by evaporating inside the serpentine cooling pipe 140. A linear speed of the coolant may be approximately 0.1 to 6.0 m/s.

In the present embodiment, at least one part of the serpentine cooling pipe 150 extends while repeatedly bending. Within the serpentine cooling pipe 150, a length Ph in an extending direction of the portion that extends while repeatedly bending may be less than a length Bh in the extending direction of the body 132 of the baffle 130 (z direction in the figure.), may be substantially the same as said Bh, and may be greater than said Bh. Thus, conduction area per installation area increases.

In the example shown in FIG. 1, the serpentine cooling pipe 150 extends substantially parallel to the extending direction of the reaction vessel 110 while repeatedly bending. In the example shown in FIG. 1, the entire serpentine cooling pipe 150 extends while repeatedly bending. A proportion of the length Ph in the extending direction of the portion that extends while repeatedly bending within the serpentine cooling pipe 150, in relation to a full length Pt (not shown.)

in an extending direction of the serpentine cooling pipe 150 may be 0.25 or more, may be 0.5 or more, may be 0.75 or more, may be 0.8 or more, and may be 0.9 or more.

When the polymerization apparatus 100 is used for manufacturing of a polymer, the serpentine cooling pipe 150 may be arranged so that an upper end of the serpentine cooling pipe 150 is submerged in a liquid phase. This is because when an upper part of the serpentine cooling pipe 150 is exposed to a gas phase, conduction efficiency tends to decrease, and polymer scale tends to adhere to the serpentine cooling pipe 150. In end stage polymerization, the gas-liquid interface decreases due to liquid shrinkage. Therefore, even in at the polymerization ending time, the serpentine cooling pipe 150 is preferably arranged in a position so that there is a sufficient distance between the upper end of the serpentine cooling pipe 150 and the gas-liquid interface.

In one embodiment, a circulation direction of coolant in the serpentine cooling pipe 150 is set so that coolant flows from a bottom of the reaction vessel 110 toward a top of the reaction vessel 110. In another embodiment, the circulation direction of coolant in the serpentine cooling pipe 150 is set so that coolant flows from the top of the reaction vessel 110 toward the bottom of the reaction vessel 110.

For example, liquid that is returned from the reflux condenser 180 has a lower temperature than liquid inside the reaction vessel 110, and has high density. Therefore, nearby an inlet for liquid that is returned from the reflux condenser 180, there is a tendency for liquid inside the reaction vessel 110 to flow from top to bottom. For example, the serpentine cooling pipe 150 arranged nearby the inlet for liquid that is returned from the reflux condenser 180 can be configured so that the coolant circulates from the bottom of the reaction vessel 110 toward the top of the reaction vessel 110. Detail of the serpentine cooling pipe 150 is described below.

(Planar arrangement of serpentine cooling pipes 140 and serpentine cooling pipes 150)

As described above, in the present embodiment, the serpentine cooling pipes 140 and the serpentine cooling pipes 150 are arranged in multiple layers in a diameter direction of the straight body 312 of the reaction vessel 110. According to the present embodiment, on the surface (x-y plane in the figure) substantially perpendicular to the extending direction (as described above, z direction in the figure.) of the straight body of the reaction vessel 110, the representative point of each of one or more serpentine cooling pipes 140 and one or more serpentine cooling pipes 150 is located on the circumference of any of a plurality of virtual circles arranged substantially concentrically in said x-y plane. Detail of the plurality of virtual circles will be described below.

The representative point of each of one or more serpentine cooling pipes 140 may be any point on the center line of each pipe. When the serpentine cooling pipe 140 includes (i) a plurality of extending portions the extend linearly or extend while curving, and (ii) a plurality of bending portions which couple ends of two adjacent extending portions, among the plurality of extending portions, the representative point of the serpentine cooling pipe 140 may be any point on the center line of the extending portion. When the above-described x-y plane does not pass through the center of the extending portion, the representative point of the serpentine cooling pipe 140 may be any point on the center line of the above-described extending portion projected on said x-y plane.

The representative point of each of one or more serpentine cooling pipes 150 may be any point on the center line of each pipe. When the serpentine cooling pipe 150 includes (i) a plurality of extending portions the extend linearly or extend while curving, and (ii) a plurality of bending portions which couple ends of two adjacent extending portions, among the plurality of extending portions, the representative point of the serpentine cooling pipe 150 may be any point on the center line of the extending portion. When the above-described x-y plane does not pass through the center of the extending portion, the representative point of the serpentine cooling pipe 150 may be any point on the center line of the above-described extending portion projected on said x-y plane.

In the present embodiment, the jacket 170 heats and cools the reaction vessel 110 from outside the reaction vessel 110. As described above, the jacket 170 includes the flow channel 172 that is configured to allow circulation of a heat carrier. The jacket 170 adjusts heating amount and heat removal amount to and from the reaction vessel 110 by controlling at least one of a temperature or a volumetric flow rate of the heat carrier flowing through the flow channel 172.

The heat carrier may be a well-known coolant. As the coolant, water, brine, freon, various liquefied gas or the like are exemplified. As the coolant, a liquefied coolant is preferably used. When a liquefied gas is used as the coolant, said liquefied gas may function as the coolant by evaporating inside the serpentine cooling pipe 140. A linear speed of the coolant may be approximately 0.1 to 6.0 m/s.

In the present embodiment, the reflux condenser 180 is used for heat removal of the reaction vessel 110. For example, the reflux condenser 180 is supplied with steam from the reaction vessel 110. The reflux condenser 180 cools and liquefies the above-described steam. The reflux condenser 180 returns the liquid generated by the above-described cooling to the reaction vessel 110. As described above, the reflux condenser 180 includes the flow channel 182 that is configured to allow circulation of a heat carrier. The reflux condenser 180 cools the steam from the reaction vessel 110 by heat exchange between the heat carrier circulating through the flow channel 182, and the steam from the reaction vessel 110. The heat removal amount from the reaction vessel 110 can be adjusted by controlling at least one of a temperature or a volumetric flow rate of the heat carrier flowing through the flow channel 182.

(Relationship of heat removal means)

As described above, in the present embodiment, the reaction vessel 110 includes, as heat removal means, the baffle 130, the serpentine cooling pipe 140, the serpentine cooling pipe 150, the jacket 170, and the reflux condenser 180. A proportion of a heat removal amount removed by using each heat removal apparatus, in relation to a gross calorific value is not limited in particular. The above-described proportion is, for example, decided in consideration of quality, manufacturing cost or the like of the produced polymer. For example, a proportion of a heat removal amount by the baffle 130 in relation to the gross calorific value is preferably 10 to 30%. A proportion of a total heat removal amount by the serpentine cooling pipe 140 and the serpentine cooling pipe 150 in relation to the gross calorific value is preferably 10 to 50%. A proportion of the heat removal amount by the jacket 170 in relation to the gross calorific value is preferably 20 to 40%. A proportion of the heat removal amount by the reflux condenser 180 in relation to the gross calorific value is preferably 10 to 50%.

The serpentine cooling pipe 140 and the serpentine cooling pipe 150 are preferably designed so that a ratio of a total surface area value of the serpentine cooling pipe 140 and the serpentine cooling pipe 150, in relation to the internal capacity of the reaction vessel 110 is 0.1 to 0.9 $m^2/m^3$. The above-described ratio is more preferably 0.5 to 0.7 $m^2/m^3$. Thus, the proportion of the total heat removal amount of the serpentine cooling pipe 140 and the serpentine cooling pipe 150 in relation to the gross calorific value can be 10 to 50%.

(Material of each unit of the polymerization apparatus 100)

Material of each unit of the polymerization apparatus 100 is decided appropriately in consideration of mechanical strength, corrosion resistance, heat transfer properties or the like. For example, material used for the agitation shaft 122, the agitating blade 124, the baffle 130, the serpentine cooling pipe 140, and the serpentine cooling pipe 150 is preferably stainless steel such as high-chromium high-purity ferritic stainless steel, duplex stainless steel, austenitic stainless steel or the like. These materials have excellent heat transfer properties and corrosion resistance. As for material for the inner wall surface of the reaction vessel 110, clad steel including stainless steel is exemplified. Material of an outer layer of the above-described clad steel is preferably carbon steel, and material of an inner layer of said clad steel is preferably stainless steel.

(Application of the polymerization apparatus 100)

As described above, the polymerization apparatus 100 is used for manufacturing of a polymer. A polymerization method may be suspension polymerization, and may be emulsion polymerization. More specifically, the polymerization apparatus 100 is used for application of producing a polymer by polymerizing various vinyl-based monomers, for example, olefins such as ethylene, propylene or the like, vinyl halides such as vinyl chloride, vinylidene chloride or the like, vinyl esters such as vinyl acetate or the like, vinyl ethers such as ethyl vinyl ether or the like, (meth)acrylic acid esters such as methyl methacrylate or the like, metal salts or esters of maleic acid or fumaric acid, aromatic vinyls such as styrene or the like, diene monomers such as butadiene, chloroprene, isoprene or the like, and acrylonitrile or the like. The polymerization apparatus 100 is particularly suitably used for application of producing a polymer by polymerizing vinyl chloride or a monomer mixture mainly composed of this.

When a polymer is produced by using the polymerization apparatus 100, each material is supplied from a supply port (not shown) of the polymerization apparatus, and at a time when a temperature of a reaction chemical compound prepared inside the reaction vessel 110 reaches a predetermined temperature, coolant is circulated through each of the baffle 130, the serpentine cooling pipe 140, the serpentine cooling pipe 150, and the jacket 170, and heat removal of said reaction chemical compound is started. On the other hand, a time to start heat removal by the reflux condenser 180 is preferably when a polymerization conversion rate reaches 4% or later, and is more preferably when the polymerization conversion rate is 4 to 20%.

Even when a polymer is produced by using the polymerization apparatus 100, various polymerization conditions may be similar to well-known polymerization conditions. As the above-described polymerization conditions, preparation proportion of material or the like, preparation method of material or the like, polymerization temperature or the like are exemplified.

For example, when a vinyl chloride-based polymer is produced by suspension polymerization by using the polymerization apparatus 100, preparation of an aqueous media, vinyl chloride monomer, in some cases another comonomer, dispersing aid (may be referred to simply as a dispersant), polymerization initiator, or the like is performed similarly to a well-known manufacturing method of a vinyl chloride-based polymer. Polymerization conditions may be similar to that of the well-known manufacturing method of a vinyl chloride-based polymer. The vinyl chloride monomer and/or the above-described another comonomer may be an example of one or more types of monomers to be material of the polymer.

(Monomer)

As a monomer to be polymerized, other than vinyl chloride alone, a monomer mixture mainly composed of vinyl chloride (50% by mass or more of vinyl chloride) can be used. As a comonomer to be copolymerized with vinyl chloride, for example, vinyl esters such as vinyl acetate, vinyl propionate or the like; acrylic acid esters or methacrylic acid esters such as methyl acrylate, ethyl acrylate or the like; olefins such as ethylene, propylene or the like; maleic anhydride; acrylonitrile; styrene; vinylidene chloride; and other monomers that can be copolymerized with vinyl chloride are exemplified. The vinyl chloride, the monomer mixture mainly composed of vinyl chloride, and the comonomer to be copolymerized with vinyl chloride may be an example of one or more types of monomers to be material of the polymer.

(Dispersing aid)

As the above-described dispersing aid, a chemical compound used normally when polymerizing vinyl chloride in aqueous media is used. As the above-described dispersing aid, water soluble cellulose ethers such as methylcellulose, hydroxyethylcellulose, hydroxypropylcellulose, hydroxypropylmethylcellulose (HPMC) or the like; and water-soluble polymers such as partially saponified polyvinyl alcohol (PVA), acrylic acid polymers, gelatin or the like are exemplified. The above-described dispersing aid may be used alone, and may be used in a combination of two types or more.

For example, the degree of saponification of partially saponified polyvinyl alcohol may be 20 to 90 mol%. The degree of saponification of partially saponified polyvinyl alcohol may be 40 to 90 mol% or may be 50 to 90 mol%. As the degree of saponification of partially saponified polyvinyl alcohol, 25 mol%, 40 mol%, 48 mol%, 55 mol%, 72 mol%, 78 mol%, 80 mol%, 88 mol%, or the like is exemplified. A plurality of types of partially saponified polyvinyl alcohol having different degrees of saponification may be used as the dispersing aid. The partially saponified polyvinyl alcohol may be modified.

The dispersing aid can be classified into a main dispersant for adjusting the particle size of polymer and a secondary dispersant for adjusting the porosity of polymer. As the main dispersant, partially saponified PVA, HPMC, or the like is exemplified. As the secondary dispersant, partially saponified PVA, HPMC, or the like is exemplified.

In one embodiment, the dispersing aid is, for example, added in an amount of 0.01 to 5 parts by mass per 100 parts by mass of prepared monomer. In another embodiment, an added amount (may be referred to as an input amount) of the dispersing aid is adjusted according to the state of the internal structures arranged inside the reaction vessel 110.

For example, an added amount of the dispersing aid is adjusted according to the degree of multiplexing in the radial direction of the cooling pipe arranged inside the reaction vessel 110. As described above, in the embodiment described in connection to FIG. 1, the representative point of each of one or more serpentine cooling pipes 140 and one or more serpentine cooling pipes 150 is located substantially on the circumference of any of a plurality of virtual circles (may be referred to as virtual circles) arranged substantially concentrically in the x-y plane. The above-described representative point can be arranged at a position slightly spaced apart from the above-described circumference to such an extent that the function of each cooling pipe is not impaired, for example, due to manufacturing or design errors. The number N [units] of a plurality of virtual circles can be used as an indicator indicating the degree of multiplexing in the radial direction of the cooling pipe or the state of the internal structures.

For example, when the above-described number N [units] of a plurality of virtual circles is 1, 2, or 3, the number Nc [units] of said virtual circles and a proportion CZ [mg-dispersing aid/kg-monomer] of the mass of the dispersing aid to the mass of the monomer prepared in the reaction vessel 110 satisfy the relationship represented by the following Expression A1. For example, the added amount of the dispersing aid is adjusted so as to satisfy the relationship represented by the following Expression A1.

(Expression A1)

$$15\, Nc + 300 < CZ < 175\, Nc + 2000$$

When a plurality of types of monomers are prepared in the reaction vessel 110 as material of the polymer, the above-described mass of the monomer prepared in the reaction vessel 110 may be the sum of the respective masses of the plurality of types of monomers. As described above, the added amount of the dispersing aid is adjusted according to the state of the internal structures, so that the stability of the liquid (may be referred to as a polymerizing system) in the reaction vessel is improved.

Comparing the stability of the polymerizing system when there are many structures (excluding the agitation shaft and the agitating blade) arranged inside the reaction vessel 110 with the stability of the polymerizing system when there are few structures arranged inside the reaction vessel 110, the polymerizing system tends to be unstable when there are many structures arranged inside the reaction vessel 110. For example, usually, inside the reaction vessel 110, baffles are arranged nearby the inner wall of the reaction vessel 110 to a certain extent, and the polymerizing system is relatively stable. On the other hand, when a cooling pipe is arranged inside the reaction vessel 110 as in the embodiment described in connection to FIG. 1, a flow state around said cooling pipe and/or a flow state in a region between said cooling pipe and the inner wall of the reaction vessel 110 tends to be unstable. As a result, the polymerizing system tends to be unstable.

Even in such a case, the polymerizing system is stabilized by adding the dispersing aid to the polymerizing system. For example, when the dispersing aid is added to the polymerizing system, the dispersion characteristics of a suspension are improved. As a result, the form of the polymer particles (may be referred to as resin particles) is improved, and the absorption performance of a plasticizer can be improved. A buffer may be added to the polymerizing system. The stability of the polymerizing system is further improved by adding the buffer to the polymerizing system.

In general, the added amount of the dispersing aid is decided by repetition of trial and error. The inventors have focused on the fact that, among the structures arranged inside the reaction vessel 110, a structure that greatly affects the flow state of the polymerizing system is a cooling pipe, and have found that the amount of the cooling pipe in the radial direction of the reaction vessel 110 and the added amount of the dispersing aid have a correlation.

That is, according to the present embodiment, the above-described number Nc [units] of virtual circles and the above-described proportion CZ [mg-dispersing aid/kg-monomer] are adjusted so as to satisfy the relationship of Expression A1. Thus, resin particles having a small particle size distribution and few fish eyes are produced. The amount of scale adhering to the inside of the reaction vessel 110 along with the polymerization reaction is suppressed.

By producing a polymer so as to satisfy the relationship of Expression A1, a yield can be improved while maintaining the quality of the polymer particles described above. For example, a yield of about 90% is obtained. An unreacted monomer may be recovered after the end of the polymerization reaction, and said recovered monomer (may be referred to as a recovered monomer) is used as material in subsequent reactions. The use ratio of the recovered monomer can be improved by producing the polymer so as to satisfy the relationship of Expression A1. For example, the use ratio of the recovered monomer can be about 30%.

The inventors have found that when the added amount of the dispersing aid exceeds a certain degree, the effect of stabilizing the polymerizing system by the dispersing aid is not greatly increased even if the added amount of the dispersing aid is increased. Specifically, the inventors have found that when the above-described number Nc of virtual circles is three, a sufficient amount of the dispersing aid for stabilizing the polymerizing system is added.

For example, when the above-described number Nc of virtual circles is 4 or more, the above-described proportion CZ [mg-dispersing aid/kg-monomer] preferably satisfies the relationship represented by the following Expression A2. For example, the added amount of the dispersing aid is adjusted so as to satisfy the relationship represented by the following Expression A2. Thus, the effect described above can be obtained while excessive addition of the dispersing aid is suppressed.

(Expression A2)

$$15x3 + 300 < CZ < 175x3 + 2000$$

When the above-described number Nc [units] of virtual circles and the above-described proportion CZ [mg-dispersing aid/kg-monomer] are adjusted so as to satisfy the relationship represented by Expression A1, the average degree of polymerization of the polymer to be produced is adjusted to, for example, approximately 200 to 4000. The above-described average degree of polymerization may be adjusted to 300 to 4000 or may be adjusted to 300 to 2000. The above-described average degree of polymerization may be adjusted to be 500 to 1500.

As described above, there is a relatively strong correlation between the average degree of polymerization of a polymer and the reduced viscosity or K-value of said polymer. The polymerization temperature is set according to the desired reduced viscosity or K-value of the polymer. Therefore, in another embodiment, instead of adjusting the average degree of polymerization of the polymer to be produced, the reduced viscosity or K-value of the polymer or the polymerization temperature may be adjusted.

For example, in a case where a vinyl chloride resin is produced, when the above-described number Nc [units] of virtual circles and the above-described proportion CZ [mg-dispersing aid/kg-monomer] are adjusted to satisfy the relationship represented by Expression A1, the reaction temperature (may be referred to as the polymerization temperature) is adjusted to 30 to 75°C. The above-described reaction temperature may be adjusted to 40 to 70°C or may be adjusted to 50 to 60°C.

In one embodiment, when the above-described number Nc [units] of virtual circles is 1, 2, or 3, the number Nc [units] of said virtual circles and the above-described proportion CZ [mg-dispersing aid/kg-monomer] may satisfy the relationship represented by the following Expression B1. For example, the added amount of the dispersing aid is adjusted so as to satisfy the relationship represented by the following Expression B1. Thus, the amount of scale adhering to the inside of the reaction vessel 110 along with the polymerization reaction can be further suppressed.

(Expression B1)

$$15 Nc + 310 < CZ < 175 Nc + 1550$$

When the above-described number Nc of virtual circles is 4 or more, the above-described proportion CZ [mg-dispersing aid/kg-monomer] may satisfy the relationship represented by the following Expression B2. For example, the added amount of the dispersing aid is adjusted so as to satisfy the relationship represented by the following Expression B2. Thus, the effects described above can be obtained.

(Expression B2)

$$15x3 + 310 < CZ < 175x3 + 1550$$

In another embodiment, when the above-described number Nc [units] of virtual circles is 1, 2, or 3, the number Nc [units] of said virtual circles and the above-described proportion CZ [mg-dispersing aid/kg-monomer] may satisfy the relationship represented by the following Expression C1. For example, the added amount of the dispersing aid is adjusted so as to satisfy the relationship represented by the following Expression C1. Thus, resin particles having extremely few fish eyes can be produced.

(Expression C1)

$$15 Nc + 400 < CZ < 175 Nc + 1850$$

When the above-described number Nc of virtual circles is 4 or more, the above-described proportion CZ [mg-dispersing aid/kg-monomer] may satisfy the relationship represented by the following Expression C2. For example, the added amount of the dispersing aid is adjusted so as to satisfy the relationship represented by the following Expression C2. Thus, the effects described above can be obtained.

(Expression C2)

$$15x3 + 400 < CZ < 175x3 + 1850$$

Further, in another embodiment, when the above-described number Nc [units] of virtual circles is 1, 2, or 3, the number Nc [units] of said virtual circles and the above-described proportion CZ [mg-dispersing aid/kg-monomer] may satisfy the relationship represented by the following Expression D1. For example, the added amount of the dispersing aid is adjusted so as to satisfy the relationship represented by the following Expression D1. Thus, the amount of scale adhering to the inside of the reaction vessel 110 along with the polymerization reaction can be further suppressed, and resin particles having extremely few fish eyes can be produced.

(Expression D1)

$$15 Nc + 400 < CZ < 175 Nc + 1550$$

When the above-described number Nc of virtual circles is 4 or more, the above-described proportion CZ [mg-dispersing aid/kg-material solution] may satisfy the relationship represented by the following Expression D2. For example, the added amount of the dispersing aid is adjusted so as to satisfy the relationship represented by the following Expression D2. Thus, the effects described above can be obtained.

(Expression D2)

$$15x3 + 400 < CZ < 175x3 + 1550$$

The polymerizing system is further stabilized by appropriately adjusting the agitating of the polymerizing system in addition to the added amount of the dispersing aid. For example, when (a) the number of rotations of the agitation shaft 122 in the polymerization apparatus 100 is decided so that the dimensions of the straight body of the reaction vessel 110, the dimensions of at least one of the plurality of agitating blades 124, and the set value of the number of rotations of the agitation shaft 122 satisfy the relationship represented by the above-described Expression 1, and (b) the number Nc [units] of said virtual circles and the proportion CZ [mg-dispersing aid/kg-monomer] of the mass of the dispersing aid to the mass of the monomer prepared in the reaction vessel 110 satisfy the relationship represented by the above-described Expression A1, B1, C1, or D1, a particularly excellent result is obtained. The above-described correlation becomes clearer. When the above-described number Nc of virtual circles is 4 or more, the above-described number Nc and proportion CZ may satisfy the relationship represented by the above-described Expression A2, B2, C2, or D2.

The cause of these phenomena is not clear, but for example, it is presumed that the polymerizing system is extremely stabilized by a synergistic effect of the effect of appropriately managing the agitation energy and the effect of appropriately managing the added amount of the dispersing aid. As a result, the amount of scale adhering to the inside of the reaction vessel 110 along with the polymerization reaction can be suppressed. Resin particles having extremely few fish eyes can be produced.

(Polymerization initiator)

As the above-described polymerization initiator, a chemical compound conventionally used for vinyl chloride-based polymerization is used. As for the above-described polymerization initiator, percarbonate compounds such as diisopropyl peroxydicarbonate, di-2-ethylhexyl peroxydicarbonate, diethoxyethyl peroxydicarbonate or the like; perester compounds such as $\alpha$-cumylperoxyneodecanate, t-butylperoxyneodecanate, t-butylperoxyneoheptanoate, hexylperoxyneodecanate, octylperoxyneodecanate or the like; peroxides such as acetylcyclohexylsulfonyl peroxide, 2,4,4-trimethylpentyl-2-peroxyphenoxyacetate or the like; and azo compounds such as azobis-2,4-dimethylvaleronitrile, azobis(4-methoxy-2,4-dimethylvaleronitrile) or the like are exemplified. The above-described polymerization initiator may be used alone, and may be used in a combination of two types or more.

The added amount of the polymerization initiator is not particularly limited. The polymerization initiator is, for example, added in an amount of 0.01 to 3 parts by mass per 100 parts by mass of monomer. The added amount of the polymerization initiator is preferably 0.05 to 3 parts by mass per 100 parts by mass of monomer.

Further, according to necessity, various aids such as a polymerization modifier, chain transfer agent, pH adjuster, buffer, gelling improver, antistatic agent, scale inhibitor or the like used appropriately for vinyl chloride polymerization can be added. Regarding the reduced viscosity (K-value) of the vinyl chloride polymer obtained in the present invention, although a polymer in a desired range can be obtained by using the apparatus of the present invention, preferably, a polymer in a range of 40 to 90 can be obtained.

As for the pH adjuster or the buffer, citric acid, trisodium citrate, diammonium citrate, triammonium citrate, potassium hydrogen phthalate, sodium nitrate, sodium carbonate, potassium carbonate, cesium carbonate, sodium hydrogen carbonate, sodium hydroxide, potassium hydroxide, barium hydroxide, disodium phosphate, dipotassium phosphate, tripotassium phosphate or the like are exemplified. The above-described pH adjuster or buffer may be used alone, and may be used in a combination of two types or more.

The polymerization apparatus 100 may be an example of a reactor apparatus. The polymerization apparatus 100 may be an example of a reactor apparatus of batch type. The reaction vessel 110 may be an example of a reactor. The inner surface of the reaction vessel 110 may be an example of an inner wall surface of the reactor. The side surface of the reaction vessel 110 may be an example of the inner wall surface of the reactor. The flow channel for the heat carrier arranged in the body 132 of the baffle 130 may be an example of a second cooling pipe. The support 134 of the baffle 130 may be an example of at least one part of a baffle. The serpentine cooling pipe 140 may be an example of a first cooling pipe. The serpentine cooling pipe 150 may be an example of a first cooling pipe. One of the serpentine cooling pipe 140 and one of the serpentine cooling pipe 150 may be an example of at least two of a plurality of the first cooling pipe. The flow channel 172 may be an example of a third cooling pipe. The flow channel 182 may be an example of a third cooling pipe.

(An example of another embodiment)

In the present embodiment, as an example of when the serpentine cooling pipe 140 and the serpentine cooling pipe 150 extending while repeatedly bending are arranged inside the reaction vessel 110, the example of the polymerization apparatus 100 was described. As described above, the serpentine cooling pipe 140 and the serpentine cooling pipe 150 include a plurality of extending portions that extend linearly or extend while curving, and one or more bending portions which couple ends of two adjacent extending portions. However, the polymerization apparatus 100 is not limited to the present embodiment.

In another embodiment, the polymerization apparatus 100 may include a ring-shaped (may be referred to as "coiled".) cooling pipe (may be referred to as a ring cooling pipe.) as described in Japanese patent application publication no. H7-233206 inside the reaction vessel 110. The polymerization apparatus 100 may include a plurality of ring cooling pipes. The representative points of the plurality of ring cooling pipes may be located substantially on the above-described circumferences of the plurality of virtual circles. As disclosed in, for example, Japanese patent application publication no. H7-233206, each of the plurality of ring cooling pipes includes a plurality of ring portions each having a ring shape, and one or more coupling portions which couple the plurality of ring portions.

Even in a case where the polymerization apparatus 100 includes one or more ring cooling pipes inside the reaction vessel 110, when the above-described number $N_c$ [units] of virtual circles is 1, 2, or 3, the number $N_c$ [units] of said virtual circles and the proportion CZ [mg-dispersing aid/kg-monomer] of the mass of the dispersing aid to the mass of the monomer prepared in the reaction vessel 110 may satisfy the relationship represented by the above-described Expression A1, B1, C1, or D1. Thus, the effects described above can be obtained.

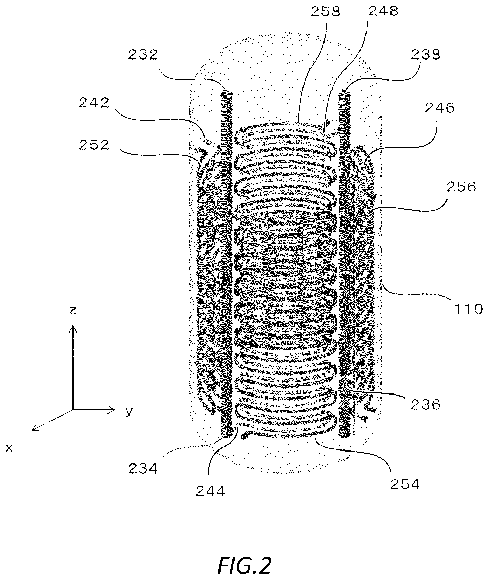

FIG. 2 schematically shows an example of internal structures arranged inside the reaction vessel 110. In FIG. 2, representation of the agitator 120 is omitted for sake of clarity. As shown in FIG. 2, as one or more of the baffle 130, the polymerization apparatus 100 includes a baffle 232, a baffle 234, a baffle 236, and a baffle 238. As one or more of the serpentine cooling pipe 140, the polymerization apparatus 100 includes a serpentine cooling pipe 242, a serpentine cooling pipe 244, a serpentine cooling pipe 246, and a serpentine cooling pipe 248. Similarly, as one or more of the serpentine cooling pipe 150, the polymerization apparatus 100 includes a serpentine cooling pipe 252, a serpentine cooling pipe 254, a serpentine cooling pipe 256, and a serpentine cooling pipe 258.

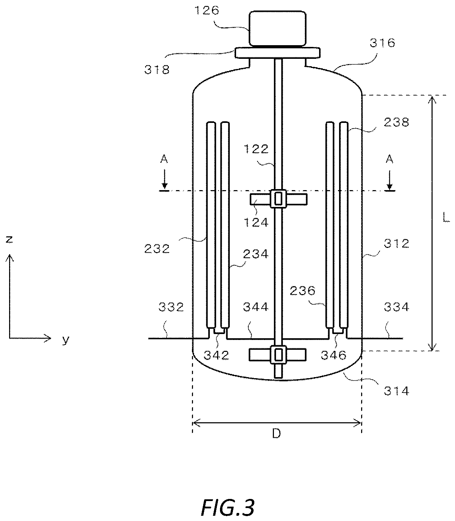

FIG. 3 shows a schematic cross-sectional view of an example of the reaction vessel 110. In FIG. 3, representation of the serpentine cooling pipe 140 is omitted for sake of clarity. For sake of clarity, installation positions of the baffle 232, the baffle 234, the baffle 236, and the baffle 238 are deformed.

As shown in FIG. 3, in the present embodiment, the reaction vessel 110 includes a straight body 312, a first panel 314, a second panel 316, and a pedestal 318. In the present embodiment, the straight body 312 has a cylindrical shape. When a length in an extending direction of the straight body 312 (z direction in the figure.) is L, and an inner diameter of the straight body 312 is D, the straight body 312 is, for example, designed so that a value of L/D is 1.0 to 3.0. The straight body 312 may be designed so that the value of L/D is 1.5 to 2.5.

In the present embodiment, the first panel 314 is combined to one end of the straight body 312, and configures a bottom plate of the reaction vessel 110. In the present embodiment, the second panel 316 is combined to another end of the straight body 312, and configures a top plate of the reaction vessel 110. In the present embodiment, the pedestal 318 holds the power mechanism 126.

As shown in FIG. 3, a coolant supplying pipe 332 for supplying coolant from a coolant source to the reaction vessel 110, and a coolant returning pipe 334 for returning coolant after heat exchange from the reaction vessel 110 to the coolant source are arranged around the polymerization apparatus 100. According to the embodiment shown in FIG. 3, the baffle 232 and the baffle 234 are coupled by a coupling portion 342, and configured so that coolant flowing out from the baffle 232 can flow into the baffle 234. The baffle 234 and the baffle 236 are coupled by a coupling portion 344, and configured so that coolant flowing out from the baffle 234 can flow into the baffle 236. Similarly, the baffle 236 and the baffle 238 are coupled by a coupling portion 346, and configured so that coolant flowing out from the baffle 236 can flow into the baffle 238. Detail of each baffle is described below.

According to the present embodiment, coolant supplied from the coolant supplying pipe 332 to the reaction vessel 110 flows into the baffle 232, passes through the baffle 234, the baffle 236, and the baffle 238, and is ejected into the coolant returning pipe 334. A circulating method of the coolant is not limited to the present embodiment.

For example, in another embodiment, coolant supplied from the coolant supplying pipe 332 to the reaction vessel 110 flows into the baffle 232, passes through the baffle 234, and is ejected into the coolant returning pipe 334. Coolant supplied from the coolant supplying pipe 332 to the reaction vessel 110 flows into the baffle 238, passes through the baffle 236, and is ejected into the coolant returning pipe 334. Further, in another embodiment, each of the baffle 232, the baffle 234, the baffle 236, and the baffle 238 are configured so that volumetric flow rate of coolant supplied to each baffle is independently controllable.

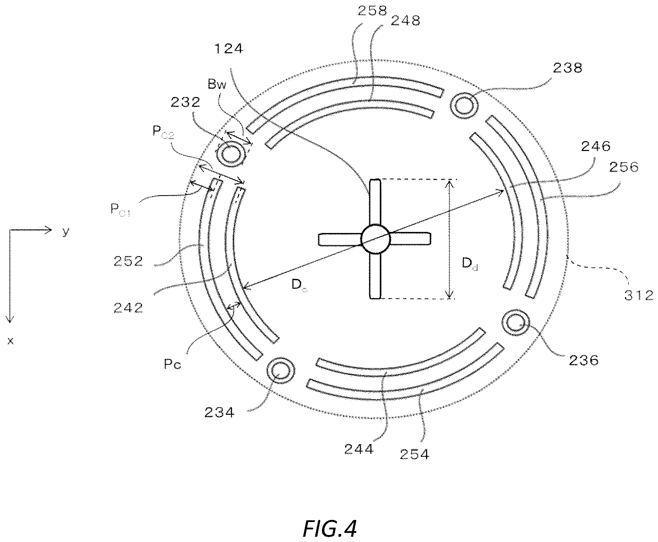

FIG. 4 shows a schematic plan view of an example of the reaction vessel 110. In the present embodiment, (i) the baffle 232, the baffle 234, the baffle 236, and the baffle 238, (ii) the serpentine cooling pipe 242, the serpentine cooling pipe 244, the serpentine cooling pipe 246, and the serpentine cooling pipe 248, and (iii) the serpentine cooling pipe 252, the serpentine cooling pipe 254, the serpentine cooling pipe 256, and the serpentine cooling pipe 258 are arranged concentrically.

In the present embodiment, the serpentine cooling pipe 242, the serpentine cooling pipe 244, the serpentine cooling pipe 246, and the serpentine cooling pipe 248 are arranged on substantially the same circumference. In the present embodiment, (i) the baffle 232, the baffle 234, the baffle 236, and the baffle 238, (ii) the serpentine cooling pipe 252, the serpentine cooling pipe 254, the serpentine cooling pipe 256, and the serpentine cooling pipe 258 are arranged on substantially the same circumference.

That is, in a transverse section at a particular position of the straight body 312, a center of the transverse section of the baffle 232, the baffle 234, the baffle 236, and the baffle 238, and a center of the transverse section of the serpentine cooling pipe 252, the serpentine cooling pipe 254, the serpentine cooling pipe 256, and the serpentine cooling pipe 258 are arranged on substantially the same circumference. The transverse section at the particular position of the straight body 312 is a surface (x-y plane in the figure.) perpendicular to the extending direction (z direction in the figure.) of the straight body 312, a plane that passes through the center of the serpentine cooling pipe 252, the serpentine cooling pipe 254, the serpentine cooling pipe 256, and the serpentine cooling pipe 258, and may be a cross section obtained by cutting the reaction vessel 110. In this case, a width of each pipe in the transverse section is identical to a diameter of each pipe.

In the present embodiment, the baffle 232, the baffle 234, the baffle 236, and the baffle 238 are arranged at substantially symmetrical positions around the central axis of the reaction vessel 110. The serpentine cooling pipe 242, the serpentine cooling pipe 244, the serpentine cooling pipe 246, and the serpentine cooling pipe 248 are arranged at substantially symmetrical positions around the central axis of the reaction vessel 110. The serpentine cooling pipe 252, the serpentine cooling pipe 254, the serpentine cooling pipe 256, and the serpentine cooling pipe 258 are arranged at substantially symmetrical positions around the central axis of the reaction vessel 110.

As shown in FIG. 4, the serpentine cooling pipe 252 is arranged at a position between the baffle 232 and the baffle 234. The serpentine cooling pipe 254 is arranged at a position between the baffle 234 and the baffle 236. The serpentine cooling pipe 256 is arranged at a position between the baffle 236 and the baffle 238. The serpentine cooling pipe 258 is arranged at a position between the baffle 238 and the baffle 232. A diameter of an outer circumference of the serpentine cooling pipe 252, the serpentine cooling pipe 254, the serpentine cooling pipe 256, and the serpentine cooling pipe 258 may be less than a width Bw of the baffle 232, the baffle 234, the baffle 236, and the baffle 238.

In the present embodiment, a diameter of a circle on which the serpentine cooling pipe 242, the serpentine cooling pipe 244, the serpentine cooling pipe 246, and the serpentine cooling pipe 248 are arranged is less than a diameter of a circle on which the serpentine cooling pipe 252, the serpentine cooling pipe 254, the serpentine cooling pipe 256, and the serpentine cooling pipe 258 are arranged. According to the present embodiment, the serpentine cooling pipes can be arranged in multiple layers in a diameter direction of the straight body 312 of the reaction vessel 110. Thus, for example, compared to when a large ring shape or helical pipe is arranged inside the reaction vessel 110, degree of freedom of arrangement of internal structures improves. As a result, the polymerization apparatus 100 having excellent cooling efficiency can be made.

A size of a diameter $D_c$ of a virtual circle on which the outer circumference of the serpentine cooling pipe 242, the serpentine cooling pipe 244, the serpentine cooling pipe 246, and the serpentine cooling pipe 248 are arranged is not limited in particular, but it is preferably greater than a diameter $D_d$ of a rotation region of the agitating blade 124. $D_c/D_d$ is preferably 1.1 or more, and more preferably 1.2 or more.

In the present embodiment, a distance between each of the serpentine cooling pipe 252, the serpentine cooling pipe 254, the serpentine cooling pipe 256, and the serpentine cooling pipe 258, and an inner surface of the straight body 312 are all $P_{C1}$. Similarly, a distance between each of the serpentine cooling pipe 242, the serpentine cooling pipe 244, the serpentine cooling pipe 246, and the serpentine cooling pipe 248, and an inner surface of the straight body 312 are all $P_{C2}$. As shown in FIG. 4, in the present embodiment, $P_{C2} > P_{C1}$.

Sizes of the above-described $P_{C1}$ and $P_{C2}$ are not limited in particular, but $P_{C1}$ is preferably set so that a distance between an outer circumference of each serpentine cooling pipe and the inner surface of the straight body 312 is 40 mm or more. It may be set so that $P_{C1}$ is 40 mm or more. When the above-described distance or $P_{C1}$ is less than 40 mm, near a gas-liquid interface inside the reaction vessel 110, polymer scale may tend to adhere between the inner wall surface of the reaction vessel 110 and the serpentine cooling pipes 150.

Similarly, a distance Pc between the serpentine cooling pipe 242 and the serpentine cooling pipe 252 is preferably 40 mm or more. The distance Pc is, for example, decided by calculating a minimum value of a distance between an outer circumference of the serpentine cooling pipe 242 and an outer circumference of the serpentine cooling pipe 252, in the above-described transverse section. When Pc is less than 40 mm, polymer scale may tend to adhere.

A distance between a particular serpentine cooling pipe and the inner surface of the straight body 312 may be decided as a minimal distance between both in a cross section that is perpendicular to the extending direction of the straight body 312 and passes through a center of said particular serpentine cooling pipe. A distance between each serpentine cooling pipe and the inner surface of the straight body 312 is, for example, decided by calculating a minimum value of a distance between a center line along an extending direction of each serpentine cooling pipe and the inner surface of the straight body 312, in the above-described transverse section. In the present embodiment, the above-described center line along the extending direction of each serpentine cooling pipe curves in an arc shape. Detail of the above-described distance is described below.

As shown in FIG. 4, in the transverse section at the particular position of the straight body 312, transverse sections of the serpentine cooling pipe 242, the serpentine cooling pipe 244, the serpentine cooling pipe 246, and the serpentine cooling pipe 254 have an arc shape. Similarly, transverse sections of the serpentine cooling pipe 252, the serpentine cooling pipe 254, the serpentine cooling pipe 256, and the serpentine cooling pipe 258 have an arc shape. The shapes of the transverse sections of the serpentine cooling pipe 242, the serpentine cooling pipe 244, the serpentine cooling pipe 246, and the serpentine cooling pipe 254, and the shapes of the transverse sections of the serpentine cooling pipe 252, the serpentine cooling pipe 254, the serpentine cooling pipe 256, and the serpentine cooling pipe 258 may be similar in shape. For example, when the transverse sections of the serpentine cooling pipe 242 and the serpentine cooling pipe 252 have an arc shape, a central angle of the arc of the serpentine cooling pipe 242 and a central angle of the arc of the serpentine cooling pipe 252 may be substantially the same. The serpentine cooling pipe 244 and the serpentine cooling pipe 254, the serpentine cooling pipe 246 and the serpentine cooling pipe 256, as well as the serpentine cooling pipe 248 and the serpentine cooling pipe 258 may be similar.

When the above-described serpentine cooling pipes are shaped on an arc, a size of a central angle of the arc may be 270 degrees or less. The size of the central angle of the arc may be 240 degrees or less, may be 210 degrees or less, may be 180 degrees or less, may be 150 degrees or less, may be 120 degrees or less, may be 90 degrees or less, and may be 60 degrees or less.

In the present embodiment, a length in an extending direction of at least one of the serpentine cooling pipe 252, the serpentine cooling pipe 254, the serpentine cooling pipe 256, and the serpentine cooling pipe 258 (length of the arc in the figure.) is less than two-thirds of a length of an inner circumference of the straight body 312. The above-described length in the extending direction (length of the arc in the figure.) may be one-half or less of the length of the inner circumference of the straight body 312, may be less than one-half of the length of the inner circumference of the straight body 312, may be one-third or less of the length of the inner circumference of the straight body 312, may be less than one-third of the length of the inner circumference of the straight body 312, may be one-fourth or less of the length of the inner circumference of the straight body 312, may be less than one-fourth of the length of the inner circumference of the straight body 312, may be one-sixth or less of the length of the inner circumference of the straight body 312, and may be less than one-sixth of the length of the inner circumference of the straight body 312.

As described above, the coiled cooling pipe described in Japanese Patent Application Publication No. H7-233206 has a substantially circular shape. That is, a central angle of an arc of the cooling pipe is approximately 360 degrees. Therefore, a baffle and the coiled cooling pipe cannot be arranged on substantially the same circumference. Meanwhile, according to the present embodiment, at least one of the one or more serpentine cooling pipes 150 arranged at a position close to an inner side of the straight body 312 than the serpentine cooling pipe 140 can be arranged between two of the baffles 130 by having the above-described configuration. Thus, the conduction area of the entire apparatus can be increased while making the effect on the mixing performance of the polymerization apparatus 100 by the serpentine cooling pipe 150 smaller.

The inner surface of the straight body 312 may be an example of the inner wall surface of the reactor. The serpentine cooling pipe 252 may be an example of a first cooling pipe having a smallest distance from the inner wall surface of the reactor. The serpentine cooling pipe 254 may be an example of a first cooling pipe having a smallest distance from the inner wall surface of the reactor. The serpentine cooling pipe 256 may be an example of a first cooling pipe having a smallest distance from the inner wall surface of the reactor. The serpentine cooling pipe 258 may be an example of a first cooling pipe having a smallest distance from the inner wall surface of the reactor.

(An example of another embodiment)

In the present embodiment, as an example of when the serpentine cooling pipes are multiplexed by two-fold from a center toward outside of the straight body 312, an example of the polymerization apparatus 100 is described. However, the polymerization apparatus 100 is not limited to the present embodiment. In another embodiment, the serpentine cooling pipes may be multiplexed by three-fold or more from the center toward the outside of the straight body 312. The serpentine cooling pipes are preferably multiplexed by two to five-fold from the center toward the outside of the straight body 312.

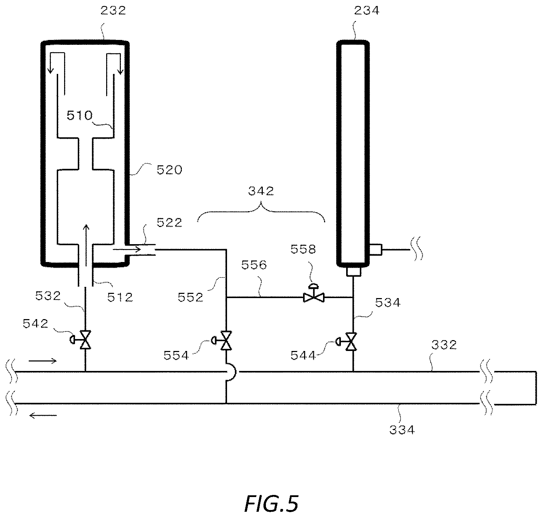

FIG. 5 schematically shows an example of internal structure of the baffle 232. The baffle 234, the baffle 236, and the baffle 238 may have similar internal structure as that of the baffle 232. In the present embodiment, the baffle 232 has a double pipe structure including an inner pipe 510 and an outer pipe 520. The baffle 232 includes an inlet 512 that allows coolant to flow inside the inner pipe 510, and an outlet 522 that allows coolant to flow out from inside the outer pipe 520.

In the present embodiment, the inlet 512 of the baffle 232 is connected to the coolant supplying pipe 332 via a pipe 532 and a volumetric flow rate regulation valve 542. Thus, by adjusting a degree of opening of the volumetric flow rate regulation valve 542, a volumetric flow rate of coolant that flows into the baffle 232 is adjusted. Similarly, the inlet 512 of the baffle 234 is connected to the coolant supplying pipe 332 via a pipe 534 and a volumetric flow rate regulation valve 544.

In the present embodiment, the outlet 522 of the baffle 232 is connected to the coolant returning pipe 334 and the baffle 234 via the coupling portion 342. As shown in FIG. 5, in the present embodiment, the coupling portion 342 includes a pipe 552, a volumetric flow rate regulation valve 554, a pipe 556, and a volumetric flow rate regulation valve 558.

The pipe 552 connects the outlet 522 and the coolant returning pipe 334. The volumetric flow rate regulation valve 554 is arranged in a middle of the pipe 552, and adjusts volumetric flow rate of coolant flowing through the pipe 552. The pipe 556 connects the outlet 522 and the baffle 234. More specifically, the pipe 556 connects a position on the pipe 552 that is between the volumetric flow rate regulation valve 554 and the outlet 522 of the baffle 232, and a position on the pipe 534 that is between the volumetric flow rate regulation valve 544 and the inlet 512 of the baffle 234. The volumetric flow rate regulation valve 558 is arranged in a middle of the pipe 556, and adjusts volumetric flow rate of coolant flowing through the pipe 556.

(An example of another embodiment)

In the present embodiment, as an example of when the baffle 232 has the double pipe structure, and coolant that flows in from a bottom of the baffle 232 flows out from the bottom of the baffle 232, and flows into the baffle 234 from a bottom of the baffle 234, an example of the polymerization apparatus 100 is described. However, the polymerization apparatus 100 is not limited to the present embodiment.

In another embodiment, pipes may be configured so that coolant that flows in from the bottom of the baffle 232 flows out from a top of the baffle 232, and flows into the baffle 234 from a top of the baffle 234. Further, in another embodiment, the baffle 232 may be a single layer pipe.

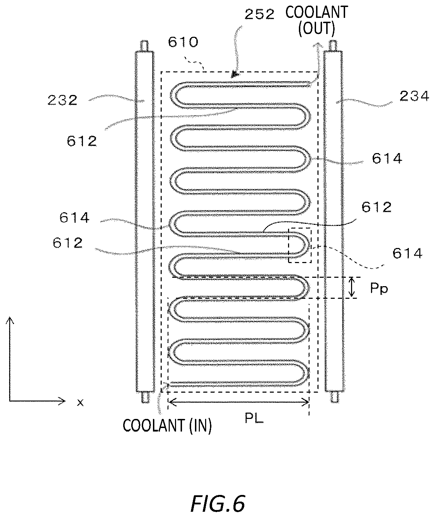

FIG. 6 schematically shows an example of structure of the serpentine cooling pipe 252. Another serpentine cooling pipe 140 and serpentine cooling pipe 150 may have a similar structure as that of the serpentine cooling pipe 252. As shown in FIG. 6, the serpentine cooling pipe 252 extends in the z direction while repeatedly bending. In the present embodiment, the serpentine cooling pipe 252 includes a serpentine portion 610. The serpentine portion 610 has a plurality of extending portions 612, and one or more bending portions 614.

In the serpentine cooling pipe 252 described in connection to FIG. 6, the serpentine portion 610 includes fifteen of the extending portions 612, and fourteen of the bending portions 614. The number of the extending portions 612 in a single serpentine portion 610 may be referred to as number of layers. As shown in FIG. 2, in the present embodiment, the serpentine cooling pipe 252 extends on the x-y plane in the extending portions 612, and bends in the z direction in the bending portions 614.

In the present embodiment, each of the plurality of extending portions 612 extends on substantially the same plane. For example, even when the extending portions 612 are designed to extend on the same plane, the extending portions 612 cannot extend on completely the same plane due to manufacturing error, installation error or the like. In such a case, it may be assumed that the extending portions 612 extend on substantially the same plane. When the extending portions 612 extend on substantially the same plane, it is noted that they are not limited by the above-described example.

In this respect, the serpentine cooling pipe 252 is different from a helical cooling pipe. Due to the serpentine cooling pipe 252 extending in a serpentine manner, compared to when the cooling pipe extending helically, surface area per installation area can increase.

As described in connection to FIG. 4, in the present embodiment, each of the plurality of extending portions 612 extend while curving on the x-y plane. A length PL in an extending direction of each of the plurality of extending portions 612 may be the same, and the length in the extending direction of at least two of the extending portions 612 may be different. In the present embodiment, the PL is a length of the extending portions 612 on the x-y plane. The PL may be the length of the extending portion 612 in an x-y plane that passes a center of a cross section of the extending portion 612 when the extending portion 612 is cut along a surface substantially perpendicular to the extending direction of the extending portion 612 (in this case, a surface substantially parallel to the z direction.).

As described above, the PL may be less than two-thirds of the length of the inner circumference of the straight body 312. In this respect, the serpentine cooling pipe 252 is different from the coiled cooling pipe described in Japanese Patent Application Publication No. H7-233206.

In a single serpentine portion 610, among the plurality of extending portions 612, the PL of more than one-half of the number of extending portions 612 may be less than two-thirds of the length of the inner circumference of the straight body 312. The above-described PL may be one-half or less of the length of the inner circumference of the straight body 312, may be less than one-half of the length of the inner circumference of the straight body 312, may be one-third or less of the length of the inner circumference of the straight body 312, may be less than one-third of the length of the inner circumference of the straight body 312, may be one-fourth or less of the length of the inner circumference of the straight body 312, may be less than one-fourth of the length of the inner circumference of the straight body 312, may be one-sixth or less of the length of the inner circumference of the straight body 312, and may be less than one-sixth of the length of the inner circumference of the straight body 312.

Among the plurality of extending portions 612, the PL of more than two-thirds of the number of extending portions 612 may be less than two-thirds of the length of the inner circumference of the straight body 312. The above-described PL may be one-half or less of the length of the inner circumference of the straight body 312, may be less than one-half of the length of the inner circumference of the straight body 312, may be one-third or less of the length of the inner circumference of the straight body 312, may be less than one-third of the length of the straight body 312, may be one-fourth or less of the length of the inner circumference of the straight body 312, may be less than one-fourth of the length of the inner circumference of the straight body 312, may be one-sixth or less of the length of the inner circumference of the straight body 312, and may be less than one-sixth of the length of the inner circumference of the straight body 312.

In one embodiment, at least one of the plurality of extending portions 612 extends while curving on substantially the same plane. For example, at least one of the plurality of extending portions 612 extends along an arc or an elliptical arc virtually arranged on the x-y plane. In another embodiment, at least one of the plurality of extending portions 612 extends linearly on substantially the same plane.

In the present embodiment, two of the plurality of extending portions 612 extend on two substantially parallel planes. For example, two adjacent extending portions 612 extend on two substantially parallel planes. Thus, the serpentine portion 610 that extends like a ladder is obtained. In another embodiment, two of the plurality of extending portions 612 may extend on two planes that are not parallel. For example, two adjacent extending portions 612 extend on two intersecting planes. Thus, the serpentine portion 610 that extends in a zigzag pattern is obtained.

In the present embodiment, each of the one or more bending portions 614 couples ends of two adjacent extending portions 612. In the embodiment shown in FIG. 6, each of the one or more bending portions 614 includes a portion that bends in the z direction. Thus, the serpentine portion 610 extends in the z direction while bending. A shape of the bending portions 614 is not limited in particular. A shape of a cross section (may be referred to as a longitudinal section.) of the bending portion 614 cut along a surface that is parallel to an extending direction of the serpentine cooling pipe 252 and is a surface that passes through a center of the bending portion 614 may have a shape that continuously bends, and may have a shape that is configured by a plurality of straight lines. As the shape that continuously bends, an arc shape or elliptical arc shape are exemplified. The bending portion 614 may be configured by a portion having the shape that continuously bends, and a portion having a shape configured by one or more straight lines.

A diameter of a flow channel of the serpentine cooling pipe 252 is not limited in particular, but the above-described diameter is preferably 10 to 200 mm. The number of extending portions 612 included in a single serpentine cooling pipe 252 (may be referred to as number of layers.) is not limited in particular, but the above-described number of layers is preferably 2 to 70. A size of a distance Pp between two adjacent extending portions 612 (may be referred to as pitch.) is not limited in particular, but the above-described Pp is preferably 60 mm or more. When the Pp is less than 60 mm, polymer scale may tend to adhere.

(An example of another embodiment)

In the present embodiment, as an example of when the serpentine cooling pipe 252 extends in the z direction while bending, the example of the serpentine cooling pipe 252 was described. However, the serpentine cooling pipe 252 is not limited to the present embodiment. In another embodiment, the serpentine cooling pipe 252 may extend in the x direction or the y direction while bending.

In the present embodiment, as an example of when the extending portions 612 extend on the x-y plane, and the bending portions 614 bending in the z direction, the example of the serpentine cooling pipe 252 was described. However, the serpentine cooling pipe 252 is not limited to the present embodiment. In another embodiment, the bending portion 614 may have a first bending portion that bends on the x-y plane, and a second bending portion that bends in the z direction.

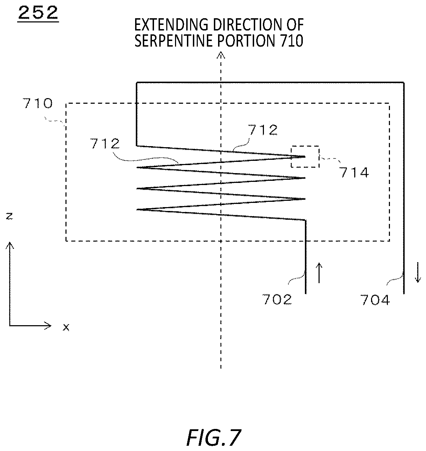

FIG. 7 schematically shows another example of structure of the serpentine cooling pipe 252. In the present embodiment, the serpentine cooling pipe 252 extends in the z direction while bending in a zigzag pattern. In the present embodiment, the serpentine cooling pipe 252 includes a supply pipe 702, an outlet pipe 704, and a serpentine portion 710. In the present embodiment, the serpentine portion 710 includes a plurality of extending portions 712, and one or more bending portions 714.

The supply pipe 702 allows coolant that is supplied to the serpentine portion 710 to circulate. The outlet pipe 704 allows coolant that flows out of the serpentine portion 710 to circulate. The serpentine portion 710 extends in the z direction while repeatedly bending.

The serpentine cooling pipe 252 described in connection to FIG. 7 is different from the serpentine cooling pipe 252 described in connection to FIG. 6 in that the plurality of extending portions 712 are not arranged substantially parallel. Regarding features other than the above-described difference, the serpentine cooling pipe 252 described in connection to FIG. 7 may have a similar configuration to that of the serpentine cooling pipe 252 described in connection to FIG. 6.

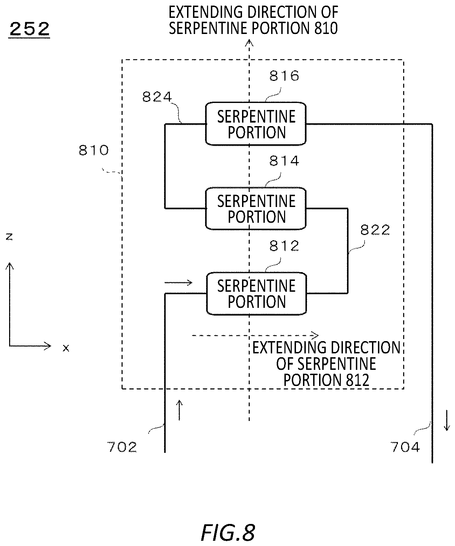

FIG. 8 schematically shows another example of structure of the serpentine cooling pipe 252. In the present embodiment, the serpentine cooling pipe 252 includes the supply pipe 702, the outlet pipe 704, and a serpentine portion 810. In the present embodiment, the serpentine portion 810 includes a serpentine portion 812, a coupling portion 822, a serpentine portion 814, a coupling portion 824, and a serpentine portion 816.

In the present embodiment, the serpentine portion 810 extends in the z direction while repeatedly bending. In the present embodiment, the serpentine portion 812 extends in the x direction while repeatedly bending. For example, the serpentine portion 812 extends in a positive x direction. In the present embodiment, the coupling portion 822 couples the serpentine portion 812 and the serpentine portion 814. In the present embodiment, the serpentine portion 814 extends in the x direction while repeatedly bending. For example, the serpentine portion 814 extends in a negative x direction. In the present embodiment, the coupling portion 824 couples the serpentine portion 814 and the serpentine portion 816. In the present embodiment, the serpentine portion 816 extends in the x direction while repeatedly bending. For example, the serpentine portion 814 extends in the positive x direction.

Each of the serpentine portion 812, the serpentine portion 814, and the serpentine portion 816 may have a similar configuration to that of the serpentine portion 610. For example, at least one of the serpentine portion 812, the serpentine portion 814, and the serpentine portion 816 includes a plurality of extending portions, and one or more bending portions. In this case, each of the plurality of extending portions may extend on the x-y plane, may extend on an x-z plane, and may extend on a y-z plane.

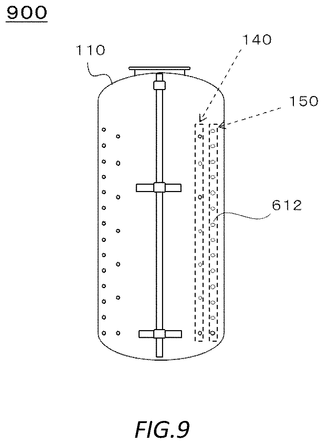

FIG. 9 schematically shows an example of a main part of a polymerization apparatus 900. The polymerization apparatus 900 is different from the polymerization apparatus 100 in that a pitch Pp of the serpentine cooling pipe 140 and a pitch Pp of the serpentine cooling pipe 150 are different. Regarding features other than the above-described difference, the polymerization apparatus 900 may have a similar configuration as that of the polymerization apparatus 100.

The pitch Pp of the serpentine cooling pipe 140 may be greater than the pitch Pp of the serpentine cooling pipe 150. For example, when viscosity of slurry flowing inside the reaction vessel 110 is relatively high, flow of said slurry becomes slow. When the flow of slurry becomes slow, scale tends to adhere to a surface of the serpentine cooling pipe 140, the serpentine cooling pipe 150, the straight body 312 or the like. As a case when the viscosity of slurry is relatively high, suspension polymerization of vinyl chloride is exemplified. Even in such a case, due to the serpentine cooling pipe 140 having a relatively large pitch Pp, discharge flow generated by the agitating blade 124 reaches the serpentine cooling pipe 150 and the straight body 312 while still having sufficient momentum. Thus, a state of flow nearby the serpentine cooling pipe 140, the serpentine cooling pipe 150, the straight body 312 or the like is improved, and adhering of scale is prevented.

(An example of another embodiment)

In another embodiment, the pitch Pp of the serpentine cooling pipe 140 may be less than the pitch Pp of the serpentine cooling pipe 150.

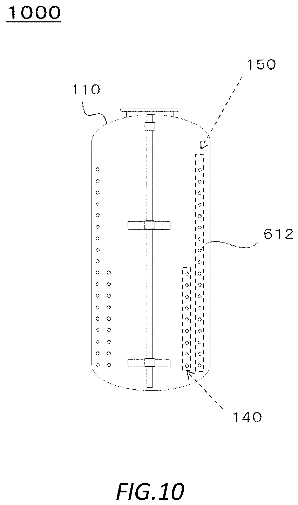

FIG. 10 schematically shows an example of a main part of a polymerization apparatus 1000. The polymerization apparatus 1000 is different from the polymerization apparatus 100 in that the number of layers of the serpentine cooling pipe 140 and the number of layers of the serpentine cooling pipe 150 are different. Regarding features other than the above-described difference, the polymerization apparatus 1000 may have a similar configuration as that of the polymerization apparatus 100. Within a scope not technically inconsistent, the polymerization apparatus 1000 may have features of various polymerization apparatus according to another embodiment.

In one embodiment, the number of layers of the serpentine cooling pipe 140 and the serpentine cooling pipe 150 are adjusted so that a position of the upper end of the serpentine cooling pipe 140 is lower than a position of the upper end of the serpentine cooling pipe 150. For example, when viscosity of slurry flowing inside the reaction vessel 110 is relatively high, scale tends to adhere in the gas-liquid interface and foaming tends to occur. As a case when the viscosity of slurry is relatively high, suspension polymerization of vinyl chloride is exemplified. When foaming in the gas-liquid interface intensifies, heat removal by the reflux condenser 180 is restricted. Even in such a case, due to suppressing a height of the upper end of the serpentine cooling pipe 140 that is arranged at a position closer to the agitating blade 124, flow of the gas-liquid interface becomes active, and slurry adhesion and foaming can be suppressed. The number of layers of the serpentine cooling pipe 140 is preferably adjusted so that the position of the upper end of the serpentine cooling pipe 140 is lower than the agitating blade 124 arranged in an uppermost layer.

(An example of another embodiment)

In another embodiment, the number of layers of the serpentine cooling pipe 140 and the serpentine cooling pipe 150 may be adjusted so that a position of a lower end of the serpentine cooling pipe 140 is higher than a position of a lower end of the serpentine cooling pipe 150. Further, in another embodiment, the number of layers of the serpentine cooling pipe 140 is adjusted so that the serpentine cooling pipe 140 does not interfere with rotation of the agitating blade 124.

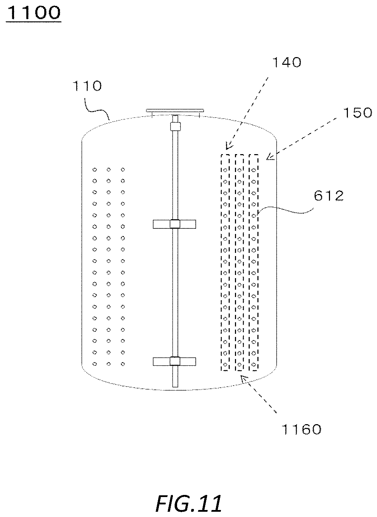

FIG. 11 schematically shows an example of a main part of a polymerization apparatus 1100. The polymerization apparatus 1100 is different from the polymerization apparatus 100 in that it includes a serpentine cooling pipe 1160 between the serpentine cooling pipe 140 and the serpentine cooling pipe 150. Regarding features other than the above-described difference, the polymerization apparatus 1100 may have a similar configuration as that of the polymerization apparatus 100. Within a scope not technically inconsistent, the polymerization apparatus 1100 may have features of various polymerization apparatus according to another embodiment.

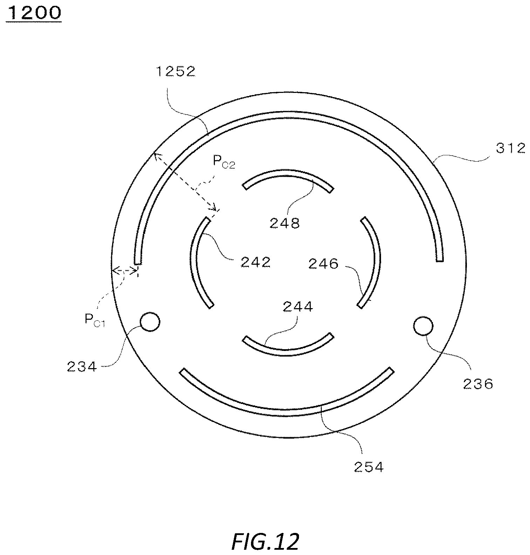

FIG. 12 schematically shows an example of a main part of a polymerization apparatus 1200. The polymerization apparatus 1200 is different from the polymerization apparatus 100 in that it includes a serpentine cooling pipe 1252 having a semicircular transverse section instead of the serpentine cooling pipe 252, the serpentine cooling pipe 256, and the serpentine cooling pipe 258. Regarding features other than the above-described difference, the polymerization apparatus 1200 may have a similar configuration as that of the polymerization apparatus 100. Within a scope not technically inconsistent, the polymerization apparatus 1200 may have features of various polymerization apparatus according to another embodiment.

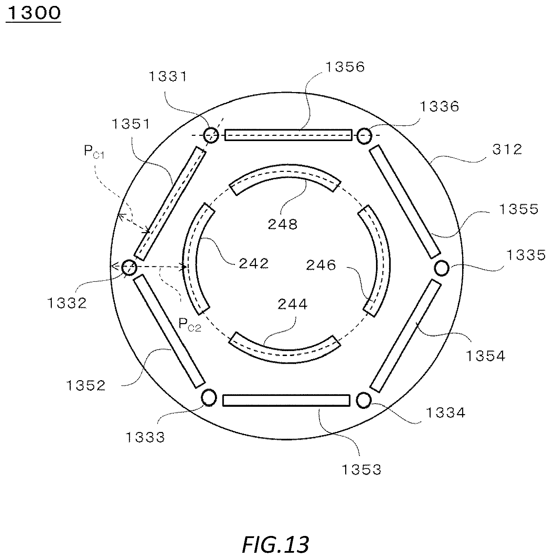

FIG. 13 schematically shows an example of a main part of a polymerization apparatus 1300. The polymerization apparatus 1300 is different from the polymerization apparatus 100 in that it includes the a serpentine cooling pipe 1351, a serpentine cooling pipe 1352, a serpentine cooling pipe 1353, a serpentine cooling pipe 1354, a serpentine cooling pipe 1355, and a serpentine cooling pipe 1356 including the extending portions 612 that extend linearly, instead of the serpentine cooling pipe 252, the serpentine cooling pipe 254, the serpentine cooling pipe 256, and the serpentine cooling pipe 258 including the extending portions 612 that extend while curving. The polymerization apparatus 1200 is different from the polymerization apparatus 100 in that it includes a baffle 1331, a baffle 1332, a baffle 1333, a baffle 1334, a baffle 1335, and a baffle 1336. Regarding features other than the above-described differences, the polymerization apparatus 1300 may have a similar configuration as that of the polymerization apparatus 100. Within a scope not technically inconsistent, the polymerization apparatus 1300 may have features of various polymerization apparatus according to another embodiment.

In the present embodiment, the serpentine cooling pipe 1351, the serpentine cooling pipe 1352, the serpentine cooling pipe 1353, the serpentine cooling pipe 1354, the serpentine cooling pipe 1355, and the serpentine cooling pipe 1355 are arranged at substantially symmetrical positions around the central axis of the reaction vessel 110 on sides of a virtual regular hexagon. The baffle 1331, the baffle 1332, the baffle 1333, the baffle 1334, the baffle 1335, and the baffle 1336 are arranged at local maximums of the above-described virtual regular hexagon.

According to the present embodiment, the number of the serpentine cooling pipes 140 and the number of the serpentine cooling pipes 150 are different. For example, the number of the serpentine cooling pipes 140 is less than the number of the serpentine cooling pipes 150. According to the present embodiment, the shape of the serpentine cooling pipes 140 and the shape of the serpentine cooling pipes 150 are not similar. For example, the extending portions 612 of the serpentine cooling pipes 140 extend while curving, and the extending portions 612 of the serpentine cooling pipes 150 extend linearly.

(An example of another embodiment)

In the present embodiment, as an example of when the baffle 1331, the baffle 1332, the baffle 1333, the baffle 1334, the baffle 1335, and the baffle 1336 are arranged at local maximums of the virtual regular hexagon, an example of the polymerization apparatus 1300 was described. However, the polymerization apparatus 1300 is not limited to the present embodiment.

In another embodiment, at least one of the baffle 1331, the baffle 1332, the baffle 1333, the baffle 1334, the baffle 1335, and the baffle 1336 may be arranged between the above-described virtual regular hexagon and the straight body 312.

Further, in another embodiment, at least one of the baffle 1331, the baffle 1332, the baffle 1333, the baffle 1334, the baffle 1335, and the baffle 1336 may be arranged between the above-described virtual regular hexagon and a virtual circle on which the serpentine cooling pipe 242, the serpentine cooling pipe 244, the serpentine cooling pipe 246, and the serpentine cooling pipe 248 are arranged.

According to the present embodiment, as an example of when the number of the serpentine cooling pipes 140 is less than the number of the serpentine cooling pipes 150, an example of the polymerization apparatus 1300 was described. However, the polymerization apparatus 1300 is not limited to the present embodiment. In another embodiment, the number of the serpentine cooling pipes 140 may be greater than the number of the serpentine cooling pipes 150.

According to the present embodiment, as an example of when the extending portions 612 of the serpentine cooling pipes 140 extend while curving and the extending portions 612 of the serpentine cooling pipes 150 extend linearly, an example of the polymerization apparatus 1300 was described. However, the polymerization apparatus 1300 is not limited to the present embodiment. In another embodiment, the extending portions 612 of the serpentine cooling pipes 140 may extend linearly and the extending portions 612 of the serpentine cooling pipes 150 may extend while curving.

(An example of another embodiment)

In the present embodiment, as an example of when a diameter of a virtual circle 1403 is greater than a diameter of a virtual circle 1404, and less than a diameter of the virtual circle 1405, an example of the polymerization apparatus 1300 was described. However, the polymerization apparatus 1300 is not limited to the present embodiment. In another embodiment, the diameter of the virtual circle 1403 may be less than the diameter of the virtual circle 1404. Further, in another embodiment, the diameter of the virtual circle 1403 may be greater than the diameter of the virtual circle 1405.

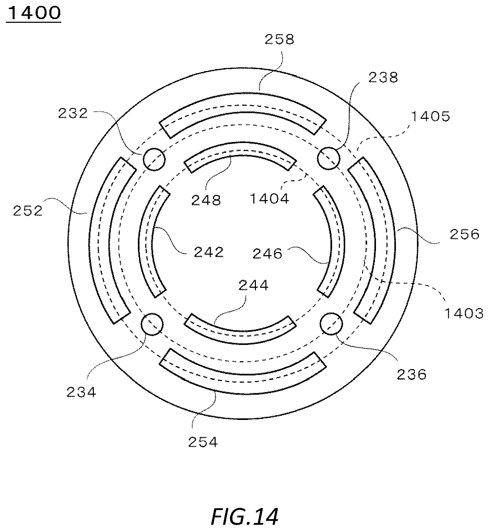

FIG. 14 schematically shows an example of a main part of a polymerization apparatus 1400. The polymerization apparatus 1400 is different from the polymerization apparatus 100 in that the virtual circle 1403 on which the baffle 232, the baffle 234, the baffle 236, and the baffle 238 are arranged is arranged between the virtual circle 1404 on which the serpentine cooling pipe 242, the serpentine cooling pipe 244, the serpentine cooling pipe 246, and the serpentine cooling pipe 248 are arranged, and the virtual circle 1405 on which the serpentine cooling pipe 252, the serpentine cooling pipe 254, the serpentine cooling pipe 256, and the serpentine cooling pipe 258 are arranged. Regarding features other than the above-described difference, the polymerization apparatus 1400 may have a similar configuration as that of the polymerization apparatus 100. Within a scope not technically inconsistent, the polymerization apparatus 1400 may have features of various polymerization apparatus according to another embodiment.

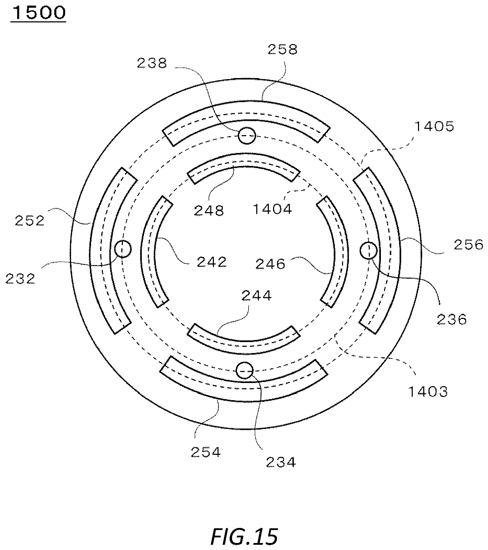

FIG. 15 schematically shows an example of a main part of a polymerization apparatus 1500. The polymerization apparatus 1500 is different from the polymerization apparatus 1400 in that the baffle 232 is arranged between the serpentine cooling pipe 242 and the serpentine cooling pipe 252, the baffle 234 is arranged between the serpentine cooling pipe 244 and the serpentine cooling pipe 254, the baffle 236 is arranged between the serpentine cooling pipe 246 and the serpentine cooling pipe 256, and the baffle 238 is arranged between the serpentine cooling pipe 248 and the serpentine cooling pipe 258. Regarding features other than the above-described difference, the polymerization apparatus 1500 may have a similar configuration as that of the polymerization apparatus 1400. Within a scope not technically inconsistent, the polymerization apparatus 1500 may have features of various polymerization apparatus according to another embodiment.

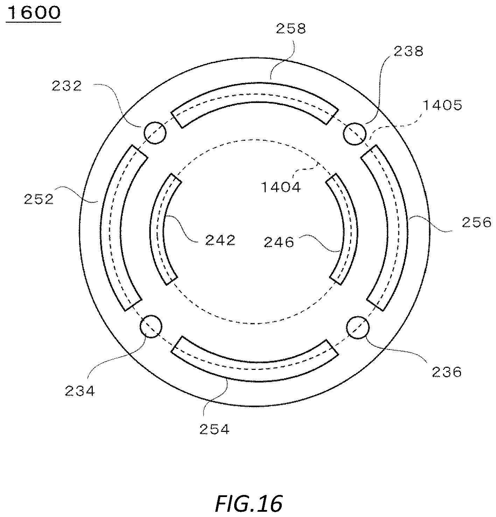

FIG. 16 schematically shows an example of a main part of a polymerization apparatus 1600. The polymerization apparatus 1600 is different from the polymerization apparatus 100 in that it does not include the serpentine cooling pipe 244 and the serpentine cooling pipe 248. Regarding features other than the above-described difference, the polymerization apparatus 1600 may have a similar configuration as that of the polymerization apparatus 100. Within a scope not technically inconsistent, the polymerization apparatus 1600 may have features of various polymerization apparatus according to another embodiment.

For example, when viscosity of slurry flowing inside the reaction vessel 110 is relatively high, there is the chance that slurry stagnates in a region between the serpentine cooling pipe 140 and the serpentine cooling pipe 150, when the serpentine cooling pipe 140 and the serpentine cooling pipe 150 are arranged in multiple layers in a radial direction of the straight body 312. As a case when the viscosity of slurry is relatively high, suspension polymerization of vinyl chloride is exemplified. Even in such a case, due to variation of the number of layers in the radial direction of the serpentine cooling pipe 140 and the serpentine cooling pipe 150, stagnation of the slurry is suppressed along a circumference direction of the straight body 312. As a result, mixing of the slurry is promoted.

FIG. 17 schematically shows an example of a main part of a polymerization system 1700. In the present embodiment, the polymerization system 1700 includes a polymerization apparatus 100 and a controller 1710. In the present embodiment, the polymerization system 1700 includes an agitation system 1702. The agitation system 1702 includes an agitation shaft 122, an agitating blade 1722, an agitating blade 1724, an agitating blade 1726, and a power mechanism 126. The polymerization apparatus 100 described in connection to FIG. 17 may have a configuration similar to that of the polymerization apparatus 100 described in connection to FIG. 1 except that the agitating blade 1722, the agitating blade 1724, and the agitating blade 1726 are provided instead of the plurality of agitating blades 124.

In the present embodiment, for sake of clarity, as an example of when three agitating blades of the agitating blade 1722, the agitating blade 1724, and the agitating blade 1726 are attached to the agitation shaft 122, an example of the polymerization system 1700 and the agitation system 1702 is described. However, the polymerization system 1700 and the agitation system 1702 are not limited to the present embodiment. In another embodiment, two agitating blades are attached to the agitation shaft 122 of the polymerization system 1700 and the agitation system 1702. Further, in another embodiment, in another embodiment, four or more agitating blades are attached to the agitation shaft 122 of the polymerization system 1700 and the agitation system 1702.

As described above, the agitation shaft 122 is rotatably arranged inside the reaction vessel 110. In particular, one part of the agitation shaft 122 is arranged inside the straight body 312 of the reaction vessel 110 and is configured to be rotatable. The agitation shaft 122 is attached to the reaction vessel 110 so that the extending direction of the agitation shaft 122 and the extending direction of the straight body 312 are substantially identical.

In the present embodiment, three agitating blades of the agitating blade 1722, the agitating blade 1724, and the agitating blade 1726 are attached to different positions of the agitation shaft 122 in the extending direction. The agitating blade 1722 is attached at the uppermost position among the plurality of agitating blades. The agitating blade 1724 is arranged between the agitating blade 1722 and the agitating blade 1726. The agitating blade 1726 is attached at the lowermost position among the plurality of agitating blades.

In the present embodiment, the agitation system 1702 agitates the liquid contained inside the reaction vessel 110 of the polymerization apparatus 100. Specifically, as the agitation shaft 122 rotates, the agitating blade 1722, the agitating blade 1724, and the agitating blade 1726 (may simply be referred to as a plurality of agitating blades.) attached to the agitation shaft 122 rotate, and as a result, the liquid contained inside the reaction vessel 110 is agitated.

In the present embodiment, the controller 1710 controls the number of rotations of the agitation shaft 122. The controller 1710 controls the number of rotations of the agitation shaft 122, for example, by controlling the output of the power mechanism 126. In the present embodiment, the controller 1710 controls the number of rotations of the agitation shaft 122, so that the number of rotations of the agitation shaft 122 satisfies the relationship represented by the following Expression 1.

(Expression 1)

$$N(b/d)(L/D)/n \leq 6.0$$

In Expression 1, N represents the number of a plurality of agitating blades attached to the agitation shaft 122. As described above, in the present embodiment, N is 3. b represents the maximum value [m] of the blade widths of the plurality of agitating blades. That is, b represents the blade width of the agitating blade having the greatest blade width among the agitating blade 1722, the agitating blade 1724, and the agitating blade 1726. d represents the maximum value [m] of the blade diameters of the plurality of agitating blades. That is, d represents the blade diameter of the agitating blade having the greatest blade diameter among the agitating blade 1722, the agitating blade 1724, and the agitating blade 1726.

L represents the length [m] of the straight body 312 of the reaction vessel 110 in the extending direction. When the straight body 312 is cut along a plurality of planes substantially perpendicular to the extending direction (up and down direction in the figure) of the straight body 312 and passing through respective attachment positions of the plurality of agitating blades, D represents the maximum value [m] of the diameters of a plurality of inscribed circles substantially inscribed in the straight body 312 in respective cross sections taken along the plurality of planes. When the reaction vessel 110 has the cylindrical straight body 312, D is the inner diameter [m] of the straight body 312. n represents the set value of the number of rotations [rps] of the agitation shaft 122.

Thus, generation of coarse particles can be suppressed. As a result, the particle size distribution of the polymer is narrowed. Generation of fish eyes can be suppressed. In addition, scale adhesion may be suppressed.

When liquid of approximately the rated capacity of the reaction vessel 110 is contained inside the reaction vessel 110, the parameter represented by the above-described $N(b/d)(L/D)/n$ represents the degree of agitating of said liquid. The above-described parameters may be referred to as agitating parameters.

In the present embodiment, the internal volume of the reaction vessel 110 may be 40 to 300 $m^3$. A ratio (L/D) of the length L of the straight body 312 in the extending direction to the diameter D of the inscribed circle of the straight body 312 of the reaction vessel 110 may be 1.0 to 3.0. Thus, it is possible to more reliably obtain the effect that the dimensions of the straight body 312 of the reaction vessel 110, the dimensions of at least one of the plurality of agitating blades 124, and the set value of the number of rotations of the agitation shaft 122 are decided so as to satisfy the relationship represented by Expression 1.

The controller 1710 preferably controls the number of rotations of the agitation shaft 122, so that the number of rotations of the agitation shaft 122 satisfies the relationship represented by the following Expression 2.

(Expression 2)

$$0.05 \le N(b/d)(L/D)/n \le 6.0$$

In Expression 2, the definitions of N, b, d, L, D, and n are similar to the definitions in Expression 1. Thus, generation of coarse particles is further suppressed. The particle size distribution of the polymer is further narrowed. Generation of fish eyes is further suppressed. In addition, scale adhesion is further suppressed.

When the polymerization apparatus 100 includes one or more serpentine cooling pipes 140 or one or more serpentine cooling pipes 150 (that is, when the number of series of serpentine cooling pipes in the radial direction of the straight body 312 is one or more), the controller 1710 preferably controls the number of rotations of the agitation shaft 122, so that the number of rotations of the agitation shaft 122 satisfies the relationship represented by the following Expression 3.

(Expression 3)

$$0.15 \le N(b/d)(L/D)/n \le 5.5$$

In Expression 3, the definitions of N, b, d, L, D, and n are similar to the definitions in Expression 1. Thus, generation of coarse particles is further suppressed. The particle size distribution of the polymer is further narrowed. Generation of fish eyes is further suppressed. In addition, scale adhesion is further suppressed.

When a structure such as a cooling pipe is arranged inside the reaction vessel 110, it is difficult to control the flow state of the liquid contained inside the reaction vessel 110 as compared to a case where no structure is arranged inside the reaction vessel 110. In particular, the serpentine cooling pipe 140 and the serpentine cooling pipe 150 have a complicated structure, and can interfere with agitating of the liquid in the extending direction of the straight body 312. Therefore, when the serpentine cooling pipe 140 or the serpentine cooling pipe 150 is arranged inside the reaction vessel 110, it is more difficult to control the agitation state of the liquid.

Therefore, when a structure such as a cooling pipe is arranged inside the reaction vessel 110, it is preferable to maintain the value of the agitating parameter within a narrower numerical range (that is, 0.15 to 5.5.) as compared to a case where no structure is arranged inside the reaction vessel 110. Even in a case where a structure such as a cooling pipe is arranged inside the reaction vessel 110, when the relationship represented by Expression 3 is established, a polymer having the same degree of quality as that in a case where a structure such as a cooling pipe is not arranged inside the reaction vessel 110 can be produced.

In this case, a proportion of the maximum value of the distance Pp between two adjacent extending portions 612 to the length L of the straight body 312 in the extending direction may be 0.5 to 15%. The proportion of the minimum value $P_{C1}$ of the distance between one or more serpentine cooling pipes 140 or one or more serpentine cooling pipes 150 and the inner wall surface of the straight body 312 to the inner diameter D of the straight body 312 may be 0.5 to 10%. The proportion of the maximum value $P_{C2}$ of the distance between one or more serpentine cooling pipes 140 or one or more serpentine cooling pipes 150 and the inner wall surface of the straight body 312 to the inner diameter D of the straight body 312 may be 1 to 30%.

When the polymerization apparatus 100 includes one or more serpentine cooling pipes 140 and one or more serpentine cooling pipes 150 (that is, when the number of series of serpentine cooling pipes in the radial direction of the straight body 312 is two or more), the controller 1710 preferably controls the number of rotations of the agitation shaft 122, so that the number of rotations of the agitation shaft 122 satisfies the relationship represented by the following Expression 4.

(Expression 4)

$$0.3 \le N(b/d)(L/D)/n \le 5.5$$

In Expression 4, the definitions of N, b, d, L, D, and n are similar to the definitions in Expression 1. Thus, generation of coarse particles is further suppressed. The particle size distribution of the polymer is further narrowed. Generation of fish eyes is further suppressed. In addition, scale adhesion is further suppressed. When the relationship represented by Expression 4 is established, an effect of suppressing generation of fish eyes is particularly pronounced.

As described above, the serpentine cooling pipe 140 and the serpentine cooling pipe 150 have a complicated structure, and can interfere with agitating of the liquid in the extending direction of the straight body 312. In particular, when the number of series of serpentine cooling pipes in the radial direction of the straight body 312 is two or more, the above-described degree of interference becomes pronounced.

Therefore, when the number of series of serpentine cooling pipes in the radial direction of the straight body 312 is two or more, it is preferable to maintain the value of the agitating parameter within a narrower numerical range (that is, 0.3 to 5.5.) as compared to a case where no structure is arranged inside the reaction vessel 110. Even in a case where the number of series of serpentine cooling pipes in the radial direction of the straight body 312 is two or more, when the relationship represented by Expression 4 is established, a polymer having the same degree of quality as that in a case where a structure such as a cooling pipe is not arranged inside the reaction vessel 110 can be produced.

In this case, a proportion of the maximum value of the distance Pp between two adjacent extending portions 612 to the length L of the straight body 312 in the extending direction may be 0.5 to 15%. The proportion of the minimum value L1 of the distance between one or more serpentine cooling pipes 140 or one or more serpentine cooling pipes 150 and the inner wall surface of the straight body 312 to the inner diameter D of the straight body 312 may be 0.5 to 10%. The proportion of the maximum value L2 of the distance between one or more serpentine cooling pipes 140 or one or more serpentine cooling pipes 150 and the inner wall surface of the straight body 312 to the inner diameter D of the straight body 312 may be 1 to 30%.

The polymerization system 1700 may be an example of a reactor apparatus. The polymerization system 1700 may be an example of a reactor apparatus of batch type. The agitation system 1702 may be an example of an agitation apparatus. The controller 1710 may be an example of a control unit or a control apparatus. The agitating blade 1722 may be an example of a first agitating blade. The agitating blade 1724 may be an example of a third agitating blade. The agitating blade 1726 may be an example of a second agitating blade. The power mechanism 126 may be an example of a drive unit.

FIG. 18 schematically shows an example of an attachment position of an agitating blade in the agitation shaft 122. In the present embodiment, as an example of when the agitating blade 1722, the agitating blade 1724, and the agitating blade 1726 all have the blade diameter di, and the agitating blade 1722, the agitating blade 1724, and the agitating blade 1726 all have the blade width bi, an example of the attachment position of the agitating blade in the agitation shaft 122 is described. In another embodiment, the blade diameters of at least two of the agitating blade 1722, the agitating blade 1724, and the agitating blade 1726 may have different. The blade widths of at least two of the agitating blade 1722, the agitating blade 1724, and the agitating blade 1726 may have different.

In FIG. 18, an alternate long and short dash line 1820 indicates the rotation axis of the agitation shaft 122. An alternate long and short dash line 1822 indicates the attachment position of the agitating blade 1722 on the agitation shaft 122. An alternate long and short dash line 1824 indicates the attachment position of the agitating blade 1724 on the agitation shaft 122. An alternate long and short dash line 1826 indicates the attachment position of the agitating blade 1726 on the agitation shaft 122.

In the present embodiment, the minimum value of distances between the attachment positions of the plurality of agitating blades in the agitation shaft 122 and the position of the agitation shaft 122 corresponding to one end of the straight body 312 may be 0.1 to 0.45 times the length L of the straight body 312 in the extending direction. For example, a distance Z between the attachment position of the agitating blade 1722 in the agitation shaft 122 and a position 1842 of the agitation shaft 122 corresponding to an upper end 1832 of the straight body 312 is set to 0.1 to 0.45 times the length L of the straight body 312 in the extending direction.

In the present embodiment, the agitating blade 1726 in the agitation shaft 122 is arranged between a first position 1852 of the agitation shaft 122 and a second position 1854 of the agitation shaft 122. The attachment position of the agitating blade 1726 in the agitation shaft 122 may be a position of a midpoint of the blade width of the agitating blade 1726 in the agitation shaft 122. In FIG. 18, the attachment position of the agitating blade 1726 is represented as an intersection of the alternate long and short dash line 1820 and the alternate long and short dash line 1826.

The first position 1852 is located above the second position 1854 when the agitation shaft 122 is attached to the straight body 312. The first position 1852 is located above a position 1844 of the agitation shaft 122 corresponding to a lower end 1834 of the straight body 312. A distance between the first position 1852 and the position 1844 of the agitation shaft 122 corresponding to the lower end 1834 of the straight body 312 may be 0.25 times or less the inner diameter D of the straight body 312.

When the agitation shaft 122 is attached to the straight body 312, the second position 1854 is located below the position 1844 of the agitation shaft 122 corresponding to the lower end 1834 of the straight body 312. A distance between the second position 1854 and the position 1844 of the agitation shaft 122 corresponding to the lower end 1834 of the straight body 312 may be 0.1 times or less the inner diameter D of the straight body 312.

In the present embodiment, the agitating blade 1724 is attached nearby (N-1) third positions obtained by equally dividing a distance between the attachment position of the agitating blade 1722 and the attachment position of the agitating blade 1726 into (N-1). In the present embodiment, since N = 3, the agitating blade 1724 is attached at a position obtained by equally dividing the distance between the attachment position of the agitating blade 1722 and the attachment position of the agitating blade 1726 into two. In this case, a distance $C_{ia}$ between the attachment position of the agitating blade 1722 and the attachment position of the agitating blade 1724 and a distance $C_{ib}$ between the attachment position of the agitating blade 1724 and the attachment position of the agitating blade 1726 are substantially identical.

A distance between the agitating blade 1724 and the above-described third position may be 0.5 times or less a ratio (D/N) of the inner diameter D of the straight body 312 to the number N of the plurality of agitating blades. When (N-2) agitating blades 1724 are arranged between the agitating blade 1722 and the agitating blade 1726, the maximum value of distances between (N-2) agitating blades 1724 and the corresponding third position may be 0.5 times or less the ratio (D/N) of the inner diameter D of the straight body 312 to the number N of the plurality of agitating blades.

One agitating blade 1724 may be an example of (N-2) third agitating blades. The attachment position of the agitating blade 1722 may be an example of a first attachment position. The attachment position of the agitating blade 1726 may be an example of a second attachment position.

FIG. 19 schematically shows an example of a system configuration of polymerization system 1900. In the present embodiment, the polymerization system 1900 includes a polymerization apparatus 100 and a controller 1910. In the present embodiment, the controller 1910 has an agitating control unit 1912 and an input control unit 1914. The polymerization apparatus 100 may have a configuration similar to that of the polymerization apparatus 100 described in connection to FIG. 1 or 17.

In the present embodiment, the polymerization system 1900 may include one or more monomer tanks 1922, one or more pumps 1932, and one or more flowmeters 1942. The polymerization system 1900 may include one or more aqueous media tanks 1924, one or more pumps 1934, and one or more flowmeters 1944. The polymerization system 1900 may include one or more dispersing aid tanks 1926, one or more pumps 1936, and one or more flowmeters 1946. The polymerization system 1900 may include one or more polymerization initiator tanks 1928, one or more pumps 1938, and one or more flowmeters 1948. Various tanks, pumps and/or flowmeters may be provided for each type of material and/or aids.

In the present embodiment, the controller 1910 controls the polymerization system 1900. For example, the controller 1910 controls the input amounts of various types of material and aids. The controller 1910 may control the timing at which various types of material and/or aids are input into the reaction vessel 110. The controller 1910 may control the temperature of the polymerizing system. The controller 1910 may control the agitation state of the polymerizing system.

In the present embodiment, the agitating control unit 1912 controls the agitation state of the polymerizing system. For example, the agitating control unit 1912 controls the number of rotations of the agitation shaft 122. The agitating control unit 1912 may have a configuration similar to that of the controller 1710 described in connection to FIG. 17. For example, the agitating control unit 1912 controls the number of rotations of the agitation shaft 122 so that the number of rotations of the agitation shaft 122 satisfies the relationship represented by Expression 1 described above.

In the present embodiment, the input control unit 1914 controls the amounts (may be referred to as an input amount) of various types of material and aids to be input into the reaction vessel 110 and the timing at which various types of material and/or aids are input into the reaction vessel 110. For sake of clarity, in the present embodiment, as an example of when the input control unit 1914 controls the mass of various types of material and aids to be input into the reaction vessel 110, an example of the input control unit 1914 is described.

The input control unit 1914 controls, for example, the mass of monomer to be input into reaction vessel 110. The input control unit 1914 may control start/stop of the pump 1932 based on the transfer amount of the monomer measured by the flowmeter 1942 and the input amount of the monomer set in advance.

The input control unit 1914 controls, for example, the mass of aqueous solvent to be input into the reaction vessel 110. The input control unit 1914 may control start/stop of the pump 1934 based on the transfer amount of the aqueous media measured by the flowmeter 1944 and the input amount of the aqueous media set in advance.

The input control unit 1914 controls, for example, the mass of dispersing aid to be input to the reaction vessel 110. The input control unit 1914 may control start/stop of the pump 1936 based on the transfer amount of the dispersing aid measured by the flowmeter 1946 and the input amount of the dispersing aid set in advance.

The input control unit 1914 decides the input amount of the dispersing aid, for example, according to the state of the cooling pipe arranged inside the reaction vessel 110. According to one embodiment, when the number Nc [units] of virtual circles in the reaction vessel 110 is 1, 2, or 3, the input control unit 1914 decides the input amount of the dispersing aid so that the above-described number Nc [units] of virtual circles and the above-described proportion CZ [mg/kg] satisfy the relationship represented by the above-described Expression A1, B1, C1, or D1. According to another embodiment, when the number Nc [units] of virtual circles in the reaction vessel 110 is 4 or more, the input control unit 1914 decides the input amount of the dispersing aid so that the above-described proportion CZ [mg/kg] satisfies the relationship represented by the above-described Expression A2, B2, C2, or D2.

The input control unit 1914 controls, for example, the mass of the polymerization initiator to be input to reaction vessel 110. The input control unit 1914 may control start/stop of the pump 1938 based on the transfer amount of the polymerization initiator measured by the flowmeter 1948 and the input amount of the polymerization initiator set in advance.

In the present embodiment, the monomer tank 1922 stores a monomer. The pump 1932 transfers the monomer from the monomer tank 1922 to the reaction vessel 110. Thus, the monomer is input into the reaction vessel 110. The pump 1932 may operate in accordance with an instruction of the input control unit 1914. The flowmeter 1942 measures the transfer amount of the monomer. The flowmeter 1942 may output information indicating the transfer amount of the monomer to the input control unit 1914. The monomer may be stored and transferred as a powder, and the monomer may be stored and transferred as a liquid.

In the present embodiment, the aqueous media tank 1924 stores an aqueous media. The pump 1934 transfers the aqueous media from the aqueous media tank 1924 to the reaction vessel 110. Thus, the aqueous media is input into the reaction vessel 110. The pump 1934 may operate in accordance with an instruction of the input control unit 1914. The flowmeter 1944 measures the transfer amount of the aqueous media. The flowmeter 1944 may output information indicating the transfer amount of the aqueous media to the input control unit 1914.

In the present embodiment, the dispersing aid tank 1926 stores a dispersing aid. The pump 1936 transfers the dispersing aid from the dispersing aid tank 1926 to the reaction vessel 110. Thus, the dispersing aid is input into the reaction vessel 110. The pump 1936 may operate in accordance with an instruction of the input control unit 1914. The flowmeter 1946 measures the transfer amount of the dispersing aid. The flowmeter 1946 may output information indicating the transfer amount of the dispersing aid to the input control unit 1914. The dispersing aid may be stored and transferred as a powder, and the dispersing aid may be stored and transferred as a liquid.

In the present embodiment, the polymerization initiator tank 1928 stores a polymerization initiator. The pump 1938 transfers the polymerization initiator from the polymerization initiator tank 1928 to the reaction vessel 110. Thus, the polymerization initiator is input into the reaction vessel 110. The pump 1938 may operate in accordance with an instruction of the input control unit 1914. The flowmeter 1948 measures the transfer amount of the polymerization initiator. The flowmeter 1948 may output information indicating the transfer amount of the polymerization initiator to the input control unit 1914. The polymerization initiator may be stored and transferred as a powder, and the polymerization initiator may be stored and transferred as a liquid.

The polymerization system 1900 may be an example of a reactor apparatus. The polymerization system 1900 may be an example of a reactor apparatus of batch type. The input control unit 1914 may be an example of a dispersing aid input unit. The pump 1936 may be an example of a dispersing aid input unit.

(An example of another embodiment)

In the present embodiment, as an example of when the input control unit 1914 controls the mass of various types of material and aids to be input into the reaction vessel 110, an example of the polymerization system 1900 was described. However, the polymerization system 1900 is not limited to the present embodiment. In another embodiment, the input amount of various types of material and aids may be the number of moles or may be a volume.

In the present embodiment, as an example of when the material and/or the aid are transferred by the pump, and the transfer amount of the material and/or aid is measured by the flowmeter, an example of the method for producing a polymer by a suspension polymerization method by using the polymerization system 1900 was described. In this case, the above-described producing method includes a material inputting step of inputting the vinyl-based monomer, the aqueous media, the dispersing aid, and the polymerization initiator into the reactor, and a polymerization step of polymerizing the vinyl-based monomer to produce the vinyl-based polymer. When the number Nc [units] of the plurality of virtual circles is 1, 2, or 3, the material inputting step includes a step of inputting the dispersing aid so that the number Nc [units] of the plurality of virtual circles and the proportion CZ [mg-dispersing aid/kg-monomer] of the mass of the dispersing aid to the mass of the vinyl-based monomer satisfy the relationship represented by Expression A1, B1, C1, or D1, or Expression A2, B2, C2, or D2 described above. However, the polymerization system 1900 is not limited to the present embodiment.

In another embodiment, first, the material and/or the aid is weighed so that the relationship represented by Expression A1, B1, C1, or D1 or Expression A2, B2, C2, or D2 described above is satisfied. At this time, the above-described weighing operation is controlled by the input control unit 1914, for example. Then, the weighed material and/or aid is input into the reaction vessel 110. Thus, the above-described number Nc [units] of virtual circles and the above-described proportion CZ [mg-dispersing aid/kg-monomer] satisfy the relationship represented by Expression A1, B1, C1, or D1, or Expression A2, B2, C2, or D2 described above.

Examples

Hereinafter, the present invention will be specifically described with reference to reference examples and examples. The present invention is not restricted by the following example.

(Reference examples and reference comparative examples)

As a reference example, a polymerization example is shown in which the number of rotations of the agitation shaft 122 in the polymerization apparatus 100 is decided so that the dimensions of the straight body of the reaction vessel 110, the dimensions of at least one of the plurality of agitating blades 124, and the set value of the number of rotations of the agitation shaft 122 satisfy the relationship represented by Expression 1 described above. As a reference comparative example, a polymerization example is shown in which the number of rotations of the agitation shaft 122 in the polymerization apparatus 100 is decided so that the dimensions of the straight body of the reaction vessel 110, the dimensions of at least one of the plurality of agitating blades 124, and the set value of the number of rotations of the agitation shaft 122 does not satisfy the relationship represented by Expression 1 described above.

(Polymerization conditions)

In reference examples 1 to 13 and reference comparative examples 1 to 5, a vinyl chloride polymer was produced by using deionized water, vinyl chloride monomer, and commercial reagent, and changing presence or absence of a serpentine cooling pipe inside the reaction vessel, arrangement of said serpentine cooling pipe, dimensions of the reaction vessel, and the number of rotations of the agitation shaft. In the reference examples 1 to 13 and the reference comparative examples 1 to 5, the polymerization temperature and the supply temperature of the coolant were the same. The above-described polymerization temperature was set based on a target K-value of the polymer.

(Evaluation)

(Evaluation relating to resin particles)

In each of the reference examples 1 to 10 and the reference comparative example 1, the particle size distribution of the produced polymer (may be referred to as resin particles) and the number of fish eyes were measured. As the particle size distribution of the polymer, mass% of resin particles passing through a 60-mesh sieve, mass% of resin particles passing through a 100-mesh sieve, and mass% of resin particles passing through a 200-mesh sieve were measured.
The number of fish eyes was measured according to the following procedure. First, 100 parts by mass of sample polymer, 50 parts by mass of bis (2-ethylhexyl) phthalate (DOP), 2.0 parts by mass of Ba/Zn-based stabilizer, 5.0 parts by mass of epoxidized soybean oil, 0.1 parts by mass of carbon black, and 0.5 parts by mass of titanium dioxide were mixed to obtain a compound. Then, the above-described compound of 50 g was kneaded with a roll mill at 145°C for six minutes and fractionated into a sheet having a thickness of 0.3 mm. Then, the number of fish eyes was measured by visually measuring the number of transparent particles in the above-described sheet of 100 cm$^2$.

(Evaluation relating to scale)

In each of the reference examples 1 to 10 and the reference comparative example 1, the polymerization test was repeated. After a predetermined number of times of the polymerization test ended, the surface of the inner wall surface of the reaction vessel was observed visually, and presence or absence of scale adhesion was confirmed. When the serpentine cooling pipe 140 and/or the serpentine cooling pipe 150 were arranged inside the reaction vessel, the surface of the serpentine cooling pipe 140 and/or the serpentine cooling pipe 150 was observed visually, and the presence or absence of scale adhesion was confirmed.

(Reference example 1)

(Specifications of the polymerization apparatus 100)

In the reference example 1, a vinyl chloride polymer was produced by using the polymerization apparatus 100 shown in FIG. 2. In the reference example 1, the reaction vessel 110 having an internal capacity of 80 m$^3$ was used. A diameter of the straight body 312 of the reaction vessel 110 was 3600 mm, and a length of the straight body 312 was 6800 mm. A ratio of the length L of the straight body 312 to the diameter D of the straight body 312 was 1.9.
Inside the reaction vessel 110, four serpentine cooling pipes 140 formed of an austenitic stainless steel cylindrical pipe having an outer diameter of 90 mm were arranged. A distance between a center of each of the four serpentine cooling pipes 140 and the central axis of the reaction vessel 110 was 1360 mm. The four serpentine cooling pipes 140 were arranged at symmetrical positions centered around the central axis of the reaction vessel 110. The number of layers of each of the four serpentine cooling pipes 140 was twelve layers. That is, each of the four serpentine cooling pipes 140 included twelve extending portions 612. In each of the four serpentine cooling pipes 140, a distance between adjacent extending portions 612 (may be referred to as pitch Pp.) was 400 mm.

The proportion of the distance $P_{C2}$ between the inner wall surface of the straight body 312 and the serpentine cooling pipe 140 to the diameter D of the straight body 312 was 12.2%. The proportion of the pitch Pp to the length L of the straight body 312 was 5.9%.

Similarly, inside the reaction vessel 110, four serpentine cooling pipes 150 formed of an austenitic stainless steel cylindrical pipe having an outer diameter of 90 mm were installed. A distance between a center of each of the four serpentine cooling pipes 150 and the central axis of the reaction vessel 110 was 1610 mm. The four serpentine cooling pipes 150 were arranged at symmetrical positions centered around the central axis of the reaction vessel 110. The number of layers of each of the four serpentine cooling pipes 150 was twelve layers. In each of the four serpentine cooling pipes 150, the pitch Pp was 400 mm.

The proportion of the distance L1 between the inner wall surface of the straight body 312 and the serpentine cooling pipe 150 to the diameter D of the straight body 312 was 5.3%. The proportion of the pitch Pp to the length L of the straight body 312 was 5.9%.

Then, the agitation shaft 122 to which three paddle blades were attached was installed in the reaction vessel 110. The number of rotations of the agitation shaft 122 was decided so as to satisfy the relationship of Expression 1 described above. In the reference example 1, the value of the agitating parameter represented by N(b/d)(L/D)/n was 0.22. The agitation energy added to the content of the reaction vessel 110 was within a range of 80 to 200 kgf·m/s·m$^3$.

(Polymerization method)

According to the following procedure, a vinyl chloride polymer was synthesized. First, 32,900 kg of deionized water, 10.5 kg of partially saponified polyvinyl alcohol with degree of saponification of 80.0 mol%, and 4.5 kg of hydroxypropylmethylcellulose with a degree of methoxy substitution of 28.5% by mass and a degree of hydroxypropyl substitution of 8.9% were made into an aqueous solution, and input inside the reaction vessel 110. Then, 30,100 kg of vinyl chloride monomer was prepared inside the reaction vessel 110. Then, while agitating the mixed solution with the agitator 120, a polymerization initiator A, a polymerization initiator B, and a polymerization initiator C were pressurized inside the reaction vessel 110 by a pump.

As the polymerization initiator A, an isoparaffin solution containing di-2-ethylhexyl peroxydicarbonate was used. An added amount of the di-2-ethylhexyl peroxydicarbonate was 22.1 kg. As the polymerization initiator B, an isoparaffin solution including t-butylperoxyneodecanate was used. An added amount of the t-butylperoxyneodecanate was 3.2 kg. As the polymerization initiator C, an isoparaffin solution including cumylperoxyneodecanate was used. An added amount of the cumylperoxyneodecanate was 5.0 kg.

Then, polymerization was started by passing hot water into the jacket 170, and increasing a temperature of the mixed solution inside the reaction vessel 110 to 57°C. At a time when the temperature of the mixed solution inside the reaction vessel 110 reached 57°C, passing of cooling water into the baffle 130, the serpentine cooling pipe 140, the serpentine cooling pipe 150, and the jacket 170 was started. Then, at a time when a polymerization conversion rate reached 20%, the reflux condenser 180 was operated.

Under conditions that maintain the temperature of the mixed solution inside the reaction vessel 110 at 57°C, at a time when pressure inside the reaction vessel 110 decreased by 0.09 MPa compared to an average pressure after polymerization was started, all cooling was stopped. 18 minutes after all cooling was stopped, an amount of triethylene glycol bis[3-(3-t-butyl-5-methyl-4-hydroxyphenyl)propionate] aqueous dispersion (concentration: 40% by mass) that is sufficient for stopping a polymerization reaction was input inside the reaction vessel 110. Thus, the polymerization reaction was ended, and the vinyl chloride polymer was obtained.

The particle size distribution of the synthesized vinyl chloride resin and the number of fish eyes were measured after the polymerization reaction ended.

In order to confirm an adhesion state of scale, the above-described polymerization test was set as one batch, and the above-described polymerization test was performed repeatedly. The adhesion state of scale inside the reaction vessel 110 was visually confirmed after the predetermined number of times of the polymerization test ended. Measurement results of the particle size distribution of vinyl chloride resin, a measurement result of the number of fish eyes, and a confirmation result of the adhesion state of scale are shown in Table 1.

(Reference examples 2 to 8)

A vinyl chloride polymer was synthesized by using the polymerization apparatus similar to the polymerization apparatus 100 shown in FIG. 2. In the reference examples 2 to 8, a vinyl chloride polymer was synthesized by a procedure similar to that in the reference example 1 except that there are differences in the dimensions of the reaction vessel 110, the number of rotations of the agitation shaft 122, and the preparation amount of raw material. In the reference examples 2 to 8, the stoichiometric ratio of each raw material and the reaction temperature were adjusted similarly to that in the reference example 1. Thus, based on the experimental results of the reference examples 1 to 8, a relationship between the relationship of the dimensions of the reaction vessel, the dimensions of the agitating blade, and the set value of the number of rotations of the agitation shaft, and the quality of the produced polymer can be considered.

An overview of specifications of the polymerization apparatus of the reference examples 2 to 8 is shown in Table 1. Measurement results of the particle size distribution of vinyl chloride resin, a measurement result of the number of fish eyes, and a confirmation result of the adhesion state of scale in the reference examples 2 to 8 are shown in Table 1.

(Reference example 9)

A vinyl chloride polymer was synthesized by using the polymerization apparatus similar to the polymerization apparatus 100 shown in FIG. 2 except that the serpentine cooling pipe 140 and the serpentine cooling pipe 150 were not provided. In the reference example 9, a vinyl chloride polymer was synthesized by a procedure similar to that in the reference example 1 except that there are differences in the dimensions of the reaction vessel 110, the presence or absence of the serpentine cooling pipe 140 and the serpentine cooling pipe 150, the number of rotations of the agitation shaft 122, and the preparation amount of raw material. In the reference example 9, the stoichiometric ratio of each raw material and the reaction temperature were adjusted similarly to that in the reference example 1. Thus, the influence of a structure arranged inside the reaction vessel can be considered.

An overview of specifications of the polymerization apparatus of the reference example 9 is shown in Table 2. Measurement results of the particle size distribution of vinyl chloride resin, a measurement result of the number of fish eyes, and a confirmation result of the adhesion state of scale in the reference example 9 are shown in Table 2.

(Reference examples 10 and 11)

A vinyl chloride polymer was synthesized by using the polymerization apparatus similar to the polymerization apparatus 100 shown in FIG. 2 except that the serpentine cooling pipe 140 was not provided. In the reference examples 10 and 11, a vinyl chloride polymer was synthesized by a procedure similar to that in the reference example 1 except that there are differences in the dimensions of the reaction vessel 110, the presence or absence of the serpentine cooling pipe 140, the number of rotations of the agitation shaft 122, and the preparation amount of raw material. In the reference examples 10 and 11, the stoichiometric ratio of each raw material and the reaction temperature were adjusted similarly to that in the reference example 1. Thus, the influence of a structure arranged inside the reaction vessel can be considered.

An overview of specifications of the polymerization apparatus of the reference examples 10 and 11 is shown in Table 2. Measurement results of the particle size distribution of vinyl chloride resin, a measurement result of the number of fish eyes, and a confirmation result of the adhesion state of scale in the reference examples 10 and 11 are shown in Table 2.

(Reference example 12)

A vinyl chloride polymer was synthesized by using the polymerization apparatus similar to the polymerization apparatus 100 shown in FIG. 2 except that the number of series of serpentine cooling pipes in the radial direction of the reaction vessel 110 increased three-fold. In the reference examples 10 and 11, a vinyl chloride polymer was synthesized by a procedure similar to that in the reference example 1 except that there are differences in the dimensions of the reaction vessel 110, the number of series of the serpentine cooling pipes, the number of rotations of the agitation shaft 122, and the preparation amount of raw material. In the reference example 12, the stoichiometric ratio of each raw material and the reaction temperature were adjusted similarly to that in the reference example 1. Thus, the influence of a structure arranged inside the reaction vessel can be considered.

An overview of specifications of the polymerization apparatus of the reference example 12 is shown in Table 2. Measurement results of the particle size distribution of vinyl chloride resin, a measurement result of the number of fish eyes, and a confirmation result of the adhesion state of scale in the reference example 12 are shown in Table 2.

(Reference example 13)

A vinyl chloride polymer was synthesized by using the polymerization apparatus similar to the polymerization apparatus 100 shown in FIG. 2 except that the number of series of serpentine cooling pipes in the radial direction of the reaction vessel 110 increased five-fold. In the reference example 13, a vinyl chloride polymer was synthesized by a procedure similar to that in the reference example 1 except that there are differences in the dimensions of the reaction vessel 110, the number of series of the serpentine cooling pipes, the number of rotations of the agitation shaft 122, and the preparation amount of raw material. In the reference example 13, the stoichiometric ratio of each raw material and the reaction temperature were adjusted similarly to that in the reference example 1. Thus, the influence of a structure arranged inside the reaction vessel can be considered.

An overview of specifications of the polymerization apparatus of the reference example 13 is shown in Table 2. Measurement results of the particle size distribution of vinyl chloride resin, a measurement result of the number of fish eyes, and a confirmation result of the adhesion state of scale in the reference example 13 are shown in Table 2.

(Reference comparative example 1)

A vinyl chloride polymer was synthesized by using the polymerization apparatus similar to the polymerization apparatus 100 used in the reference example 1 except that there are differences in the dimensions of the reaction vessel 110. In the reference comparative example 1, a vinyl chloride polymer was synthesized by a procedure similar to that in the reference example 1 except that there are differences in the dimensions of the reaction vessel 110, the dimensions of the agitating blade 124, and the number of rotations of the agitation shaft 122. In the reference comparative example 1, the stoichiometric ratio of each raw material and the reaction temperature were adjusted similarly to that in the reference example 1.

In the reference comparative example 1 and the reference example 1, the L/D of the reaction vessel 110 is different. Therefore, the flow state inside the reaction vessel 110 is different between the reference comparative example 1 and the reference example 1. As a result, in the reference comparative example 1 and the reference example 1, agitating conditions under which polymerization can be continued are also different. The agitating conditions in the reference comparative example 1 were decided by adjusting the value of b/d in Expression 1 and the set value of the number of rotations of the agitation shaft. As a result, the value of b/d in the reference comparative example 1 was greater than the value of b/d in the reference example 1. The value of the agitating parameter in the reference comparative example 1 was 6.44.

An overview of specifications of the polymerization apparatus of the reference comparative example 1 is shown in Table 3. Measurement results of the particle size distribution of vinyl chloride resin, a measurement result of the number of fish eyes, and a confirmation result of the adhesion state of scale in the reference comparative example 1 are shown in Table 3.

(Reference comparative examples 2 to 5)

A vinyl chloride polymer was synthesized by using the polymerization apparatus similar to the polymerization apparatus 100 used in the reference example 1 except that there are differences in the dimensions of the reaction vessel 110, and the arrangement and pitch width of the serpentine cooling pipe. In the reference comparative examples 2 to 5, a vinyl chloride polymer was synthesized by a procedure similar to that in the reference example 1 except that there are differences in the dimensions of the reaction vessel 110, the arrangement and pitch width of the serpentine cooling pipe, the dimensions of the agitating blade 124, the number of rotations of the agitation shaft 122, and the preparation amount of raw material. In the reference comparative examples 2 to 5, the stoichiometric ratio of each raw material and the reaction temperature were adjusted similarly to that in the reference example 1. In the reference comparative examples 2 to 5, the number of rotations of the agitation shaft 122 was decided so that the value of the agitating parameter exceeded 6.

An overview of specifications of the polymerization apparatus of the reference comparative examples 2 to 5 is shown in Table 3. Measurement results of the particle size distribution of vinyl chloride resin, a measurement result of the number of fish eyes, and a confirmation result of the adhesion state of scale in the reference comparative examples 2 to 5 are shown in Table 3.

The dimensions of the straight body of the reaction vessel 110, the dimensions of at least one of the plurality of agitating blades 124, and the set value of the number of rotations of the agitation shaft 122 are decided so that the value of the agitating parameter is 6.0 or less as shown by the result of the reference examples 1 to 13, whereby generation of coarse particles is suppressed, and a vinyl chloride resin having an excellent particle size distribution can be synthesized. It is also found that generation of fish eyes is greatly suppressed. Further, it is hardly possible to visually confirm generation of scale.

On the other hand, when the value of the agitating parameter exceeds 6.0 as shown in the reference comparative examples 1 to 5, coarse particles are generated, and a vinyl chloride resin having a relatively wide particle size distribution is synthesized. A large number of fish eyes are generated, and scale that can be easily visually confirmed is generated.

The cause of the above-described phenomenon is not clear, but for example, the following causes are estimated. That is, the flow state inside the reaction vessel 110 is affected by the LID of the reaction vessel 110, the structure and arrangement of the internal structures arranged inside the reaction vessel 110, or the like. For example, when the LID of the reaction vessel 110 increases, it is necessary to increase b in order to ensure the flowability of the fluid inside the reaction vessel 110. On the other hand, when b increases, it may be necessary to decrease the set value n of the number of rotations in order to maintain the magnitude of the agitation energy added to the raw material at approximately 80 to 200 kgf· m/s·m$^3$. At this time, when the relationship represented by Expression 1 or the like is not established, the flowability of the fluid inside the reaction vessel 110 becomes poor, and it is considered that a problem occurs in polymerization.

For a similar reason, when the influence of the internal structures arranged inside the reaction vessel 110 on the flow state increases, it becomes difficult to control the agitation state. For example, when the number of series of serpentine cooling pipes is two or more, it is difficult to control the agitation state. Even in such a case, it can be found that the dimensions of the straight body of the reaction vessel 110, the dimensions of at least one of the plurality of agitating blades 124, and the set value of the number of rotations of the agitation shaft 122 are decided so that the value of the agitating parameter is 0.3 to 5.5 as shown in the reference examples 3 to 7, whereby a high-quality vinyl chloride resin is synthesized even when the number of series of serpentine cooling pipes is two or more. In particular, it is found that a large effect of suppressing generation of fish eyes is obtained.

Table 1

| | | REFERENCE EXAMPLE 1 | REFERENCE EXAMPLE 2 | REFERENCE EXAMPLE 3 | REFERENCE EXAMPLE 4 | REFERENCE EXAMPLE 5 | REFERENCE EXAMPLE 6 | REFERENCE EXAMPLE 7 | REFERENCE EXAMPLE 8 |
|---|---|---|---|---|---|---|---|---|---|
| INTERNAL CAPACITY | [ m³ ] | 80 | 160 | 80 | 130 | 160 | 200 | 130 | 200 |
| NUMBER (N) OF LAYERS OF AGITATING BLADES | [ - ] | 3 | 3 | 3 | 3 | 3 | 3 | 3 | 3 |
| RATIO OF LENGTH (L) OF STRAIGHT BODY TO INNER DIAMETER (D) OF STRAIGHT BODY | [ - ] | 1.9 | 1.5 | 1.9 | 2.0 | 1.8 | 2.0 | 2.5 | 2.8 |
| ARRANGEMENT OF COOLING PIPES (NUMBER OF SERIES IN RADIAL DIRECTION OF STRAIGHT BODY) | [ - ] | TWO-LAYER ARRANGE-MENT | TWO-LAYER ARRANGE-MENT | TWO-LAYER ARRANGE-MENT | TWO-LAYER ARRANGE-MENT | TWO-LAYER ARRANGE-MENT | TWO-LAYER ARRANGE-MENT | TWO-LAYER ARRANGE-MENT | TWO-LAYER ARRANGE-MENT |
| AGITATING PARAMETER | [ s ] | 0.22 | 0.28 | 0.35 | 0.43 | 0.43 | 0.48 | 2.88 | 3.21 |
| PROPORTION OF CLEARANCE ($P_{C1}$) BETWEEN OUTER COOLING PIPE AND STRAIGHT BODY TO INNER DIAMETER (D) OF STRAIGHT BODY | [ % ] | 5.3 | 5.0 | 5.3 | 5.4 | 5.0 | 4.6 | 5.4 | 4.6 |
| PROPORTION OF CLEARANCE ($P_{C2}$) BETWEEN INNER COOLING PIPE AND STRAIGHT BODY TO INNER DIAMETER (D) OF STRAIGHT BODY | [ % ] | 12.2 | 10.6 | 12.2 | 11.3 | 10.6 | 9.7 | 11.3 | 9.7 |
| PROPORTION OF PITCH WIDTH (Pp) OF COOLING PIPE (SERPENTINE PIPE) TO LENGTH (L) OF STRAIGHT BODY | [ - ] | 5.9 | 4.8 | 6.0 | 5.1 | 4.8 | 4.1 | 5.1 | 4.1 |
| PARTICLE SIZE DISTRI-BUTION — PROPORTION OF RESIN PARTICLES PASSING THROUGH 60-MESH SIEVE | [ % ] | 100 | 100 | 100 | 100 | 100 | 100 | 100 | 100 |
| PARTICLE SIZE DISTRI-BUTION — PROPORTION OF RESIN PARTICLES PASSING THROUGH 100-MESH SIEVE | [ % ] | 46.6 | 41 | 51.1 | 26.3 | 34.6 | 29.8 | 37.3 | 31.2 |
| PARTICLE SIZE DISTRI-BUTION — PROPORTION OF RESIN PARTICLES PASSING THROUGH 200-MESH SIEVE | [ % ] | 1.6 | 1.1 | 1.4 | 0.7 | 0.3 | 0.5 | 0.4 | 0.8 |
| NUMBER OF FISH EYES | [ - ] | 3 | 4 | 1 | 2 | 1 | 2 | 2 | 6 |
| ADHESION STATE OF SCALE | [ - ] | A | A | A | A | A | A | A | A |

Table 2

| | | REFERENCE EXAMPLE 9 | REFERENCE EXAMPLE 10 | REFERENCE EXAMPLE 11 | REFERENCE EXAMPLE 12 | REFERENCE EXAMPLE 13 |
|---|---|---|---|---|---|---|
| INTERNAL CAPACITY | [ $m^3$ ] | 40 | 40 | 130 | 130 | 160 |
| NUMBER (N) OF LAYERS OF AGITATING BLADES | [ - ] | 3 | 3 | 3 | 4 | 5 |
| RATIO OF LENGTH (L) OF STRAIGHT BODY TO INNER DIAMETER (D) OF STRAIGHT BODY | [ - ] | 1.9 | 1.0 | 1.8 | 2.5 | 2.8 |
| ARRANGEMENT OF COOLING PIPES (NUMBER OF SERIES IN RADIAL DIRECTION OF STRAIGHT BODY) | [ - ] | NONE | ONE-LAYER ARRANGE-MENT | ONE-LAYER ARRANGE-MENT | THREE-LAYER ARRANGE-MENT | FIVE-LAYER ARRANGE-MENT |
| AGITATING PARAMETER | [ s ] | 0.24 | 0.14 | 0.24 | 2.21 | 5.26 |
| PROPORTION OF CLEARANCE ($P_{c1}$) BETWEEN OUTER COOLING PIPE AND STRAIGHT BODY TO INNER DIAMETER (D) OF STRAIGHT BODY | [ % ] | - | 5.7 | 5.4 | 9.5 | 0.9 |
| PROPORTION OF CLEARANCE ($P_{c2}$) BETWEEN INNER COOLING PIPE AND STRAIGHT BODY TO INNER DIAMETER (D) OF STRAIGHT BODY | [ % ] | - | - | - | 28.6 | 4.4 |
| PROPORTION OF PITCH WIDTH (Pp) OF COOLING PIPE (SERPENTINE PIPE) TO LENGTH (L) OF STRAIGHT BODY | [ - ] | - | 12.3 | 5.1 | 3.2 | 7.3 |
| PARTICLE SIZE DISTRI-BUTION | PROPORTION OF RESIN PARTICLES PASSING THROUGH 60-MESH SIEVE [ % ] | 100 | 100 | 100 | 100 | 100 |
| | PROPORTION OF RESIN PARTICLES PASSING THROUGH 100-MESH SIEVE [ % ] | 72.8 | 71.1 | 75.1 | 33.6 | 23 |
| | PROPORTION OF RESIN PARTICLES PASSING THROUGH 200-MESH SIEVE [ % ] | 0.5 | 0.7 | 0.6 | 0.3 | 0 |
| NUMBER OF FISH EYES | [ - ] | 0 | 2 | 1 | 5 | 5 |
| ADHESION STATE OF SCALE | [ - ] | A | A | A | A | A |

Table 3

| | | REFERENCE COMPARATIVE EXAMPLE 1 | REFERENCE COMPARATIVE EXAMPLE 2 | REFERENCE COMPARATIVE EXAMPLE 3 | REFERENCE COMPARATIVE EXAMPLE 4 | REFERENCE COMPARATIVE EXAMPLE 5 |
|---|---|---|---|---|---|---|
| INTERNAL CAPACITY | [ $m^3$ ] | 80 | 130 | 160 | 200 | 80 |
| NUMBER (N) OF LAYERS OF AGITATING BLADES | [ - ] | 5 | 4 | 3 | 6 | 5 |
| RATIO OF LENGTH (L) OF STRAIGHT BODY TO INNER DIAMETER (D) OF STRAIGHT BODY | [ - ] | 3.5 | 3.0 | 2.5 | 2.0 | 1.9 |
| ARRANGEMENT OF COOLING PIPES (NUMBER OF SERIES IN RADIAL DIRECTION OF STRAIGHT BODY) | [ - ] | TWO-LAYER ARRANGE-MENT | THREE-LAYER ARRANGE-MENT | TWO-LAYER ARRANGE-MENT | FIVE-LAYER ARRANGE-MENT | FIVE-LAYER ARRANGE-MENT |
| AGITATING PARAMETER | [ s ] | 6.44 | 6.31 | 6.69 | 6.20 | 6.97 |
| PROPORTION OF CLEARANCE ($P_{c1}$) BETWEEN OUTER COOLING PIPE AND STRAIGHT BODY TO INNER DIAMETER (D) OF STRAIGHT BODY | [ % ] | 6.0 | 3.5 | 7.8 | 2.0 | 12.5 |
| PROPORTION OF CLEARANCE ($P_{c2}$) BETWEEN INNER COOLING PIPE AND STRAIGHT BODY TO INNER DIAMETER (D) OF STRAIGHT BODY | [ % ] | 12.9 | 10.7 | 8.9 | 22.4 | 26 |
| PROPORTION OF PITCH WIDTH (Pp) OF COOLING PIPE (SERPENTINE PIPE) TO LENGTH (L) OF STRAIGHT BODY | [ - ] | 3.7 | 7.5 | 9.7 | 6.1 | 5.1 |
| PARTICLE SIZE DISTRI-BUTION | PROPORTION OF RESIN PARTICLES PASSING THROUGH 60-MESH SIEVE [ % ] | 89.9 | 84.4 | 80.3 | CANNOT CONTINUE | CANNOT CONTINUE |
| | PROPORTION OF RESIN PARTICLES PASSING THROUGH 100-MESH SIEVE [ % ] | 13.5 | 8.8 | 11.8 | | |
| | PROPORTION OF RESIN PARTICLES PASSING THROUGH 200-MESH SIEVE [ % ] | 1.4 | 0 | 1.3 | | |
| NUMBER OF FISH EYES | [ - ] | 35 | 40 | 42 | | |
| ADHESION STATE OF SCALE | [ - ] | C | B | C | | |

(Examples and comparative examples)

As an example, a polymerization example is shown in which the above-described number Nc [units] of virtual circles is 1, 2, or 3, and the above-described number Nc [units] of virtual circles and the proportion CZ [mg-dispersing aid/kg-monomer] of the mass of the dispersing aid to the mass of the material solution satisfy the relationship represented by the Expression A1 described above. As a comparative example, a polymerization example is shown in which the above-described number Nc of virtual circles is 1, 2, or 3, and the above-described number Nc of virtual circles and the above-described proportion CZ do not satisfy the relationship represented by the Expression A1 described above.

In the examples and the comparative examples, the physical properties of resin particles and the amount of scale adhering to the inside of the reactor apparatus are evaluated by using as an indicator, the proportion of the mass of the dispersing aid to the mass of the monomer. Therefore, in the description of the examples and the comparative examples, the description of specific numerical values of the mass of the monomer and the mass of the dispersing aid is omitted. However, persons skilled in the art who are in contact with the description of the present specification can manufacture or use the polymerization apparatus according to the present embodiment based on the description of the examples and the comparative examples without requiring excessive trial and error. The dispersing aids and buffers may be referred to simply as aids.

(Examples 1 to 3)

A vinyl chloride polymer was synthesized by using the polymerization apparatus configured similarly to the polymerization apparatus used in the reference example 6 except that the "arrangement of cooling pipes" was "one-layer arrangement". In the above-described polymerization apparatus, four serpentine cooling pipes arranged in a single layer in the radial direction were arranged inside the reaction vessel 110.

In the examples 1 to 3, a vinyl chloride polymer was produced by changing the added amount of the dispersing aid. In the example 1, a vinyl chloride polymer was synthesized by a procedure similar to that in the reference example 6 except that there are differences in the composition and the added amount of the dispersing aid and that commercial citric acid was added as the buffer. In the examples 2 and 3, a vinyl chloride polymer was synthesized by a procedure similar to that in the reference example 6 except that there are differences in the composition and the added amount of the dispersing aid.

In the examples 1 to 3, the polymerization temperature and the supply temperature of the coolant were the same. The above-described polymerization temperature was set based on a target K-value of the polymer. The target K-value of the polymer was decided based on the desired average degree of polymerization of the polymer. A mixture of partially saponified polyvinyl alcohol (PVA) and hydroxypropylmethylcellulose (HPMC) was used as the dispersing aid. The composition and the added amount of the dispersing aid and the added amount of the buffer in the examples 1 to 3 are shown in Table 4.

(Comparative examples 1 and 2)

A vinyl chloride polymer was synthesized by using the polymerization apparatus same as the polymerization apparatus used in the example 1. In the comparative example 1, a vinyl chloride polymer was synthesized by a procedure similar to that in the example 1 except that there are differences in the added amount of each dispersing aid and that no buffer was added. In the comparative example 2, a vinyl chloride polymer was synthesized by a procedure similar to that in the example 3 except that there are differences in the added amount of each dispersing aid and that commercial citric acid was added as the buffer. The composition and the added amount of the dispersing aid and the added amount of the buffer in the comparative examples 1 and 2 are shown in Table 4.

Table 4

| | | | EXAMPLE 1 | EXAMPLE 2 | EXAMPLE 3 | COMPARATIVE EXAMPLE 1 | COMPARATIVE EXAMPLE 2 |
|---|---|---|---|---|---|---|---|
| ARRANGEMENT OF COOLING PIPES (NUMBER OF SERIES IN RADIAL DIRECTION OF STRAIGHT BODY) | | [ - ] | ONE-LAYER ARRANGEMENT | ONE-LAYER ARRANGEMENT | ONE-LAYER ARRANGEMENT | ONE-LAYER ARRANGEMENT | ONE-LAYER ARRANGEMENT |
| TOTAL VALUE (CZ) OF ADDED AMOUNTS OF DISPERSING AID | | [ ppm ] | 340 | 1200 | 1950 | 310 | 2200 |
| ADDED AMOUNT OF PARTIALLY SAPONIFIED PVA | | [ ppm ] | 260 | 1105 | 1590 | 235 | 1800 |
| ADDED AMOUNT OF HPMC | | [ ppm ] | 80 | 95 | 360 | 75 | 400 |
| ADDED AMOUNT OF BUFFER | | [ ppm ] | 175 | - | - | - | 250 |
| COMPOSITION OF PARTIALLY SAPONIFIED PVA | DEGREE OF SAPONIFICATION : PVA of 76 ~ 90 mol % | | O | O | - | O | - |
| | DEGREE OF SAPONIFICATION : PVA of 65 ~ 75 mol % | | - | - | O | - | O |
| | DEGREE OF SAPONIFICATION : PVA of 25 ~ 60 mol % | | O | O | O | O | O |

In Table 4, "O" indicates that said aid is added, and "-" indicates that said aid is not added. In the example 1, the example 2 and the comparative example 1, the composition of partially saponified PVA was the same. In the example 3 and the comparative example 2, the composition of partially saponified PVA was the same.

(Examples 4 to 6)

A vinyl chloride polymer was synthesized by using the polymerization apparatus configured similarly to the polymerization apparatus used in the reference example 6. In the above-described polymerization apparatus, as shown in FIG. 2, eight serpentine cooling pipes arranged in two layers in the radial direction were arranged inside the reaction vessel 110.

In the examples 4 to 6, a vinyl chloride polymer was produced by changing the added amount of the dispersing aid. In the examples 4 and 6, a vinyl chloride polymer was synthesized by a procedure similar to that in the reference example 6 except that there are differences in the composition and the added amount of the dispersing aid and that commercial citric acid was added as the buffer. In the example 5, a vinyl chloride polymer was synthesized by a procedure similar to that in the reference example 6 except that there are differences in the composition and the added amount of the dispersing aid.

In the examples 4 to 6, the polymerization temperature and the supply temperature of the coolant were the same as those in the example 1. As described above, the above-described polymerization temperature was set based on the target K-value of the polymer. The composition and the added amount of the dispersing aid and the added amount of the buffer in the examples 4 to 6 are shown in.

(Comparative examples 3 and 4)

A vinyl chloride polymer was synthesized by using the polymerization apparatus same as the polymerization apparatus used in the example 4. In the comparative example 3, a vinyl chloride polymer was synthesized by a procedure similar to that in the example 4 except that there are differences in the added amount of each aid. In the comparative example 4, a vinyl chloride polymer was synthesized by a procedure similar to that in the example 6 except that there are differences in the added amount of each dispersing aid and that no buffer was added. The composition and the added amount of the dispersing aid and the added amount of the buffer in the comparative examples 3 and 4 are shown in Table 5.

Table 5

|  |  | EXAMPLE 4 | EXAMPLE 5 | EXAMPLE 6 | COMPARATIVE EXAMPLE 3 | COMPARATIVE EXAMPLE 4 |
|---|---|---|---|---|---|---|
| ARRANGEMENT OF COOLING PIPES (NUMBER OF SERIES IN RADIAL DIRECTION OF STRAIGHT BODY) | [ - ] | TWO-LAYER ARRANGEMENT | TWO-LAYER ARRANGEMENT | TWO-LAYER ARRANGEMENT | TWO-LAYER ARRANGEMENT | TWO-LAYER ARRANGEMENT |
| TOTAL VALUE (CZ) OF ADDED AMOUNTS OF DISPERSING AID | [ ppm ] | 360 | 1300 | 2110 | 320 | 2400 |
| ADDED AMOUNT OF PARTIALLY SAPONIFIED PVA | [ ppm ] | 275 | 1200 | 1720 | 240 | 1960 |
| ADDED AMOUNT OF HPMC | [ ppm ] | 85 | 100 | 390 | 80 | 440 |
| ADDED AMOUNT OF BUFFER | [ ppm ] | 150 | - | 375 | 100 | - |
| COMPOSITION OF PARTIALLY SAPONIFIED PVA | DEGREE OF SAPONIFICATION : PVA of 76 ~ 90 mol % | O | O | - | O | - |
|  | DEGREE OF SAPONIFICATION : PVA of 65 ~ 75 mol % | - | - | O | - | O |
|  | DEGREE OF SAPONIFICATION : PVA of 25 ~ 60 mol % | O | O | O | O | O |

In Table 5, "O" indicates that said aid is added, and "-" indicates that said aid is not added. In the example 4, the example 5 and the comparative example 3, the composition of partially saponified PVA was the same. In the example 6 and the comparative example 4, the composition of partially saponified PVA was the same.

(Examples 7 to 9)

A vinyl chloride polymer was synthesized by using the polymerization apparatus configured similarly to the polymerization apparatus used in the reference example 6 except that the "arrangement of cooling pipes" was "three-layer arrangement". In the above-described polymerization apparatus, twelve serpentine cooling pipes arranged in three layers in the radial direction were arranged inside the reaction vessel 110.

In the examples 7 to 9, a vinyl chloride polymer was produced by changing the added amount of the dispersing aid. In the example 7, a vinyl chloride polymer was synthesized by a procedure similar to that in the reference example 6 except that there are differences in the composition and the added amount of the dispersing aid. In the examples 8 and 9, a vinyl chloride polymer was synthesized by a procedure similar to that in the reference example 6 except that there are differences in the composition and the added amount of the dispersing aid and that commercial citric acid was added as the buffer.

In the examples 7 to 9, the polymerization temperature and the supply temperature of the coolant were the same as those in the example 1. As described above, the above-described polymerization temperature was set based on the target K-value of the polymer. The composition and the added amount of the dispersing aid and the added amount of the buffer in the examples 7 to 9 are shown in Table 6.

(Comparative examples 5 and 6)

A vinyl chloride polymer was synthesized by using the polymerization apparatus same as the polymerization apparatus used in the example 7. In the comparative example 5, a vinyl chloride polymer was synthesized by a procedure similar to that in the example 7 except that there are differences in the added amount of partially saponified PVA. In the comparative example 6, a vinyl chloride polymer was synthesized by a procedure similar to that in the example 9 except that there are differences in the added amount of each aid. The composition and the added amount of the dispersing aid and the added amount of the buffer in the comparative examples 5 and 6 are shown in Table 6.

Table 6

| ARRANGEMENT OF COOLING PIPES (NUMBER OF SERIES IN RADIAL DIRECTION OF STRAIGHT BODY) | | [ - ] | EXAMPLE 7 THREE-LAYER ARRANGEMENT | EXAMPLE 8 THREE-LAYER ARRANGEMENT | EXAMPLE 9 THREE-LAYER ARRANGEMENT | COMPARATIVE EXAMPLE 5 THREE-LAYER ARRANGEMENT | COMPARATIVE EXAMPLE 6 THREE-LAYER ARRANGEMENT |
|---|---|---|---|---|---|---|---|
| TOTAL VALUE (CZ) OF ADDED AMOUNTS OF DISPERSING AID | | [ ppm ] | 370 | 1420 | 2310 | 340 | 2600 |
| ADDED AMOUNT OF PARTIALLY SAPONIFIED PVA | | [ ppm ] | 285 | 1305 | 1880 | 255 | 2130 |
| ADDED AMOUNT OF HPMC | | [ ppm ] | 85 | 115 | 430 | 85 | 470 |
| ADDED AMOUNT OF BUFFER | | [ ppm ] | - | 75 | 400 | - | 500 |
| COMPOSITION OF PARTIALLY SAPONIFIED PVA | DEGREE OF SAPONIFICATION : PVA of 76 ~ 90 mol % | | O | O | - | O | - |
| | DEGREE OF SAPONIFICATION : PVA of 65 ~ 75 mol % | | - | - | O | - | O |
| | DEGREE OF SAPONIFICATION : PVA of 25 ~ 60 mol % | | O | O | O | O | O |

In Table 6, "O" indicates that said aid is added, and "-" indicates that said aid is not added. In the example 7, the example 8 and the comparative example 5, the composition of partially saponified PVA was the same. In the example 9 and the comparative example 6, the composition of partially saponified PVA was the same.

(Evaluation)

(Evaluation relating to resin particles)

In each of the examples 1 to 9 and the comparative examples 1 to 6, the apparent density and the particle size distribution of the produced polymer (may be referred to as resin particles), the number of fish eyes, and drying loss were measured. The apparent density of the resin particles was measured according to JIS K 7365. As the particle size distribution of the polymer, mass% of resin particles passing through a 60-mesh sieve, mass% of resin particles passing through a 100-mesh sieve, and mass% of resin particles passing through a 200-mesh sieve were measured.

The number of fish eyes was measured according to the following procedure. First, 100 parts by mass of sample polymer, 50 parts by mass of bis (2-ethylhexyl) phthalate (DOP), 2.0 parts by mass of Ba/Zn-based stabilizer, 5.0 parts by mass of epoxidized soybean oil, 0.1 parts by mass of carbon black, and 0.5 parts by mass of titanium dioxide were mixed to obtain a compound. Then, the above-described compound of 50 g was kneaded with a roll mill at 145°C for six minutes and fractionated into a sheet having a thickness of 0.3 mm. Then, the number of fish eyes was measured by visually measuring the number of transparent particles in the above-described sheet of 100 cm$^2$.

The drying loss was measured according to the test method specified in Japanese Pharmacopoeia 18th Edition (June 7, 2021, the MHLW Ministerial Notification No. 220). Specifically, 1 g of resin particles was weighed and dried at 105°C for four hours. The resin particles after drying were contained in a desiccator using silica gel and allowed to cool to the room temperature. The mass of the resin particles after cooling was measured, and the proportion of the loss due to drying to the mass of the resin particles before drying was calculated.

(Evaluation relating to scale)

In each of the examples 1 to 9 and the comparative examples 1 to 6, after the polymerization test ended, the surface of the inner wall surface of the reaction vessel was observed visually, and presence or absence of scale adhesion was confirmed.

Results of evaluation relating to the examples 1 to 3 and the comparative examples 1 and 2 are shown in Table 7. Results of evaluation relating to the examples 4 to 6 and the comparative examples 3 and 4 are shown in Table 8. Results of evaluation relating to the examples 7 to 9 and the comparative examples 5 and 6 are shown in Table 9.

[Table 7]

| | | | EXAMPLE 1 | EXAMPLE 2 | EXAMPLE 3 | COMPARATIVE EXAMPLE 1 | COMPARATIVE EXAMPLE 2 |
|---|---|---|---|---|---|---|---|
| APPARENT DENSITY OF RESIN PARTICLES | | [ g/ml ] | 0.579 | 0.546 | 0.512 | 0.581 | 0.486 |
| PARTICLE SIZE DISTRI-BUTION | PROPORTION OF RESIN PARTICLES PASSING THROUGH 60-MESH SIEVE | [ % ] | 100 | 100 | 100 | 97.9 | 100 |
| | PROPORTION OF RESIN PARTICLES PASSING THROUGH 100-MESH SIEVE | [ % ] | 26.0 | 35.3 | 70.8 | 14.3 | 78.7 |
| | PROPORTION OF RESIN PARTICLES PASSING THROUGH 200-MESH SIEVE | [ % ] | 0 | 0.6 | 2.2 | 0 | 4 |
| NUMBER OF FISH EYES | | [UNITS] | 8 | 2 | 1 | 96 | 66 |
| DRYING LOSS | | [ % ] | 0.7 | 0.3 | 0.8 | 1.7 | 1.5 |
| ADHESION STATE OF SCALE | | [ - ] | A | A | B | C | C |

[Table 8]

| | | | EXAMPLE 4 | EXAMPLE 5 | EXAMPLE 6 | COMPARATIVE EXAMPLE 3 | COMPARATIVE EXAMPLE 4 |
|---|---|---|---|---|---|---|---|
| APPARENT DENSITY OF RESIN PARTICLES | | [ g/ml ] | 0.578 | 0.543 | 0.508 | 0.582 | 0.480 |
| PARTICLE SIZE DISTRI-BUTION | PROPORTION OF RESIN PARTICLES PASSING THROUGH 60-MESH SIEVE | [ % ] | 100 | 100 | 100 | 92.9 | 100 |
| | PROPORTION OF RESIN PARTICLES PASSING THROUGH 100-MESH SIEVE | [ % ] | 26.7 | 48.3 | 67.0 | 13.0 | 80.3 |
| | PROPORTION OF RESIN PARTICLES PASSING THROUGH 200-MESH SIEVE | [ % ] | 0 | 0.4 | 2.6 | 0 | 4.7 |
| NUMBER OF FISH EYES | | [UNITS] | 7 | 1 | 2 | 89 | 75 |
| DRYING LOSS | | [ % ] | 0.6 | 0.2 | 0.6 | 1.4 | 1.3 |
| ADHESION STATE OF SCALE | | [ - ] | A | A | B | C | C |

[Table 9]

| | | | EXAMPLE 7 | EXAMPLE 8 | EXAMPLE 9 | COMPARATIVE EXAMPLE 5 | COMPARATIVE EXAMPLE 6 |
|---|---|---|---|---|---|---|---|
| APPARENT DENSITY OF RESIN PARTICLES | | [ g/ml ] | 0.582 | 0.544 | 0.509 | 0.577 | 0.483 |
| PARTICLE SIZE DISTRI-BUTION | PROPORTION OF RESIN PARTICLES PASSING THROUGH 60-MESH SIEVE | [ % ] | 100 | 100 | 100 | 85.3 | 100 |
| | PROPORTION OF RESIN PARTICLES PASSING THROUGH 100-MESH SIEVE | [ % ] | 29.8 | 41.3 | 71.0 | 12.5 | 83.4 |
| | PROPORTION OF RESIN PARTICLES PASSING THROUGH 200-MESH SIEVE | [ % ] | 0 | 0 | 2.7 | 0 | 4.8 |
| NUMBER OF FISH EYES | | [UNITS] | 7 | 1 | 1 | 91 | 88 |
| DRYING LOSS | | [ % ] | 0.6 | 0.4 | 0.7 | 1.6 | 1.8 |
| ADHESION STATE OF SCALE | | [ - ] | A | A | B | C | C |

In Tables 7 to 9, "A" in the adhesion state of scale indicates that the scale could be hardly confirmed visually. "B " indicates that a small amount of scale (is a larger amount of scale than in the case of "A") was confirmed visually. "C" indicates that a large amount of scale was confirmed visually.

In the examples 1 to 9, the above-described proportion CZ falls within the numerical range represented by Expression A1, and in the comparative examples 1 to 6, the above-described proportion CZ falls outside the numerical range represented by Expression A1. As shown in Tables 7 to 9, in the examples 1 to 9, resin particles having a narrower particle size distribution and fewer fish eyes were produced as compared to the comparative examples 1 to 6. It is found that, in the examples 1 to 9, the drying loss of resin particles is smaller and the mixing of the material solution is smaller as compared to the comparative examples 1 to 6. In particular, in the examples 1 to 9, resin particles having drying loss of 1% or less were obtained. In the examples 1 to 9, scale adhesion was suppressed as compared to the comparative examples 1 to 6.

In the examples 1 and 2, the above-described proportion CZ falls within the numerical range represented by Expression B1, and in the example 3, the above-described proportion CZ falls outside the numerical range represented by Expression B1. As shown in Table 7, in the examples 1 and 2, scale adhesion was significantly suppressed. In the examples 1 and 2, scale adhesion was suppressed as compared to the example 3. Similarly, as shown in Table 8, scale adhesion was suppressed in the examples 4 and 5 as compared to the example 6. In addition, as shown in Table 9, scale adhesion was suppressed in the examples 7 and 8 as compared to the example 9.

In the examples 2 and 3, the above-described proportion CZ falls within the numerical range represented by Expression C1, and in the example 1, the above-described proportion CZ falls outside the numerical range represented by Expression C1. As shown in Table 7, in the examples 2 and 3, resin particles having very few fish eyes were produced. In the examples 2 and 3, resin particles having fewer fish eyes were produced as compared to the example 1. Similarly, as shown in Table 8, in the examples 5 and 6, resin particles having fewer fish eyes were produced as compared to the example 4. As shown in Table 9, in the examples 8 and 9, resin particles having fewer fish eyes were produced as compared to the example 7.

In the example 2, the above-described proportion CZ falls within the numerical range represented by Expression D1, and in the examples 1 and 3, the above-described proportion CZ falls outside the numerical range represented by Expression D1. As shown in Table 7, in the example 2, resin particles having very few fish eyes were produced, and scale adhesion was significantly suppressed. Similarly, as shown in Table 8, in the example 5, resin particles having very few fish eyes were produced, and scale adhesion was significantly suppressed. As shown in Table 9, in the example 8, resin particles having very few fish eyes were produced, and scale adhesion was significantly suppressed.

While the present invention has been described above by using the embodiments, the technical scope of the present invention is not limited to the scope of the above-described embodiments. It is apparent to persons skilled in the art that various alterations or improvements can be made to the above-described embodiments. It is also apparent from the described scope of the claims that the embodiments added with such alterations or improvements can be included the technical scope of the present invention.

It should be noted that the operations, procedures, steps, stages or the like of each process performed by an apparatus, system, program, and method shown in the scope of the claims, embodiments, or diagrams can be performed in any order as long as the order is not indicated by "prior to," "before," or the like and as long as the output from a previous process is not used in a later process. Even if the process flow is described by using phrases such as "first", "then" or the like in the scope of the claims, embodiments, or diagrams, it does not necessarily mean that the process must be performed in this order.

EXPLANATION OF REFERENCES

100: polymerization apparatus, 110: reaction vessel, 120: agitator, 122: agitation shaft, 124: agitating blade, 126: power mechanism, 130: baffle, 132: body, 134: support, 140: serpentine cooling pipe, 150: serpentine cooling pipe, 170: jacket, 172: flow channel, 180: reflux condenser, 182: flow channel, 232: baffle, 234: baffle, 236: baffle, 238: baffle, 242: serpentine cooling pipe, 244: serpentine cooling pipe, 246: serpentine cooling pipe, 248: serpentine cooling pipe, 252: serpentine cooling pipe, 254: serpentine cooling pipe, 256: serpentine cooling pipe, 258: serpentine cooling pipe, 312: straight body, 314: first panel, 316: second panel, 318: pedestal, 332: coolant supplying pipe, 334: coolant returning pipe, 342: coupling portion, 344: coupling portion, 346: coupling portion, 510: inner pipe, 512: inlet, 520: outer pipe, 522: outlet, 532: pipe, 534: pipe, 542: volumetric flow rate regulation valve, 544: volumetric flow rate regulation valve, 552: pipe, 554: volumetric flow rate regulation valve, 556: pipe, 558: volumetric flow rate regulation valve, 610: serpentine portion, 612: extending portion, 614: bending portion, 702: supply pipe, 704: outlet pipe, 710: serpentine portion, 712: extending portion, 714: bending portion, 810: serpentine portion, 812: serpentine portion, 814: serpentine portion, 816: serpentine portion, 822: coupling portion, 824: coupling portion, 900: polymerization apparatus, 1000: polymerization apparatus, 1100: polymerization apparatus, 1160: serpentine cooling pipe, 1200: polymerization apparatus, 1252: serpentine cooling pipe, 1300: polymerization apparatus, 1331: baffle, 1332: baffle, 1333: baffle, 1334: baffle, 1335: baffle, 1336: baffle, 1351: serpentine cooling pipe, 1352: serpentine cooling pipe, 1353: serpentine cooling pipe, 1354: serpentine cooling pipe, 1355: serpentine cooling pipe, 1356: serpentine cooling pipe, 1400: polymerization apparatus, 1403: virtual circle, 1404: virtual circle, 1405: virtual circle, 1500: polymerization apparatus, 1600: polymerization apparatus, 1700: polymerization system, 1702: agitation system, 1710: controller, 1722: agitating blade, 1724: agitating blade, 1726: agitating blade, 1820: alternate long and short dash line, 1822: alternate long and short dash line, 1824: alternate long and short dash line, 1826: alternate long and short dash line, 1832: upper end, 1834: lower end, 1842: position, 1844: position, 1852: first position, 1854: second position, 1900: polymerization system, 1910: controller, 1912: agitating control unit, 1914: input control unit, 1922: monomer tank, 1924: aqueous media tank, 1926: dispersing aid tank, 1928: polymerization initiator tank, 1932: pump, 1934: pump, 1936: pump, 1938: pump, 1942: flowmeter, 1944: flowmeter, 1946:

flowmeter, 1948: flowmeter.

**Claims**

1. A reactor apparatus of batch type used for producing a polymer by suspension polymerization using a dispersing aid, the reactor apparatus comprising:

   a reactor having a straight body having a tubular shape;
   a plurality of first cooling pipes arranged inside the reactor, for circulating a coolant; and
   an agitation shaft which is arranged inside the reactor, is attached with an agitating blade, and is configured to be rotatable, wherein
   a representative point of each of the plurality of first cooling pipes in a plane substantially perpendicular to an extending direction of the straight body is located substantially on a circumference of any of a plurality of virtual circles arranged substantially concentrically in the substantially perpendicular plane, and
   when a number $N_c$ [units] of the plurality of virtual circles is 1, 2, or 3, the number $N_c$ [units] of the plurality of virtual circles and a proportion $CZ$ [mg-dispersing aid/kg-monomer] of a mass of the dispersing aid to a mass of one or more types of monomers to be materials of the polymer satisfy a relationship represented by following Expression A1

   (Expression A1)

   $$15\, N_c + 300 < CZ < 175\, N_c + 2000.$$

2. The reactor apparatus according to claim 1, wherein
   when the number $N_c$ of the plurality of virtual circles is 4 or more, the proportion $CZ$ [mg-dispersing aid/kg-monomer] satisfies a relationship represented by following Expression A2

   (Expression A2)

   $$15 \times 3 + 300 < CZ < 175 \times 3 + 2000.$$

3. The reactor apparatus according to claim 1, wherein

   when the number $N_c$ [units] of the plurality of virtual circles is 1, 2, or 3,
   the number $N_c$ [units] and the proportion $CZ$ [mg-dispersing aid/kg-monomer] satisfy a relationship represented by following Expression B1

   (Expression B1)

   $$15\, N_c + 310 < CZ < 175\, N_c + 1550.$$

4. The reactor apparatus according to claim 1, wherein

   when the number $N_c$ [units] of the plurality of virtual circles is 1, 2, or 3,
   the number $N_c$ [units] and the proportion $CZ$ [mg-dispersing aid/kg-monomer] satisfy a relationship represented by following Expression C1

   (Expression C1)

   $$15\, N_c + 400 < CZ < 175\, N_c + 1850.$$

5. The reactor apparatus according to claim 1, wherein

when the number Nc [units] of the plurality of virtual circles is 1, 2, or 3,
the number Nc [units] and the proportion CZ [mg-dispersing aid/kg-monomer] satisfy a relationship represented by following Expression D1

(Expression D1)

$$15\ Nc + 400 < CZ < 175\ Nc + 1550.$$

6.  The reactor apparatus according to claim 1, further comprising

a dispersing aid input unit which inputs the dispersing aid into the reactor, wherein
when the number Nc [units] of the plurality of virtual circles is 1, 2, or 3, the dispersing aid input unit inputs the dispersing aid so that the number Nc [units] and the proportion CZ [mg-dispersing aid/kg-monomer] satisfy the relationship represented by the above-described Expression A1.

7.  A reactor apparatus of batch type used for producing a polymer by suspension polymerization using a dispersing aid, the reactor apparatus comprising:

a reactor having a straight body having a tubular shape;
a plurality of first cooling pipes arranged inside the reactor, for circulating a coolant;
an agitation shaft which is arranged inside the reactor, is attached with one or more agitating blades, and is configured to be rotatable; and
a dispersing aid input unit which inputs the dispersing aid into the reactor, wherein
a representative point of each of the plurality of first cooling pipes in a plane substantially perpendicular to an extending direction of the straight body is located substantially on a circumference of any of a plurality of virtual circles arranged substantially concentrically in the substantially perpendicular plane, and
the dispersing aid input unit inputs the dispersing aid such that when a number Nc [units] of the plurality of virtual circles is 1, 2, or 3, the number Nc [units] of the plurality of virtual circles and a proportion CZ [mg-dispersing aid/kg-monomer] of a mass of the dispersing aid to a mass of one or more types of monomers to be materials of the polymer satisfy a relationship represented by following Expression A1

(Expression A1)

$$15\ Nc + 300 < CZ < 175\ Nc + 2000.$$

8.  The reactor apparatus according to claim 1 or 7, wherein

the agitation shaft is configured such that a plurality of agitating blades including the agitating blade are able to be attached to different positions in an extending direction of the agitation shaft, and
dimensions of the straight body, dimensions of at least one of the plurality of agitating blades, and a set value of a number of rotations of the agitation shaft satisfy a relationship represented by following Expression 1

(Expression 1)

$$N(b/d)(L/D)/n \leq 6.0$$

(in Expression 1,

N represents a number of the plurality of agitating blades,
b represents a maximum value [m] of blade widths of the plurality of agitating blades,
d represents a maximum value [m] of blade diameters of the plurality of agitating blades,
L represents a length [m] of the straight body in an extending direction,
when the straight body is cut along a plurality of planes substantially perpendicular to the extending direction of the straight body and passing through respective attachment positions of the plurality of agitating blades,
D represents a maximum value [m] of diameters of a plurality of inscribed circles substantially inscribed in the straight body in respective cross sections taken along the plurality of planes, and
n represents the set value of the number of rotations [rps] of the agitation shaft.).

9. The reactor apparatus according to claim 1 or 7, wherein

each of the plurality of first cooling pipes has a serpentine portion that extends while repeatedly bending, and the serpentine portion includes
a plurality of extending portions that extend linearly or extend while curving, and
a plurality of bending portions which couple ends of two adjacent extending portions, among the plurality of extending portions.

10. The reactor apparatus according to claim 1 or 7, wherein

each of the plurality of first cooling pipes includes
a plurality of ring portions having a ring shape, and
one or more coupling portions which couple the plurality of ring portions.

11. The reactor apparatus according to claim 1 or 7, further comprising:

a plurality of baffles which extend substantially parallel to the extending direction of the straight body; and
a second cooling pipe which is arranged inside at least one of the plurality of baffles, for circulating a coolant.

12. A vinyl-based polymer manufacturing method comprising
polymerizing a vinyl-based monomer by using the reactor apparatus according to claim 1 or 7, to produce a vinyl-based polymer.

13. A method for producing a vinyl-based polymer by a suspension polymerization method by using a reactor apparatus of batch type, wherein

the reactor apparatus includes
a reactor having a straight body having a tubular shape,
a plurality of first cooling pipes arranged inside the reactor, for circulating a coolant, and
an agitation shaft which is arranged inside the reactor, is attached with an agitating blade, and is configured to be rotatable, wherein
a representative point of each of the plurality of first cooling pipes in a plane substantially perpendicular to an extending direction of the straight body is located substantially on a circumference of any of a plurality of virtual circles arranged substantially concentrically in the substantially perpendicular plane, and
the method comprising:

inputting a material by inputting a vinyl-based monomer, an aqueous media, and a dispersing aid into the reactor; and
polymerizing the vinyl-based monomer to produce a vinyl-based polymer, wherein
the inputting the material includes
inputting the dispersing aid such that when a number Nc [units] of the plurality of virtual circles is 1, 2, or 3, the number Nc [units] of the plurality of virtual circles and a proportion CZ [mg-dispersing aid/kg-monomer] of a mass of the dispersing aid to a mass of the vinyl-based monomer satisfy a relationship represented by following Expression A1

(Expression A1)

$$15 \, Nc + 300 < CZ < 175 \, Nc + 2000.$$

FIG.1

FIG.2

*FIG.3*

*FIG.4*

FIG.5

FIG.6

**252**

EXTENDING DIRECTION OF
SERPENTINE PORTION 710

710

712

712

714

z

x

702

704

*FIG.7*

FIG.8

FIG.9

<u>1000</u>

*FIG.10*

1100

FIG.11

1200

FIG.12

FIG.13

1400

FIG.14

FIG.15

FIG.16

*FIG.17*

*FIG.18*

*FIG.19*

## INTERNATIONAL SEARCH REPORT

| International application No. |
| --- |
| **PCT/JP2022/024034** |

**A.    CLASSIFICATION OF SUBJECT MATTER**

*B01J 14/00*(2006.01)i; *C08F 14/06*(2006.01)i; *C08F 2/01*(2006.01)i; *C08F 2/20*(2006.01)i; *B01J 19/18*(2006.01)i; *B01F 27/112*(2022.01)i; *B01F 27/90*(2022.01)i; *B01F 35/93*(2022.01)i

FI:   B01J19/18; C08F2/01; C08F2/20; B01J14/00 D; C08F14/06; B01F35/93; B01F27/90; B01F27/112

According to International Patent Classification (IPC) or to both national classification and IPC

**B.    FIELDS SEARCHED**

Minimum documentation searched (classification system followed by classification symbols)

C08F2/00-2/60; C08F14/00-14/28; B01J14/00; B01J19/18; B01F35/90; B01F35/93; B01F27/80-27/96

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 7-233202 A (SHIN ETSU CHEM. CO., LTD.) 05 September 1995 (1995-09-05) paragraphs [0013]-[0023], [0025], [0027]-[0035], fig. 1-5 | 1-13 |
| X | JP 7-233206 A (SHIN ETSU CHEM. CO., LTD.) 05 September 1995 (1995-09-05) paragraphs [0013]-[0024], [0026], [0028]-[0030], fig. 1-3 | 1-8, 10-13 |
| A | JP 2005-002194 A (CHISSO CORP.) 06 January 2005 (2005-01-06) paragraphs [0042]-[0081], fig. 1-3 | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 August 2022** | **16 August 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| | International application No. |
|---|---|
| | **PCT/JP2022/024034** |

| Patent document cited in search report | | | Publication date (day/month/year) | Patent family member(s) | Publication date (day/month/year) |
|---|---|---|---|---|---|
| JP | 7-233202 | A | 05 September 1995 | US 5612437 A fig. 1-5, column 3, line 24 to column 7, line 3, column 7, lines 37-47, example 1 US 5750079 A EP 664156 A1 | |
| JP | 7-233206 | A | 05 September 1995 | US 5610245 A column 3, line 29 to column 6, line 30, column 6, line 63 to column 7, line 6, example 1 EP 659476 A1 | |
| JP | 2005-002194 | A | 06 January 2005 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7233202 B
- JP H7233206 B

- JP 2013151621 A